(19) **Europäisches Patentamt**

**European Patent Office**

**Office européen des brevets**

(11) **EP 1 662 469 A1**

(12) **EUROPEAN PATENT APPLICATION**
published in accordance with Art. 158(3) EPC

(43) Date of publication:
**31.05.2006 Bulletin 2006/22**

(51) Int Cl.:
**G09G 3/36** (1980.01)    **G09G 3/20** (1980.01)
**G02F 1/133** (1980.01)

(21) Application number: **03818571.6**

(22) Date of filing: **04.09.2003**

(86) International application number:
**PCT/JP2003/011314**

(87) International publication number:
**WO 2005/024774 (17.03.2005 Gazette 2005/11)**

(84) Designated Contracting States:
**DE FR GB**

(71) Applicant: **FUJITSU LIMITED**
**Kawasaki-shi,**
**Kanagawa 211-8588 (JP)**

(72) Inventors:
• **SHINGAI, Tomohisa,**
**FUJITSU LIMITED**
**Kawasaki-shi,**
**Kanagawa 211-8588 (JP)**
• **TOMITA, Junji,**
**FUJITSU LIMITED**
**Kawasaki-shi,**
**Kanagawa 211-8588 (JP)**

• **NOSE, Masaki,**
**FUJITSU LIMITED**
**Kawasaki-shi,**
**Kanagawa 211-8588 (JP)**
• **YAMAGISHI, Fumio,**
**FUJITSU LIMITED**
**Kawasaki-shi,**
**Kanagawa 211-8588 (JP)**

(74) Representative: **Fenlon, Christine Lesley**
**Haseltine Lake & Co.,**
**Imperial House,**
**15-19 Kingsway**
**London WC2B 6UD (GB)**

(54) **INFORMATION DISPLAY SYSTEM, DISPLAY ELEMENT, DISPLAY ELEMENT DRIVE METHOD, AND DISPLAY DEVICE**

(57)    A display apparatus 1 comprises a display unit 3 capable of continuing a display even after the power is shut off, a short range communication unit 4 for receiving display data provided externally and a display control unit 5 for the received data, while an information display apparatus 2 comprises a storage unit 6 for storing display data and a communication unit 7 for transmitting the display data over to the display apparatus 1, and further the information display apparatus 2 comprises a mechanical quick release mechanism for mounting the display apparatus 1 onto the own apparatus for example, in order to configure a system, which is capable of detachable attachment, between the display apparatus 1 having no power supply and the information display apparatus 2, such as a wireless terminal, which sends display data and power to the display apparatus 1.

FIG. 5

## Description

## Technical Field

The present invention relates to an information display system comprising mobile equipment for example and an apparatus for displaying discretionary data provided by such equipment, a display device, display device drive method and display apparatus used for such an information apparatus, and specifically to a system comprising a wireless terminal for example and a noncontact IC card, a display device and its drive method using a cholesteric liquid crystal, et cetera, capable of retaining a display even if electric power (NB simply "power" hereinafter unless otherwise noted) is cut off, and a display apparatus using electronic paper with such a memory property for example.

## Background Art

There is a requirement of enlarged display for display information on a mobile phone, PDA, digital camera, et cetera. One method to address this has been to enlarge a part of the display of such a terminal. This method naturally precludes a single view of the whole image at once, requiring operations such as cumbersome scrolling. Another method is to send image information wirelessly to equipment such as a personal computer (PC), TV, et cetera, equipped with a large screen display and thereby display the image by furnishing a mobile terminal with a short range wireless communication means such as Bluetooth, infrared or a wireless LAN. Or a method for displaying by a large screen display by transmitting the image by using a wired interface connection function such as USB, IEEE1394, et cetera, in place of wireless transmission. Such enlarged display methods are not suitable for mobile equipment in mobile environments such as away from the office or home, since they require either an AC power supply or some kind of battery, and such apparatuses per se are heavy.

There is a concept of connecting a light weight, low power consumption enlarged display to a mobile terminal as a display method in a mobile environment while avoiding the above described inconveniences. Such attempts have been made by using lightweight lowpower electronic paper. Such a method, however, is disadvantageous since it is an electrical contact connection. In summary: 1) a continuous connection makes the actual size of a mobile terminal large; 2) use of a connection brings about degradation due to a fatigue of the electric contact; or 3) display loss after disconnection, or possibly equipping a battery for preventing a display loss. Equipping the display unit with a battery not only causes the inconvenience of changing the battery for the display unit or charging the battery, but also an increase in the thickness and/or weight of the display. Accordingly a mobile display system whose terminal itself is substantially small, which has an enlarged screen display, and which allows hands free operation, while solving the problems as described above is required.

In the meantime, there is a requirement for printing out discretionary display information carried by a mobile phone, PDA, digital camera, et cetera, away from home, the office, or in a the location of a visit. Battery operation mobile printer apparatuses are commercially available for meeting such a requirement, which are faced with problems such as the weight and size of such equipment as well as supply of paper or batteries, however. The expectation is to have a display a la paper print without using a printer in a state of detachment from a mobile terminal.

There are conventional techniques using a contact type IC card or an RF (radio frequency) tag, and reference documents concerned with a noncontact IC card, which utilizes short-range wireless communication as follows. A patent document 1 has disclosed an IC card capable of rewriting the display content of a display.

Each of the patent documents 2, 3 and 4 has disclosed an IC card having an electric power supply for display, with a solar battery in the patent document 2, a lithium battery in the patent document 3 and an auxiliary power supply such as solar battery in the patent document 4.

The patent documents 5 and 6 deals with a memory capable display device which retains a displaying content even after the power is cut off, hence there is no need of an auxiliary power supply such as a solar battery. The patent document 5 deals with a ferroelectric liquid crystal display ("LCD" hereinafter) device and electro-chromic display device for example, while the patent document 6 proposes a use of a cholesteric -nematic phase transition type liquid crystal ("LC" hereinafter).

[Patent document 1] Japanese utility model publication H07-30384: "IC card"
[Patent document 2] Japanese laid-open patent application publication No. S62-242592: "IC card"
[Patent document 3] Japanese laid-open patent application publication No. S63-3393: "Card processing system with display function"
[Patent document 4] Japanese laid-open patent application publication No. 2003-6590: "Information storage medium with auxiliary power supply"
[Patent document 5] Japanese laid-open patent application publication No. H10-93484: "Data carrier"
[Patent document 6] Japanese laid-open patent application publication No. 2000-113137: "Noncontact information storage display method and noncontact information storage display medium"

These kinds of short range wireless generally exchange information wirelessly with a non-powered IC card by way of an IC card reader/writer equipped with a stationary terminal. It is fundamentally possible to record or display by providing a displaying/recording unit power and display information if a card and a writer are mutually in proximity. However, there has conventionally been no well designed convenient display system linking to a mobile terminal by using a noncontact wireless technique which has actually been retarded for technical reasons, e.g., shortage of power required for recording voltage, memory retention capability and recording speed for example, hence failing to accomplish a display on a noncontact mobile terminal to date. Accordingly, what have been desired are a convenient display system and an electronic paper which are suitable for mobile usage as an enlarged display by transmitting discretionary display information from a mobile terminal by utilization of a noncontact wireless technique.

Electrophoresis, while being seen as a powerful memory capable medium, its memory holding capability fundamentally contradicts high-speed drivability and low voltage drivability because the technique consists of attracting white or black electro-statically charged particulates from among those suspended in a white liquid contained by a capsule. Therefore, it is very difficult to use the technique for non-powered recording. Electrochromic memory is a memory storage method utilizing a chemical reaction and requiring a large amount of power for recording, and hence is difficult to use in wireless recording. Meanwhile, with regards to a memory capable LC, a ferroelectric memory liquid crystal medium, while rendering high-speed recording, is faced with the problems of inadequate brightness in a reflective white display due to the use of polarization film and loss of display due to physical shock.

As a memory capable LC, there is a cholesteric-nematic phase transition type LC device which has been proposed by the above noted patent document 6. This material, utilizing light scattering, has been faced with the problems of being limited to low contrast and requiring a bias voltage for holding a display stable.

In comparison to the above, a cholesteric LC (including a chiral-nematic LC), having a selective reflectivity, i.e., reflecting light of a certain wavelength selectively, reflects an optical wavelength according to the layer pitch of a liquid crystal, thereby indicating a monochromatic color. Accordingly, a layered structure has been proposed, as with a below noted patent document 7, to make it polychromatic.

[Patent document 7] Japanese laid-open patent application publication No. H09-160066: "Reflective liquid crystal display device"

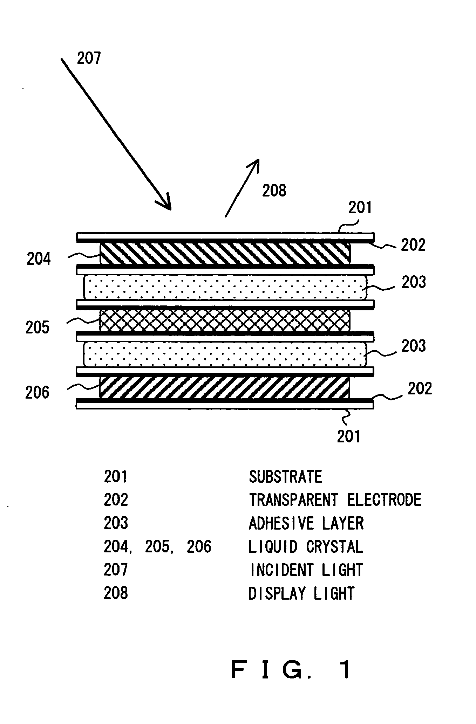

Fig. 1 exemplifies a conventional configuration of a layered LC device using a cholesteric LC. In Fig. 1, upper and lower substrates 201 sandwich three layers of LC 204, 205 and 206 each being adhered by way of a transparent electrode 202, thereby structuring an LC device. This structure, however, having many interfaces producing a lot of optical noise, suffers a reduced display contrast. There is also the problem of having many components, resulting in a high cost apparatus.

In other words, the cholesteric LC indicates a certain monochromatic color and, if two LCs are combined, the desired color cannot be reflected because the colors are mixed easily. A mixture of two or more LCs makes an intermediary color or a state of no reflectance. There is a capsule structure for sealing an LC within a capsule as a method for separating LCs, which has been faced with the problems of reduced contrast due to optical noise and an increased drive voltage, both influenced by the interface and thickness of the capsule, hence its use is disadvantageous in a display apparatus, and the difficulty in laying desired capsules for desired pixels.

Let us then describe problems associated with the power supply circuit, et cetera, in the case of using such a cholesteric LC for a non-powered display apparatus such as a noncontact type IC card and electronic paper. In a common non-powered noncontact IC card, et cetera, a method used is to display by receiving power therefor along with data from a mobile terminal, IC card reader/writer, et cetera for example, by way of short range wireless, and therefore the power value usable for a power supply is small, hence requiring current regulation, et cetera, for the power supply circuit.

In particular, the cholesteric LC requires two types of drive wave forms with different peak values for driving two stable states respectively, i.e., the planar state and the focal conic state, as described later. Moreover, a drive voltage of approximately 40 volts is required to for the planar state, which is substantially higher than other display devices. Consequently high cost of the power supply circuit has been an issue. Furthermore, the use of a common DC-DC converter requires a large capacitance capacitor (in the order of micro Farads), resulting in bringing forth a problem of extreme difficulty in designing the power supply circuit within a thickness of one millimeter.

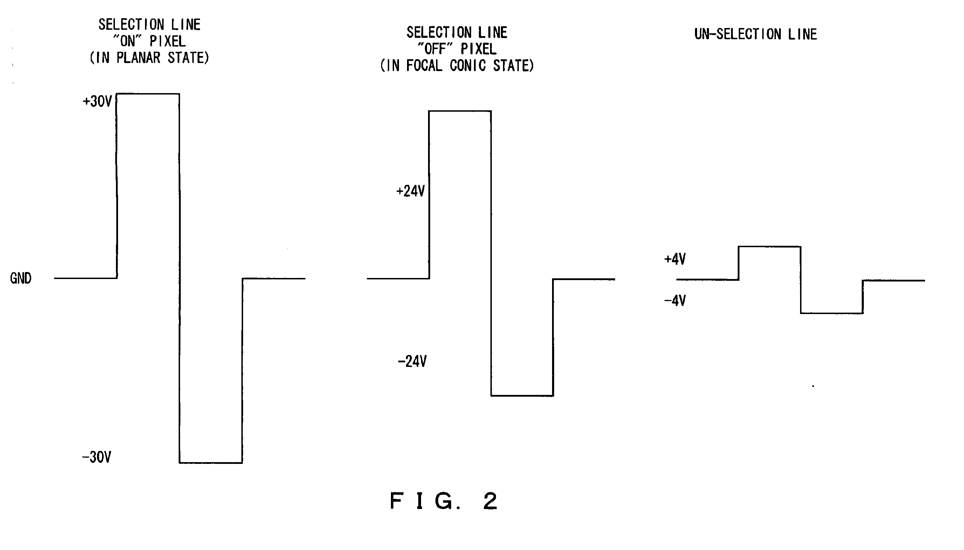

Fig. 2 exemplifies a conventional configuration of a drive waveform for a passive matrix type device. As shown by Fig. 2, a pixel located on a selection level line must have drive voltages applied for the planar and focal conic states, respectively, at the signal lines in response to the on and off signals, while a pixel located on a non-selection level line must have a voltage applied so as not to change a written state at selection. For a commercially available STN LCD driver LSI, the requirement is five different voltages for example, bringing forth the problem of a high cost power supply circuit.

Next, electric power supplied when driving a noncontact IC card for example only by the power supplied from an IC card reader/writer varies a great deal with the distance between the reader/writer and IC card. This has brought forth a problem of shortening the communicable distance as compared to common noncontact IC cards without a display unit or temporary shortage of power required for the noncontact IC card chip during communication if the display unit is continuously operated, resulting in unstable operation. A display control in accordance with power supply is required for concerned with such a problem.

Meanwhile, the required power for driving a passive matrix type cholesteric LC is relatively small except for when starting up, making it possible to drive it adequately by the power supplied from a noncontact IC card reader/writer, with a low power output, equipped with a PDA, et cetera. However, an existing driver LSI designed for a display of moving pictures has a low impedance transistor on the last stage and therefore a start-up transition state will see an extremely large in-rush current (e.g., five to ten times the steady state). This has lead to the problem of existing drivers being unable to start up even with a supply of power several times that of the steady state.

Preparing a large capacity power supply just for startup is exceptionally disadvantageous in terms of cost, and besides it is truly impossible to supply power five to ten times the steady state by using a reader/writer with a low power output, equipped with a PDA, et cetera. This makes development of a control method for starting an existing driver LSI stably with a supply power close to the power consumption at the steady state vital.

Furthermore, the cholesteric LC requires two kinds of drive waveforms with different peak values corresponding to the planar drive and focal conic drive, respectively, as described above, additionally the peak values are required to be changed with temperature. This has then created the problem of a peak value for the planar drive at high temperatures and that for the focal conic drive at low temperatures becoming too close to secure a margin for the peak value when a larger temperature range of operation is tried. A method for securing a margin for the peak value over a wide operating temperature range is desired in order to widen the usable range of the cholesteric LC.

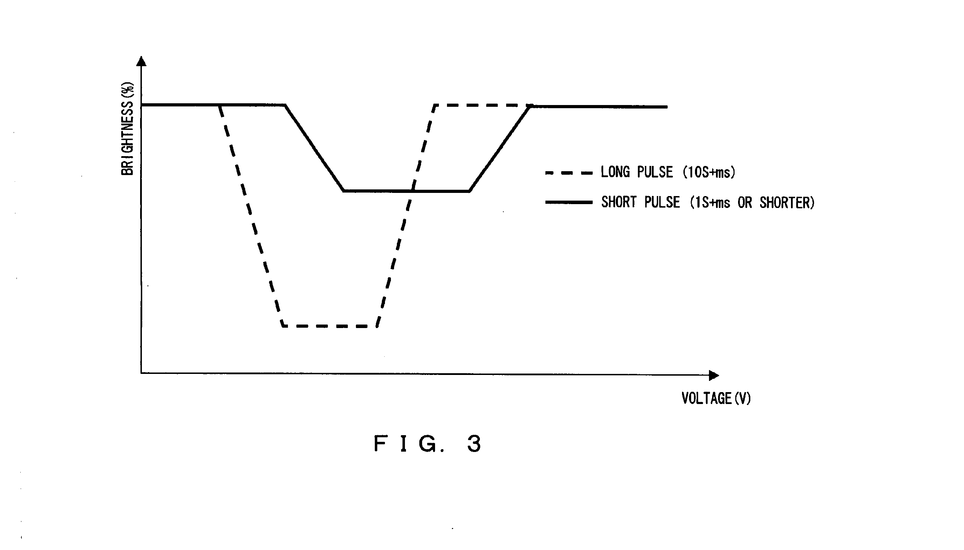

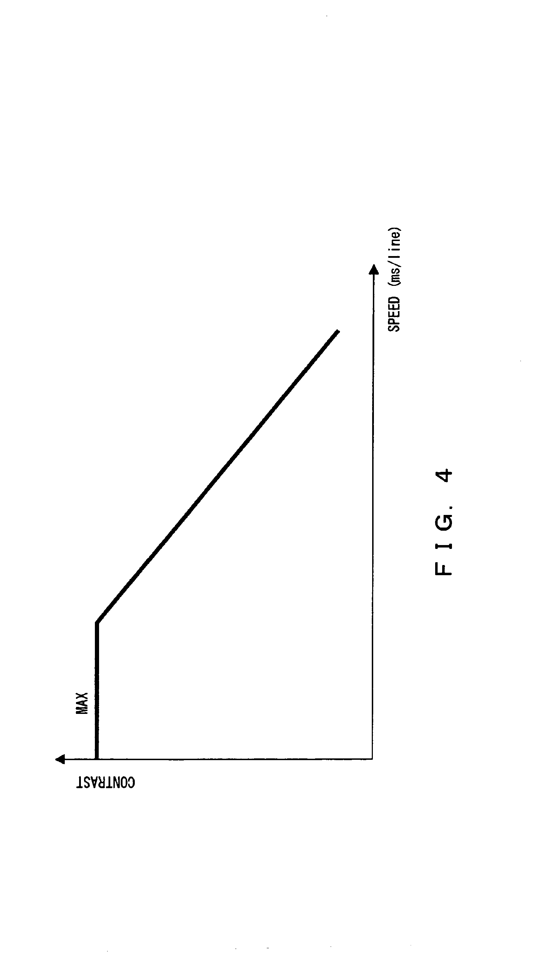

The next description is of problems of the cholesteric LC associated with a high-speed drive. As described above, there are two ways of driving the cholesteric LC, that is, planar drive and focal conic drive, using an AC pulse voltage in general, in which writing at higher speed than about a cycle of 20 ms, that is, 20 ms/line, causes an inadequate transition to the focal conic state as shown by Fig. 3, depending on the material of the LC, leading to the problem of a large drop in contrast as shown by Fig. 4. While writing at a lower speed than the above described will gain an adequate contrast, the time to complete writing a QVGA size (i.e., 320 by 240 dots) display becomes about 5 seconds for example, thus causing a problem of making the wait time for completion of display too long.

Drive methods have been developed as described below for a high speed drive method attempting to solve the above described problems, such methods, however, have been faced with various problems in application to a wireless drive using a low power electromagnetic wave, such as a noncontact IC card, which the present invention aims at. The following lists representative high speed drive methods and the related problems assuming the use of a cholesteric LC:

- The patent document 8 listedbelow has disclosed a writing method called the FCR (focal conic reset) method which first applies a reset voltage to all scanning electrodes for a transition to the focal conic state, followed by applying a selection voltage sequentially by one scanning electrode at a time. A bulk reset by selecting all the scanning electrodes, however, requires very large power consumption due to selecting all the scanning electrodes, and hence is not suitable to a wireless drive. The power consumption is particularly large for transition to the focal conic state.

- The patent document 9 also uses a method of full-line homeotropic reset, requiring very large power consumption as with the above and precluding use for a wireless drive.

- A DDS (dynamic drive scheme) method disclosed by the patent document 10, et cetera, while giving a high speed scan, describes a complex drive wave form which complicates its drive circuit and hence increases cost. Furthermore, a long elapsed time before the display state of pixels settles itself (i.e., reset period to holding period) is so long as to increase the power consumption, also precluding use for a wireless drive.

- Meanwhile, anMLA (multi-line access) methodwidely known in association with a STN drive also drives many lines in bulk, requiring large power consumption and hence is unsuitable to use for wireless drive. Furthermore a complicated drive circuit makes cost high.

- An image with high spatial frequency such as a checkered patternmakes the power consumption remarkably large, hence drive methods as described above are all the more unsuitable to a wireless drive.

- A planar reset leaves a residual image.

- The patent document 11 has disclosed a method for detecting a plurality of lines including the data the same as writing line data, for example, and writing the plurality of lines simultaneously, but a method for determining the maximum number of lines to be written simultaneously is unknown.


[Patent document 8] Japanese laid-open patent application publication No.H11-326871; "Drive method for liquid crystal display device

[Patent document 9] Japanese laid-open patent applicationpublicationNo. 2002-6287; "Drive method for memory capable cholesteric liquid crystal display apparatus and its drive apparatus"

[Patent document 10] Japanese laid-open patent application publication No. 2002-55327; "Liquid crystal display apparatus and drive method for liquid crystal display device"

[Patent document 11] Japanese laid-open patent application publication No. H10-20809; "Image display method and apparatus"

When concerned with a drive associated with a noncontact IC card for example as with the present invention it does not particularly require a high speed drive of the order of microseconds, but rather requires a unique method with a high speed drive of high quality corresponding to the low power of wireless.

Last but not least in this section, let us describe a problem about a display apparatus using an electronic paper which utilizes the above described cholesteric LC, et cetera. That is, while a display apparatus using an electronic paper with a characteristic of two kinds of properties, i.e., a display will not disappear soon after cutting off the power and the display content is discretionarily rewritable, which are well integrated, has been in development, there has been the problem of such conventional apparatus not comprising the function of automatic display, however.

In other words, such display apparatus lacks the characteristic of automatic display apparatus as a result of not possessing information about when, where or how data to be displayed shall be acquired and/or information about a displaying form for the acquired display data, and therefore, an automatic display apparatus, which would acquire display data automatically based on the information about the acquisition method, or carry out a display automatically based on information about the displaying form followed by transitioning itself to a ready state automatically, has not been provided. Such has been another problem.

**Disclosure of the Invention**

A first purpose of the present invention is to provide an information display system as a whole by enabling mechanical detachment between an information display apparatus without a power supply for example and a wireless terminal, which sends discretionary display data and power thereto.

The second purpose is to provide a display device capable of accomplishing a high contrast with a low cost by using a cholesteric liquid crystal in a plurality of colors and a display apparatus using such a display device.

The third purpose is to provide a power supply circuit capable of operating an IC card stably by using various control methods, even if the electric power supplied for a noncontact IC card for example is small.

The fourth purpose is to provide a device drive method, and an image display method, with the smallest possible power consumption in a display apparatus using a cholesteric liquid crystal for example.

The fifth purpose is to provide an automatic display apparatus capable of storing information relating to an acquisition method for data to be displayed and information relating to a displaying form for the display data, acquiring external data automatically, both displaying the data, and subsequently returning to a ready state automatically, and suitable to a wide range of applications.

An information display system according to the present invention comprises a display apparatus and display data retention apparatus. The display apparatus comprises a display unit capable of continuing data display even if the power is cut off, a short range communication unit for carrying out a short range communication in order to receive discretionary external data to be displayed, and a display control unit for controlling display performed by the display unit in response to received data by the short range communication unit.

The display data retention apparatus comprises a storage unit for holding display data, and a transmission unit for transmitting display data over to the display apparatus at least within a short range in response to storage content of the storage unit.

A mechanical quick release unit can be comprised for attaching the display apparatus to the display data retention apparatus detachably, and data displayed on the display data retention apparatus, such as a display in a mobile terminal, may be transmitted to the display apparatus for performing an enlarged display.

A display device according to the present invention, in the display device having two substrates, between which liquid crystal is injected, comprises partition walls with a structure for keeping plural colors of liquid crystals, which are injected between the two substrates, from touching one another.

Meanwhile, the display apparatus according to the present invention, comprises a first display device having transmission and reflection modes, and capable of switching display content, and a reflective second display device for displaying a fixed image or character and enabling the viewing of the display content through the first display device.

The display apparatus according to the present invention comprises a temperature compensation unit for changing a peak value of each drive voltage waveform corresponding to the planar and focal conic states of cholesteric liquid crystal for example responding to a temperature. The display apparatus according to the present invention has a coil furnished for receiving an external high frequency magnetic field, wherein the coil comprises an intermediary tap with one end of the coil being grounded and a for-resonance capacitor being connected between the intermediary tap and ground, a logic-use power supply unit for supplying circuits other than the one for display use with a voltage by rectifying a high frequency voltage generated across the resonating capacitor, and a display-use power supply unit for supplying a display-use voltage by rectifying a high frequency voltage generated between the other end of the coil and intermediary tap.

As a device drive method according to the present invention, in a matrix type display apparatus using a cholesteric liquid crystal, the device drive method comprises the steps of setting some scanning electrodes for reset and writing lines to a selection state and a pause line to a non-selection state, respectively; and providing a writing data signal to a signal electrode side while shifting the reset, pause and writing lines respectively.

Also as a display device drive method according to the present invention, in the above described matrix type display apparatus, the drive method comprises the steps of detecting a plurality of lines on which data patterns to be displayed are the same from among a plurality of lines on a display screen; and writing the same pattern in bulk by selecting the detected plurality of lines simultaneously and applying data of the same pattern to the signal electrodes.

A display apparatus according to the present invention comprises a display unit capable of continuing data display for example even if power is cut off; a storage unit for storing information relating to an acquisition method for data to be displayed and one relating to a displaying form for acquired display data; and a control unit for controlling acquisition of display data externally, and display of the display data in the display unit, both in accordance with the storage content of the storage unit.

As described above, according to the present invention, a display apparatus is configured by using a cholesteric liquid crystal display device, et cetera, capable of continuing data display even if the power supply is cut off for instance; and an information display system is configured by using the display apparatus, display data retention apparatus, such as a mobile terminal, for supplying the display apparatus with display data and power.

**Brief Description of Drawings**

Fig. 1 exemplifies a conventional configuration of a cholesteric LC device;
Fig. 2 exemplifies a conventional configuration of a drive waveform for a passive matrix type device;
Fig. 3 shows a problem with a conventional configuration of a cholesteric LC drive method (part 1);
Fig. 4 shows a problem with a conventional configuration of a cholesteric LC drive method (part 2);
Fig. 5 is a block diagram showing the fundamental comprisal of an information display system according to the present invention;
Fig. 6 is a block diagram showing the fundamental comprisal of a display apparatus according to the present invention;
Fig. 7 is a block diagram showing a comprisal of a first example of an information display system according to a first embodiment;
Fig. 8 is a block diagram showing a comprisal of a second example of an information display system according to the first embodiment;
Fig. 9 describes the same screen display mode of the system shown by Fig. 7;
Fig. 10 describes a different screen display mode of the system shown by Fig. 7;
Fig. 11 describes a screen selection/transmission mode in the system shown by Fig. 7;
Fig. 12 describes a data display in a wireless display panel;
Fig. 13 describes a mechanical mounting mechanism (part 1) on the mobile terminal side;
Fig. 14 describes a mechanical mounting mechanism (part 2) on the mobile terminal side;
Fig. 15 describes a mechanical mounting part on the wireless display panel side (part 1);
Fig. 16 describes a mechanical mounting part on the wireless display panel side (part 2);
Fig. 17 describes a magnet / hook and loop fastener as a mounting mechanism for the terminal side;
Fig. 18 describes a magnet / hook and loop fastener as a mounting mechanism for the wireless display equipment side;
Fig. 19 exemplifies a wearable display system using a wireless display panel;
Fig. 20 describes the planar state of cholesteric LC;
Fig. 21 describes the focal conic state of cholesteric LC;
Fig. 22 exemplifies the reflectance spectrum of cholesteric LC;
Fig. 23 describes a planar drive wave form for a cholesteric LC;
Fig. 24 describes a focal conic drive wave form for a cholesteric LC;
Fig. 25 shows a response characteristic of cholesteric LC;
Fig. 26 shows an example comprisal of a reflectance type LCD device using a cholesteric LC;
Fig. 27 describes an example of a segment display using a cholesteric LC;
Fig. 28 shows an LC separation structure for a matrix substrate;
Fig. 29 shows a structure for separating two LCs;
Fig. 30 exemplifies a comprisal of a pixel in the structure shown by Fig. 29;
Fig. 31 describes formation of a sub-dot in the structure shown by Fig. 29;
Fig. 32 shows a structure for separating three LCs;
Fig. 33 describes formation of a dot in the structure shown by Fig. 32;
Fig. 34 describes formation of a sub-dot in the structure shown by Fig. 32;
Fig. 35 exemplifies an overlapping display of a printed material with a variable type display device;
Fig. 36 describes a display state in the configuration shown by Fig. 35;
Fig. 37 exemplifies an overlapping display aiming at product sales;
Fig. 38 exemplifies an overlapping display for a restaurant menu;
Fig. 39 exemplifies an overlapping display for a schedule chart;
Fig. 40 exemplifies an overlapping display relating to a map;

Fig. 41 exemplifies an overlapping display relating to an exercise book;

Fig. 42 exemplifies an overlapping display relating to a bank loan simulation;

Fig. 43 exemplifies a power supply circuit for a non-contact IC card, et cetera, according to a third embodiment;

Fig. 44 exemplifies a power supply circuit furnished with independent power supplies for a logic and display uses, respectively;

Fig. 45 exemplifies a configuration of a power supply circuit for an LC driver LSI requiring many different voltage values;

Fig. 46 exemplifies a configuration of a circuit for regulating a power supply to a display unit in accordance with a supplied electric power;

Fig. 47 exemplifies a configuration of a clock output circuit for extending a drive cycle of a display unit in accordance with supplied electric power;

Fig. 48 exemplifies a configuration of a circuit for outputting an image display inhibit signal in accordance with a supplied electric power;

Fig. 49 exemplifies aconfigurationof a current regulation circuit for a display-use power supply;

Fig. 50 exemplifies peak values in drive waveforms for a cholesteric LC;

Fig. 51 exemplifies peak values in drive waveforms with a widened pulse width;

Fig. 52 exemplifies peak values being changed linearly with temperature in drive waveforms;

Fig. 53 exemplifies a configuration of a temperature compensation circuit for accomplishing the characteristic shown by Fig. 52;

Fig. 54 is a block diagram exemplifying an LCD device drive driver according to a fourth embodiment;

Fig. 55 describes a screen rewriting method according to the fourth embodiment;

Fig. 56 is a timing chart for the screen rewriting method shown by Fig. 55;

Fig. 57 shows a polarity reversing method for an LC device drive waveform according to the fourth embodiment;

Fig. 58 describes an effect of a drive method according to the fourth embodiment (part 1);

Fig. 59 describes an effect of a drive method according to the fourth embodiment (part 2);

Fig. 60 describes an effect of a drive method according to the fourth embodiment (part 3);

Fig. 61 describes a skip drive method as an image writing method;

Fig. 62 is a process flow chart of the skip drive method;

Fig. 63 shows the result of a first writing in a three-value writing method;

Fig. 64 shows the result of a secondwriting in a three-value writing method;

Fig. 65 is a block diagram showing an example comprisal of an automatic display apparatus according to a fifth embodiment;

Fig. 66 is an example comprisal of an automatic display apparatus communicating with a terminal, et cetera, via a wired connection;

Fig. 67 is an example comprisal of an automatic display apparatus wirelessly connected to a terminal, et cetera;

Fig. 68 is an example comprisal of an automatic display apparatus equipped with a noncontact IC card interface;

Fig. 69 exemplifies information about a data acquisition method and information about a data display form;

Fig. 70 describes an update date and time display form for data (part 1);

Fig. 71 describes an update date and time display form for data (part 2);

Fig. 72 describes an automatic display apparatus for displaying a screen of a terminal, et cetera;

Fig. 73 describes an automatic display apparatus as a second display;

Fig. 74 describes an automatic display apparatus for displaying advertisement data; and

Fig. 75 describes an automatic display apparatus for use as a handout at a conference.

## Best Mode for Carrying Out the Invention

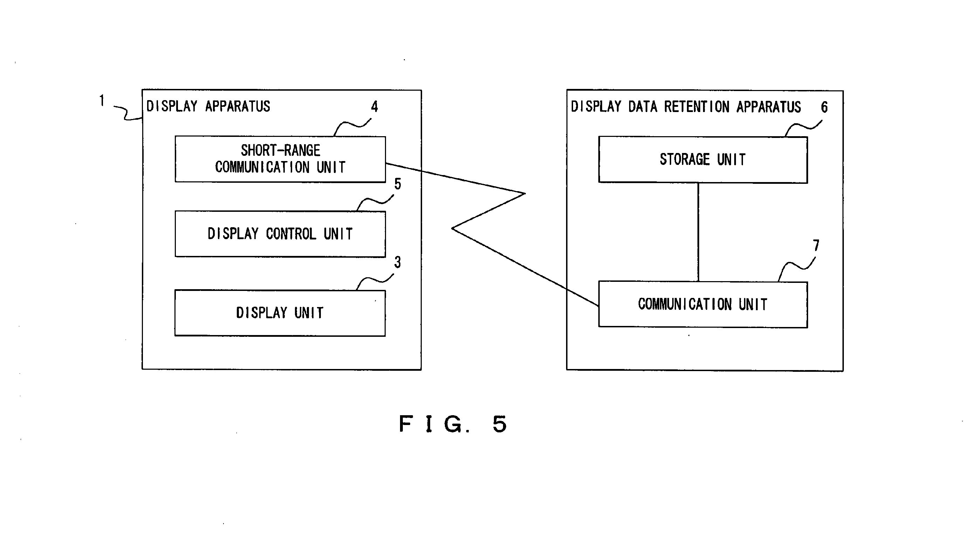

Fig. 5 is a block diagram showing the fundamental comprisal of an information display system according to the present invention. In Fig. 5, the information display system comprises a display apparatus 1 and display data retention apparatus 2.

The display apparatus 1 comprises a display unit 3 capable of continuing data display even if the power is cut off for example, a short range communication unit 4 for carrying out short range communication in order to receive data to be displayed provided externally, and a display control unit 5 for controlling display performed by the display unit 3 in response to discretionary data received by the short range communication unit 4.

The display data retention apparatus 2 such as a mobile terminal comprises a storage unit 6 for holding display data, and a communication unit 7 for transmitting display data to the side of display apparatus 1 at least within a short range according to a storage content of the storage unit 6.

The display data retention apparatus 2 may further comprise a long range communication unit, being capable of long range communication unlike the communication unit 7, for acquiring display data provided externally so that the communication unit 7 transmits display data acquired by the long range communication unit to the display apparatus 1 side.

The display apparatus 1 may further comprise a mechanical quick release unit for mounting the said apparatus onto a human body or clothing.

The display data retention apparatus 2 may further comprise a display unit with a smaller display area than that of the display unit 3 comprised by the display apparatus 1 and a mechanical quick release unit for mounting the display apparatus 1 onto the said apparatus; or the display data retention apparatus 2 may further comprise the display unit itself as described above and at the same time the display apparatus 1 may further comprise a mechanical quick release unit for mounting the display data retention apparatus 2 onto the said apparatus.

Meanwhile, the short range communication unit 4 comprised by the display apparatus 1 is enabled to receive not only data to be displayed but also power for displaying and display control information, all from the display data retention apparatus 2 side.

A display device according to the present invention comprises partition walls with a structure for keeping plural colors of LCs, which are injected between two substrates, from touching one another.

A surface of the partition wall facing the substrate may be configured to possess an adhesive property, the plural colors of LCs may be cholesteric LCs, or the additive colors of the plural colors of LCs may be white.

Meanwhile, the display apparatus according to the present invention, having transmission and reflection modes, comprises a first display device capable of switching display contents, and a reflective second display device for displaying a fixed image or character and enabling viewing of display content through the first display device.

The second display device may be a printed material or a material written in characters or as an image by hand and detachably attached to the first display device, or the first display device may have the function of changing a display area corresponding to the position and shape of the fixed image or character on the detachably attached second display device.

The display apparatus according to the present invention also comprises a temperature compensation unit for respectively changing peak values of two kinds of drive voltage waveforms corresponding to the two stable states of an LC in response to a temperature.

The aforementioned LC is a cholesteric LC and the temperature compensation unit may also be configured to be capable of changing the peak value of drive wave form applicable to the focal conic state along the straight line connecting two points, i.e., the average of the upper and lower limit values of the peak value of the drive wave form at the lower temperature limit and that of the upper and lower limit values of the peak value of the drive wave form at the higher temperature limit.

The display apparatus according to the present invention has a coil furnished in order to receive an external high frequency magnetic field and comprises a display-use power supply unit for supplying a display-use voltage by rectifying a high frequency voltage induced by the coil, and a logic-use power supply unit for supplying circuits other than the one for display use with a voltage by rectifying a high frequency voltage induced by the coil.

In this case, the coil may comprise an intermediary tap with one end of the coil being grounded, a for-resonance capacitor may be connected between the intermediary tap and ground, the logic-use power supply unit may rectify a voltage across the for-resonance capacitor, and the display-use power supply unit may rectify a voltage across the other end of the coil and intermediary tap.

The display apparatus also comprises a display unit for performing data display by using power supplied externally by noncontact means, and a display function control unit for controlling a display function of the display unit in response to the externally supplied electric power.

The display apparatus also comprises a display-use power supply which uses a part of the power supplied externally without a contact, and a logic-use power supply for supplying circuits other than the display unit with power by using a part of the power supplied externally without a contact, and a current regulation unit for regulating an output current of the display-use power supply in response to a voltage drop of the logic-use power supply.

In the meantime, a display device drive method according to the present invention, for use in a matrix type display apparatus using a cholesteric liquidcrystal, comprises the steps of setting some scanning electrodes for a reset and writing lines in a selection state and for a pause line in a non-selection state, respectively; and applying a writing data signal to a signal electrode side while shifting the reset, pause and writing lines, respectively.

In this case, a writing alternate signal applied to a reset and writing lines may reverse polarities within a time corresponding to one line and also have a period corresponding to two lines.

Next, the display device drive method according to the present invention, for use in the matrix type display apparatus, also comprises the steps of detecting a plurality of lines, on which data patterns to be displayed are the same, from among a plurality of lines on a display screen; and selecting the detected plurality of lines simultaneously and writing the same pattern data in bulk by applying data of the same pattern to signal electrodes, in which the maximum number of the plurality of lines on which a writing in bulk is carried out may be inversely proportional to the spatial frequency of the same pattern data. Furthermore, the display device drive method according to the present invention comprises the steps of converting image data to be written in an LC device into image data having n-number of gray scales; extracting a pixel of each gray scale level after conversion; and forming, for the extracted pixels: a sub-image 1 which is formed by converting the pixels on the least bright gray scale level 1 (i.e., on the black level) and n-th least bright gray scale level n (i.e., on the white level) into black and white levels, respectively, a sub-image 2 which is formed by converting the ones between the least bright gray scale level 1 and the second least bright gray scale level 2 into a black level followed by combining with the gray scale level n, and so on and so forth..., and a sub-image (n-1) which is formed by converting the ones between the least bright gray scale level 1 and (n-1)-th least bright gray scale level (n-1) into a black level followed by combination with the gray scale level n, in which a display of the n-number of gray scales is obtained by starting writing the sub-image 1, followed by the sub-image 2, and so on and so forth, and sub-image (n-1) in that order. Also, the display device drive method comprises the steps of converting image data to be written in an LC device into image data having n-number of gray scales; extracting a pixel of each gray scale level after conversion; and forming, for the extracted pixels: a sub-image 1 which is formed by converting the pixels on the brightest gray scale level 1 and n-th least bright gray scale level n into a white and black levels, respectively, a sub-image 2 which is formed by converting the ones between the brightest gray scale level 1 and the second brightest gray scale level 2 into a white level followed by combining with the gray scale level n, and so on and so forth..., and a sub-image (n-1) which is formed by converting the ones between the brightest gray scale level 1 and (n-1) -th brightest gray scale levels (n-1) into a white level followed by combining with the gray scale level n, in which display of the n-number of gray scales is obtained by starting writing the sub-image 1, followed by the sub-image 2, and so on and so forth, and sub-image (n-1) in that order.

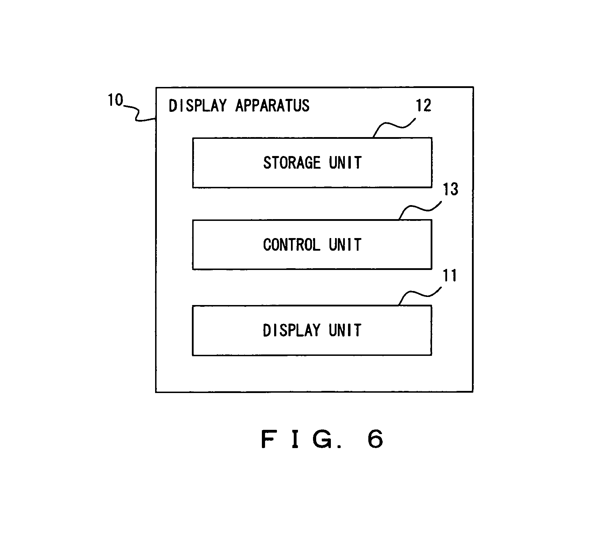

Fig. 6 is a block diagram showing the fundamental comprisal of a display apparatus according to the present invention. In Fig. 6, the display apparatus 10 comprises a display unit 11 for displaying data; a storage unit 12 for storing information relating to an acquisition method for data to be displayed and the one relating to a displaying form of the display data; and a control unit 13 for controlling acquisition of display data externally in accordance with storage content of the storage unit 12 and display of the display data in the display unit 11. The display unit 11 can be one capable of continuing data display either semi-permanently or for a certain period of time after the power supply is cut off.

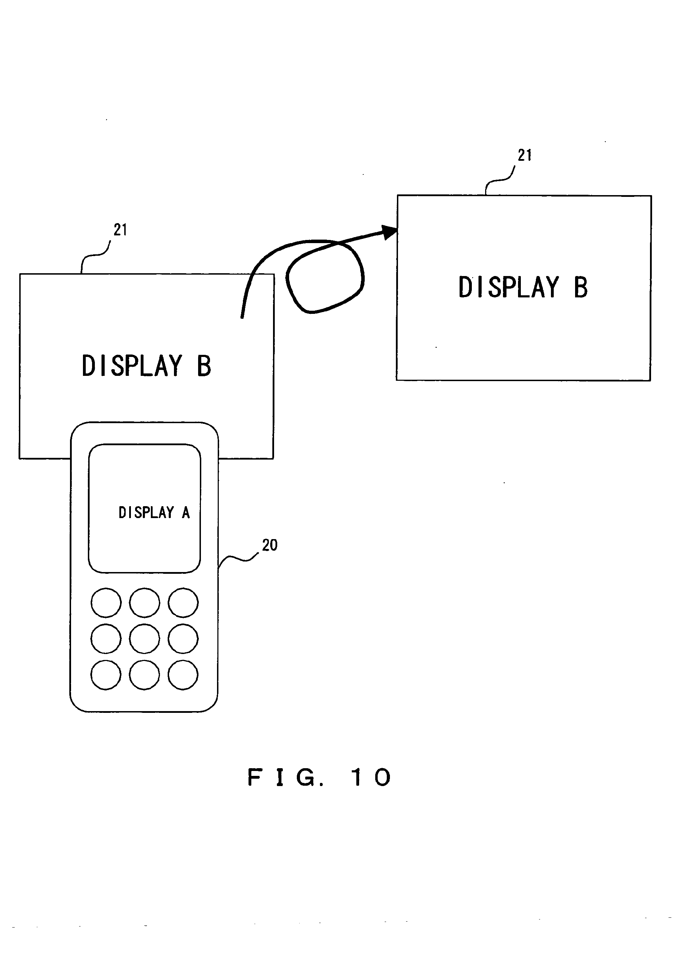

In the display apparatus 10 shown by Fig. 10, the control unit 13 is enabled to start the display apparatus 10 automatically in response to an instruction either externally or internally applied, acquire a display data provided externally and transition the display apparatus 10 back to a ready state after the display is finished.

Also, the display apparatus may further comprise a data acquisition unit for acquiring yet-to-be acquired display data at a communication restart if a communication is interrupted in the middle of acquiring display data provided externally, an overwriting inhibit unit for inhibiting overwriting of data displayed by the display unit 11, and a nonvolatile storage unit for storing data for no less than one page of displaying by the display unit 11.

Preferred embodiments of the present invention will now be described by categorizing them into some embodiments in the following. To begin with, the description will deal with a first embodiment, that is, an information display system for carrying out display on the display apparatus side by using power transmitted from a wireless terminal side, such as a noncontact IC card, along with data, while an information display apparatus, that is, a display panel has no power.

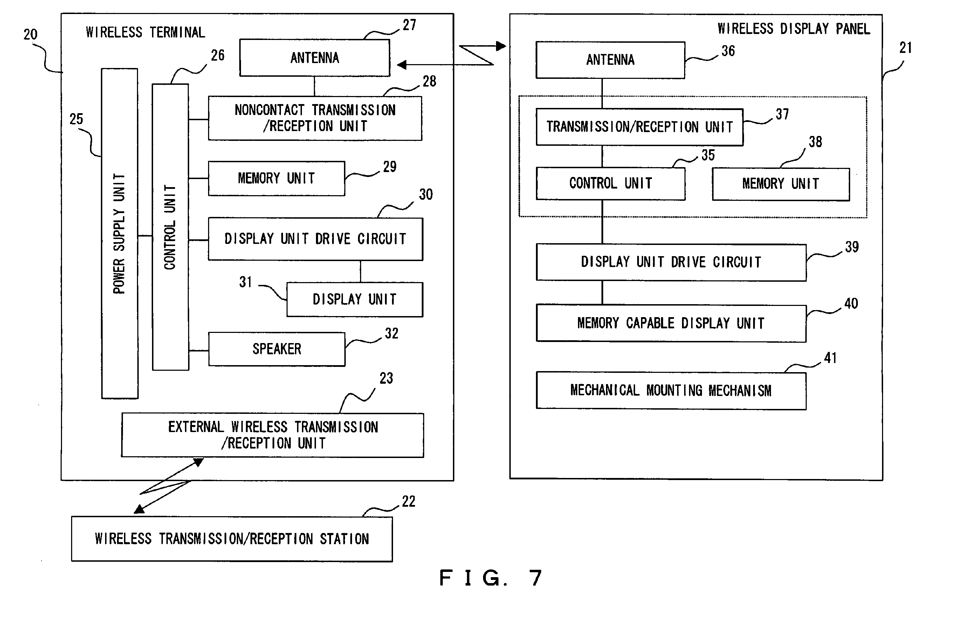

Fig. 7 is a block diagram showing a comprisal of a first example of such an information display system. In Fig. 7, the display system comprises a wireless terminal 20 and a wireless display panel 21. And the wireless terminal 20 comprises an external wireless transmission/reception unit 23 and is enabled to exchange external wireless information with a wireless transmission/reception terminal station 22. The external wireless transmission/reception unit 23 can be a wireless LAN transmission/reception unit.

The wireless terminal 20 comprises a power supply unit 25, a control unit 26, an antenna 27 for performing short range communication with the wireless display panel 21 side, a noncontact transmission/reception unit 28 for controlling communication by using the antenna 27, amemoryunit 29 for storing display data, et cetera, to be transmitted to the wireless display panel 21, a display unit drive circuit 30 for controlling a data display over at the wireless terminal 20, a display unit 31 and a speaker 32.

The wireless display panel 21 comprises an antenna 36 for short range communication with the wireless terminal 20, a transmission/reception unit 37 for carrying out the aforementioned communication, a control unit 35 for controlling the whole, a memory unit 38 for storing for-display data and for-control data, a display unit drive circuit 39 for performing data display, memory capable display unit 40, and a mechanical mounting mechanism 41 for enabling the wireless terminal 20 to be detachably attached to the wireless display panel 21.

The wireless terminal 20, such as a mobile phone, is usually furnished with a small display. Use of the wireless display panel 21 as a non-powered display card is for enlarging the screen display and displaying the whole image in a larger screen, while a comprisal of the mechanical mounting mechanism 41 as a mechanical quickly detachable attachment unit for mounting the wireless display panel 21 onto a mobile phone makes it possible to integrate it with the mobile phone. In configuring this, installed nearby the mechanical mounting mechanism 41 is the transmission/reception unit 37 used for short range communication whose system has the functions of supplying power for a display at the wireless display panel 21 as well as communication of the display data. This function enables a short-range wireless communication function such as an IC card or RF (radio frequency) tag for example.

The memory capable display unit 40 can take advantage of a device which for instance retains the display state semi-permanently even after the power supply is cut off, such as a later described cholesteric LC, or alternatively a display media capable of retaining the display state for a certain period of time if not for semi-permanently, or a display unit in association with a commonly used buffer memory and its memory content.

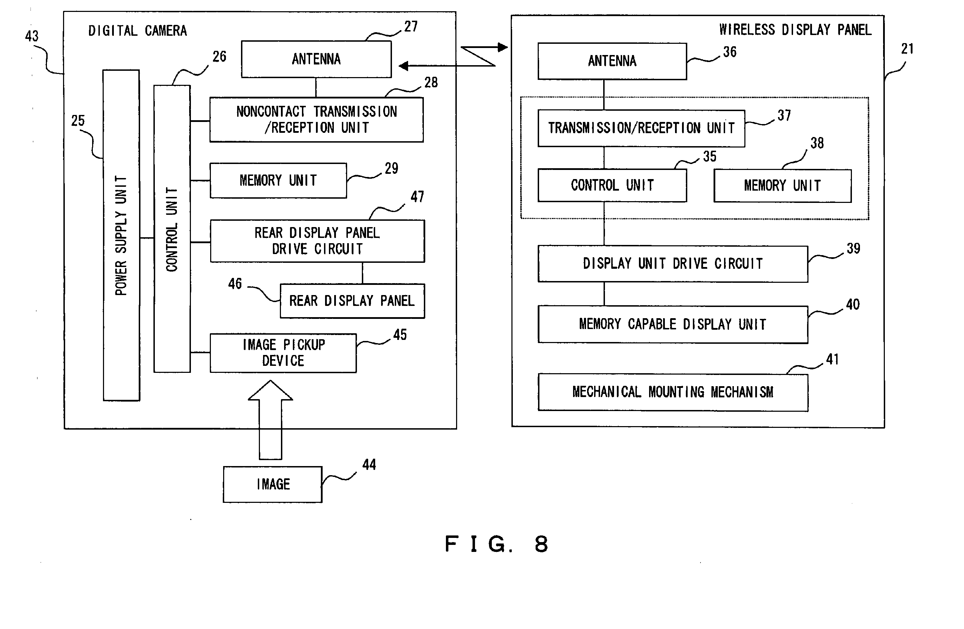

Fig. 8 is a block diagram showing a comprisal of a second example of an information display system according to the first embodiment. In Fig. 8, display of image data sent from a digital camera 43 is performed at the wireless display panel 21. That is, an image 44 is photographed by an image pickup device 45 and its data is sent to a wireless display panel 21 by way of the antenna 27 as well as the image 44 being displayed on a rear display panel 46 located on the rear surface of the digital camera 43 via control by a rear display panel drive circuit 47.

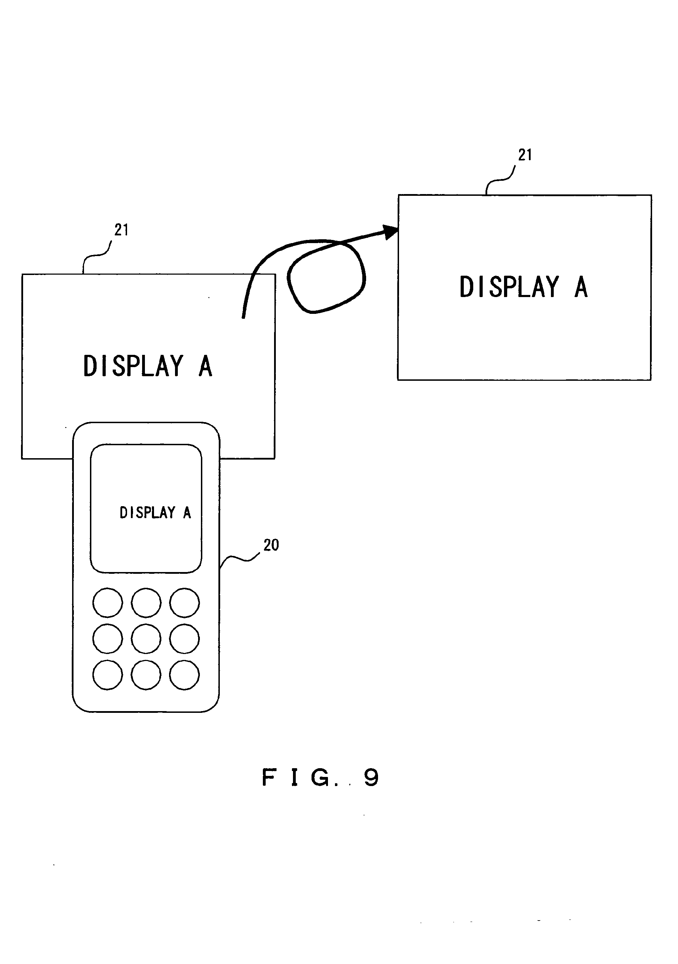

Figs. 9 and 10 describe a screen display mode in the information display system shown by Fig. 7. In Fig. 9, display data in a wireless terminal 20, that is, that (i.e., a display A) on the display equipped in a mobile phone, is transmitted over to the wireless display panel 21 in a state such as the wireless display panel 21 being mechanically attached to the mobile phone 20 and the display will be continued even in another state where the wireless display panel 21 is detached from the mobile phone 20.

Fig. 10 describes a different screen display mode in which display data of the wireless terminal 20 and the wireless display panel 21 are different. That is, the wireless terminal 20 displays the display A, while the wireless display panel 21 displays the display B.

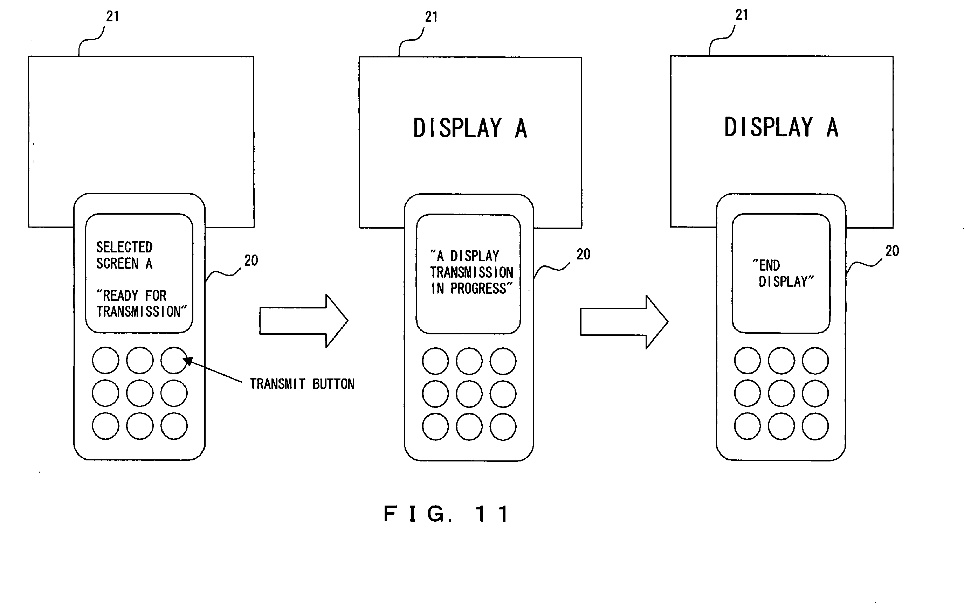

Fig. 11 describes a screen selection/transmission mode in the information display system shown by Fig. 7. First, the operation of selecting a screen A to be sent over to the wireless display panel 21, followed by pressing a transmit button at the wireless terminal 20, will transmit the data of the selected screen A over to the wireless display panel 21. In the meantime at the wireless terminal 20, its display will show "ready for transmission" prior to data transmission, "a display transmission in progress" during transmission, and "end display" when completing a transmission.

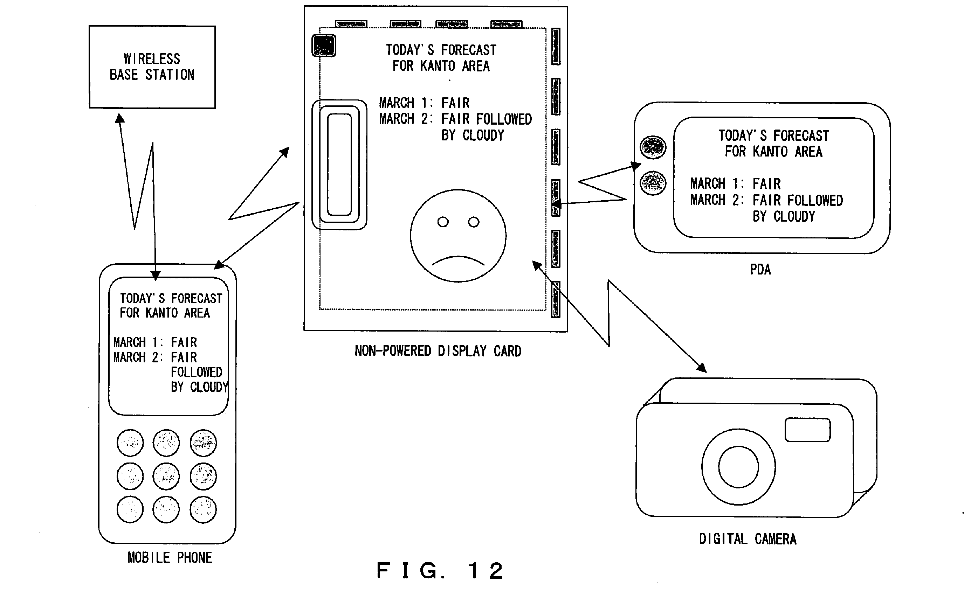

Fig. 12 describes a data display in a non-powered display card, that is, a wireless display panel conducted comprised by various terminals including a digital camera. This enables displaying of display data stored by not only a digital camera but also a mobile phone or PDA on the non-powered display card. For example, a mobile phone is able to have the non-powered display card display data either received from a wireless base station, as described by Fig. 7, or acquired by way of the Internet.

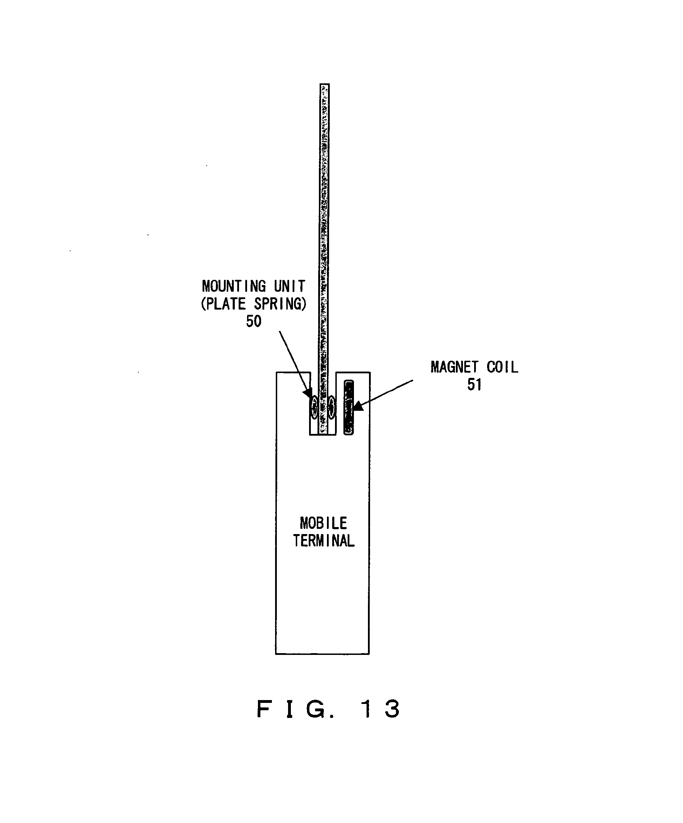

Fig. 13 describes the mechanical mounting mechanism 41 as a mechanical detachable attachment unit connecting the wireless terminal 20 such as the mobile terminal and wireless display panel, that is, the non-powered display card. In Fig. 13, the wireless display panel 21 has a plate spring 50 fixed thereto, which enables insertion into an insertion part of the mobile terminal and fixing. The plate spring 50 can also be fixed onto the insertion part of the mobile terminal and a mechanical reinforcement plate can also be installed over the wireless display panel 21. Since the connecting part is not used for an electrical connection physical damage to some extent caused by friction or the like is therefore not a problem. A magnet coil 51, equivalent to the antenna 27 used for short range communication as described in Fig. 7 for example, can be installed nearby the mounting part.

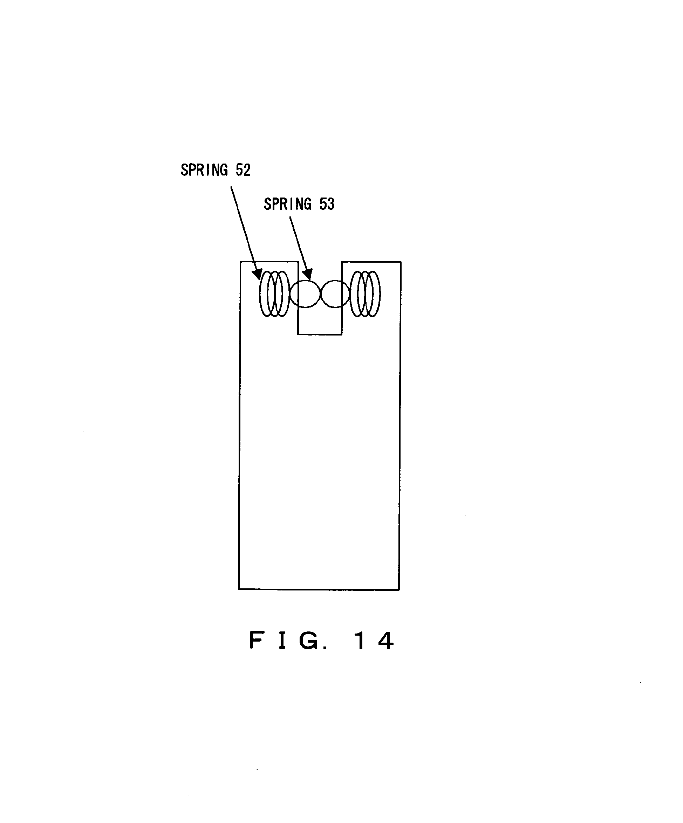

Fig. 14 shows an alternative configuration, which employs coil springs 52 and 53 in place of the plate spring 50 shown by Fig. 13, enabling a mechanical mounting by inserting the wireless display panel 21 between these springs.

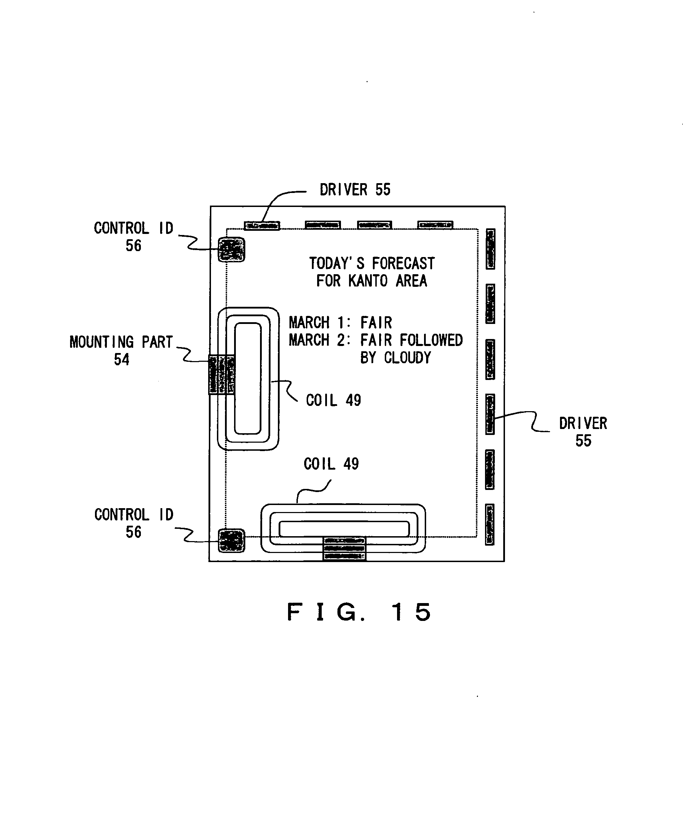

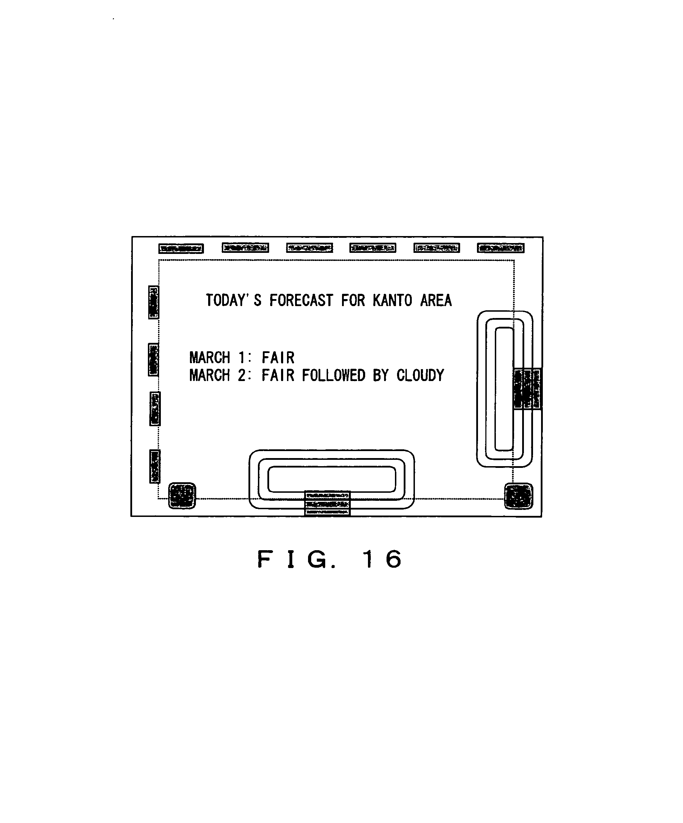

Figs. 15 and 16 describe a mechanical mounting part on the wireless displaypanel 21, that is, on the non-powered display card side. Two mounting parts 54 are equipped in the card to allow a vertical or horizontal mounting, with Fig. 15 showing a displaying state for the vertical mounting. A coil corresponding to the antenna 36 shown by Fig. 7 is comprised nearby the two mounting parts, and drivers 55 used for displaying and ICs 56 used for control are comprised in the card. Fig. 16 shows a display state of mounting the wireless display panel 21, that is, the non-powered display card horizontally.

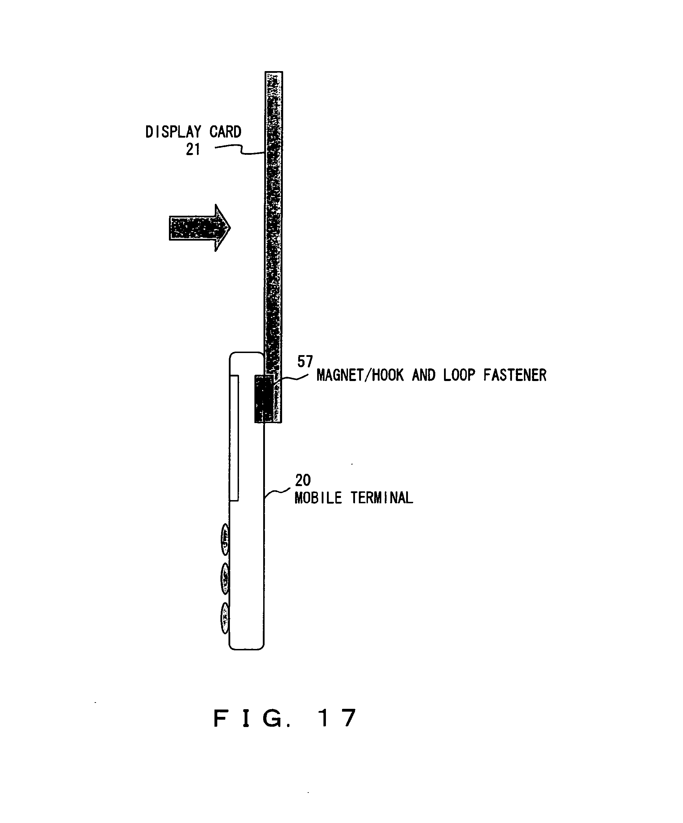

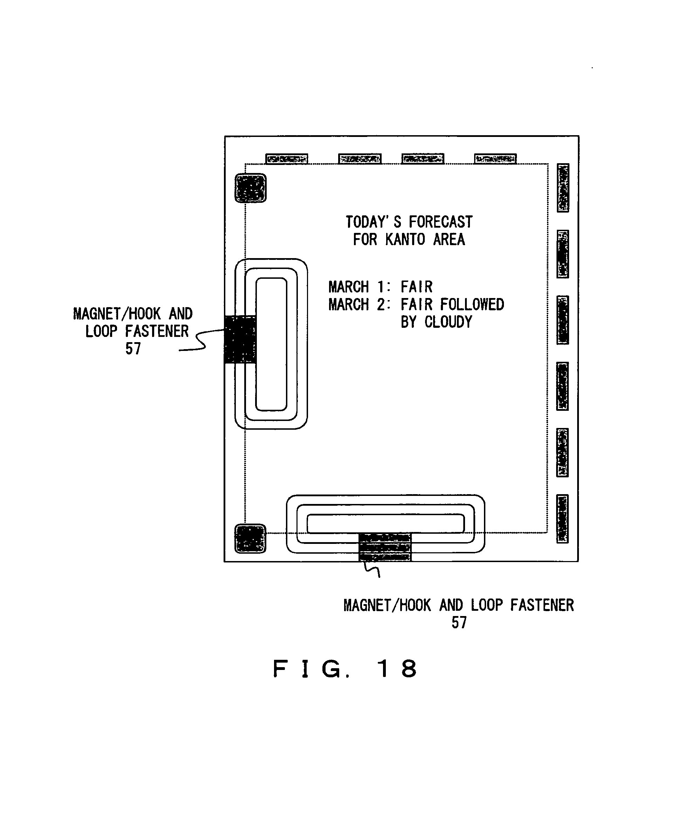

Figs. 17 and 18 exemplify a mechanical mounting mechanism different from the configurations shown by Figs. 13 through 16. Here, a magnet / hook and loop fastener 57 is used as a mounting mechanism, with Fig. 17 showing a state of mounting a non-powered display card onto the wireless terminal (e.g., mobile terminal) 20. Fig. 18 shows the non-powered display card being detached from the wireless terminal 20, also showing magnet / hook and loop fastener 57 being used in place of the mounting part 54 shown by Fig. 15.

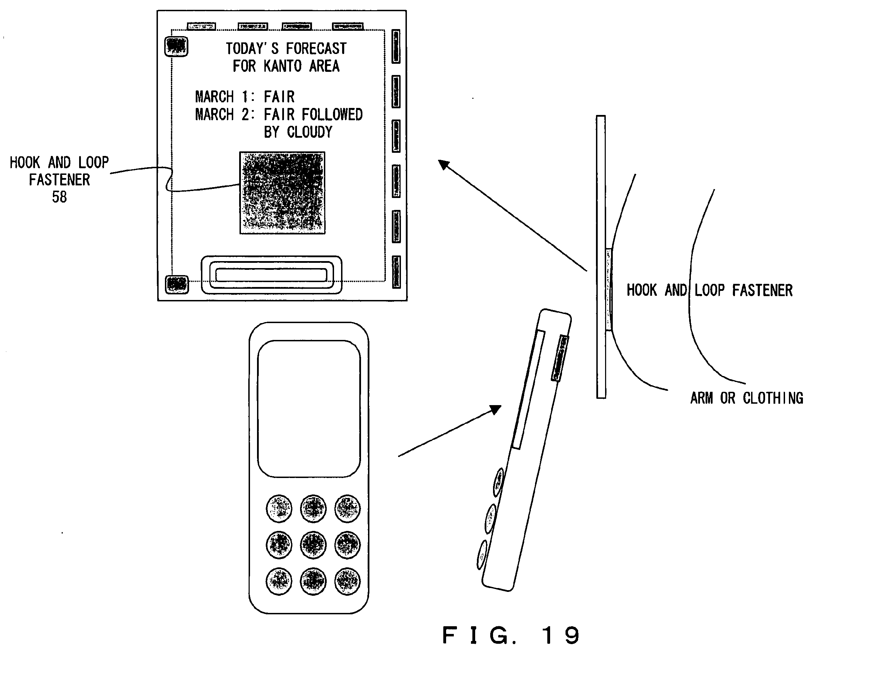

Fig. 19 exemplifies a wearable display system mounting the wireless display panel 21 onto clothing for example. It is possible to carry out a screen display on a display cardmounted onto a person at a necessary instance in a style such as fixing a hook and loop fastener 58 on the back side of the wireless display panel 21, that is, the non-powered display card, or by wrapping the display card itself around an arm so as to hold the wireless terminal 20 close to the display card.

For example, mounting a display card on an arm, listening to a voice by holding a mobile phone close to an ear and bringing the arm close to the mobile phone make it possible to have a phone conversation while looking at the screen display on the card. By this method it is possible to take advantage of a large screen display of lightweight and compact size, et cetera, without any need of a battery due to non-powered card. Furthermore, it is possible to leave a mobile phone in a breast pocket and bring a display card close to the chest to have the display card detected and thereby carry out data transmission and the resultant screen display.

Note here that the display of a still image is preferred for the one on the wireless display panel 21, that is, the non-powered display card. The reasons are that a device capable of continuing the display after the power is cut off for example has a property of low writing speed to begin with, that a large display screen is often used for a still image, taking advantage of its large information capacity, and that displaying moving images on a screen with a large information capacity requires very large power consumption. Moreover, generally speaking, transmission of a display to a non-powered display card should preferably be conducted intermittently in order to minimize the power consumption. For example, transmission and display of data in 50 ms followed by a pause of 100 sec greatly saves display power.

Note also here that in claims of the present invention, a display unit corresponds to the memory capable display unit 40, a short range communication unit corresponds to the antenna 36 and transmission/reception unit 37, a display control unit corresponds to the control unit 35 and display unit drive circuit 39, a storage unit corresponds to the memory unit 29, and a communication unit corresponds to the antenna 27 and non-contact transmission/reception unit 28, all of the above relating to claim 1, with all the aforementioned numbered components being listed by Fig. 7.

In the claim 2, a long-range communication unit corresponds to the external wireless transmission/reception unit 23. In the claim 3, a mechanical detachable attachment unit corresponds to the mechanical mounting mechanism 41; and in the claim 4, a display unit corresponds to the display unit 31, with all the numbered components above being listed by Fig. 7, and a mechanical detachable attachment unit corresponds to the mounting part 50 shown by Fig. 13 for instance.

As described so far, the first embodiment enables the displaying of a screen furnished with mobile equipment by a large screen or multi-screens in handsfree and also the use of display results of the remaining display through the utilization of a memory function even after detaching the large screen from the mobile equipment by mounting a non-powered large screen display, which is usually separated from a mobile equipment, et cetera, integrally with a mobile terminal or a mobile equipment such as a digital camera at the time of usage.

Specifically, the use of a cholesteric LCD device allows acquisition of a low cost and easy-to-make film based, passively driven, high resolution, memory capable color display. It is possible to accomplish not only the same resultant effect as printing by a mobile printer without ever using one, but also a color display or large screen display which is hardly achievable by a mobile printer. Especially for a terminal required to be of compact design such as a mobile phone, the actual effect of a large screen display is substantial.

It is also possible to obtain reference materials, catalog information, et cetera, by using the wireless communication function comprised by a mobile terminal to store it as a display record for a large screen display. Holding a display panel with a memory capable display function in a pocket orbrief case enables instantaneous easy viewing of a large screen. Also, mounting a non-powered display card onto a person makes it possible to solve the conventional shortcomings of weight, bulkiness and need to recharge, et cetera, caused by a wearable display using a battery.

What follows here is the description of a cholesteric LCD device as a representative display medium capable of continuing display in a state of the power supply being cut off and a display apparatus using the display device as a second embodiment of the present invention.

First, let a characteristic of the cholesteric LC be described in general terms. The cholesteric LC has a property of reflecting light in a certain wavelength range selectively; among such materials chiral-nematic LC is the result of nematic LC forming a cholesteric phase by adding a chiral material thereto. The cholesteric LC provides two stable states, i.e., the planar state as a reflective state and the focal conic state as a transmissive state, by electrical control, having the characteristic of memory property in holding the planar and focal conic states, respectively, semi-permanently unless a certain kind of external force is applied.

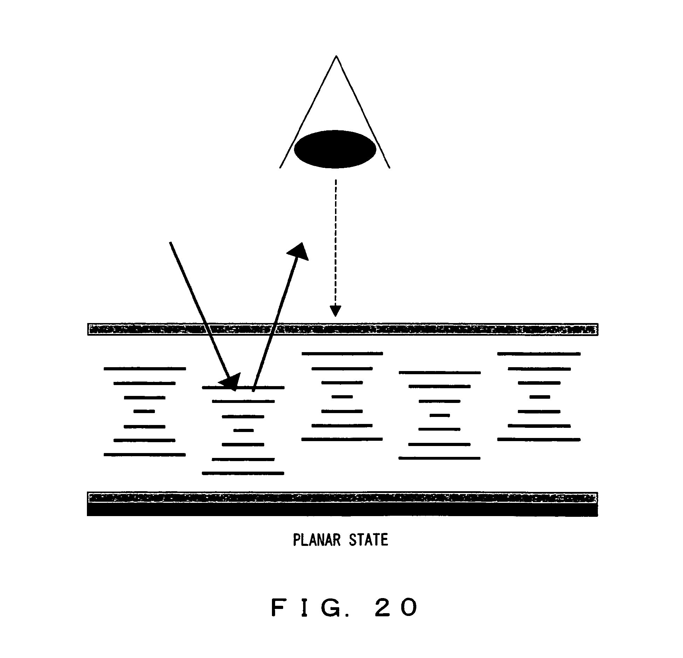

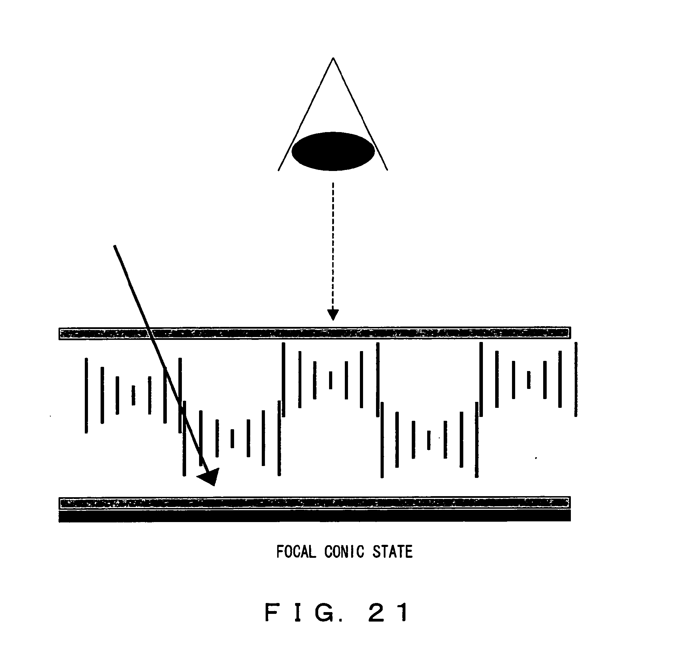

Figs. 20 and 21 describe the planar state and the focal conic state, respectively, of cholesteric LC. In a display apparatus using a cholesteric LC, control of the two states is carried out by switching the orientation states of the liquid crystal molecules. Fig. 20 shows the planar state in which light in a specific wavelength range is selectively reflected. In this planar state, circularly polarized light propagating along a helical path with a pitch and rotation direction the same as the helix of the liquid crystal molecules is selectively reflected. A wavelength $\lambda$ at which the reflection becomes a maximum is given by the following expression, where "n" is the average refractive index, and "p" is the helical pitch, of the LC:

$$\lambda = n * p$$

The reflectance band $\Delta\lambda$ increases with a refraction index anisotropy $\Delta n$ of the LC.

Fig. 21 shows the focal conic state in which most of the incident light is transmitted through, hence the LC becomes transparent. Therefore, installing a layer with a discretionary color under the LC layer makes it possible to display the color in the focal conic state. Accordingly, installing a light absorption layer (black) under the LC layer, with the wavelength band of reflecting light in the planar state being about 550 nm, will make it possible to obtain a green mono-color display with a black background.

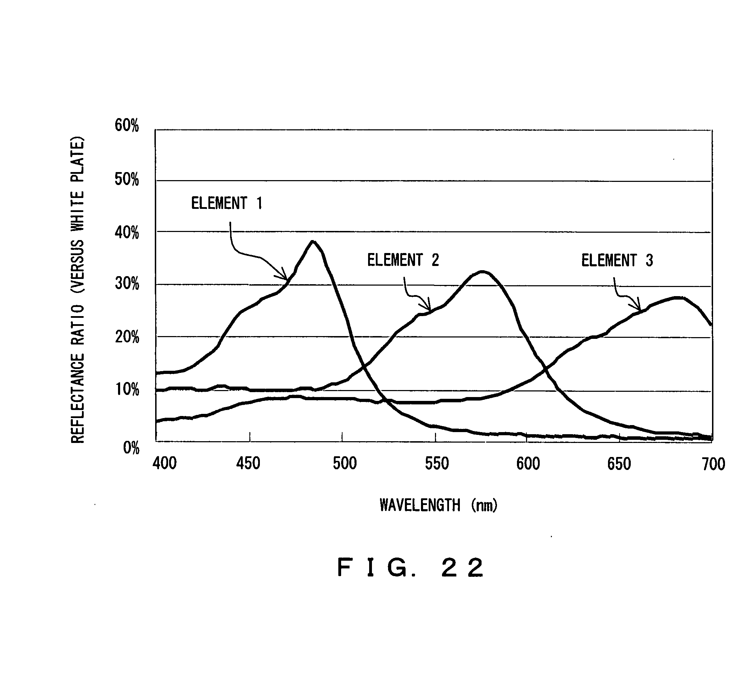

Fig. 22 exemplifies a reflectance spectrum of cholesteric LC. The coexistence of a plurality of LC elements (i.e., blue, green and red) with different reflectance bands will basically enable full color display. The reflectance ratio is close to 50% due to reflection of either the left or right circularly polarized light.

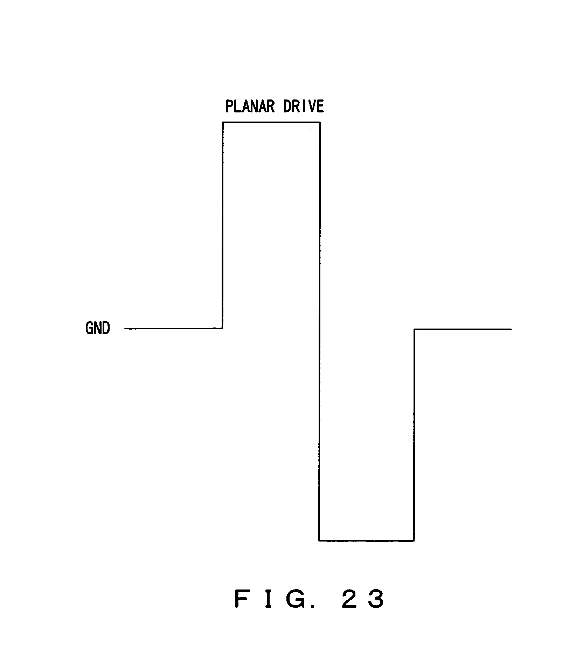

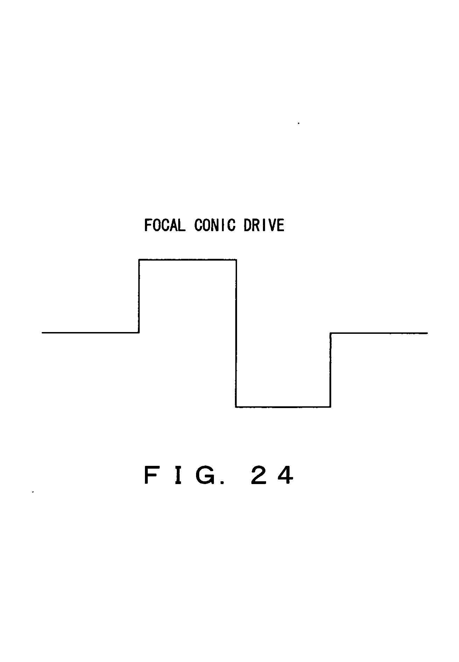

Figs. 23 and 24 describe a common drive waveform for the cholesteric LC, for which a drive is carried out by applying a pulse voltage. An application of a strong electric field untangles the helical structure of the LC molecules so that all the molecules orient themselves in the direction of the electric field, i.e., a homeotropic state.

In Fig. 23, applying a pulse of $\pm40$ volts, for example, followed by removing the electrical field forms a helical structure in which the helical axis of LC molecules align themselves vertical to the electrode, thereby assuming the planar state to reflect light selectively corresponding to the helical pitch.

In Fig. 24, applying a pulse of $\pm24$ volts, for example, followed by removing the electrical field, that is, applying a weak electrical field so as not to untangle the helical axis of the LC molecules completely, followed by removing the electrical field makes the helical axis of the LC parallel with the electrode, obtains the focal conic state, transmitting the incident light. Contrarily, applying an intermediate strength of electrical field followed by removing it will obtain a state in which both the planar and focal conic states coexist, enabling an intermediate halftone display.

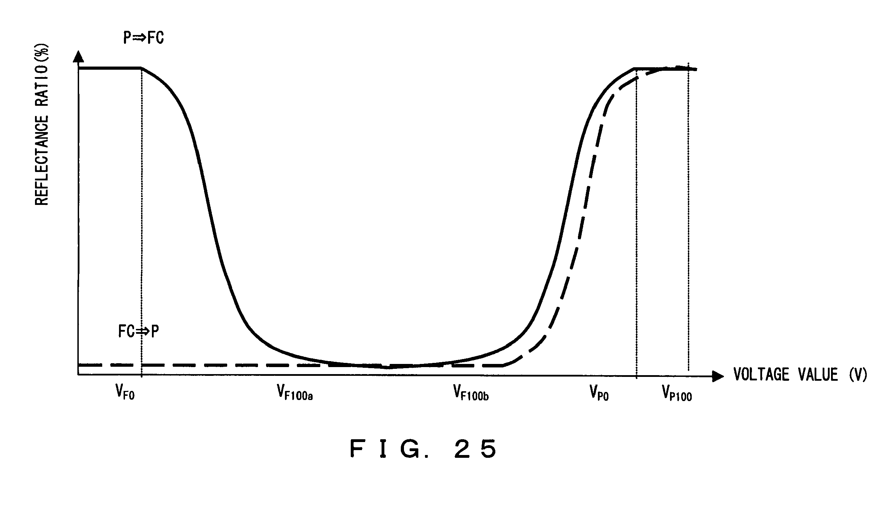

Fig. 25 shows a summary response characteristic of cholesteric LC. In Fig. 25, $V_{F0}$ is the threshold voltage for starting a transition to the focal conic state, between $V_{F100a}$ and $V_{F100b}$ is the voltage range for, a completely focal conic state, $V_{P0}$ is the threshold voltage for starting a transition to the planar state and $V_{P100}$ is the threshold voltage for assuming a completely planar state. If the initial state is the planar state, increasing the pulse voltage gives rise to a drive band for a transition into the focal conic state up to a certain limit, and further increasing the pulse voltages will make the drive band for a transition into the planar state again. If the initial state is the focal conic state, increasing the pulse voltage gives rise to a drive band for a gradual transition into the planar state.

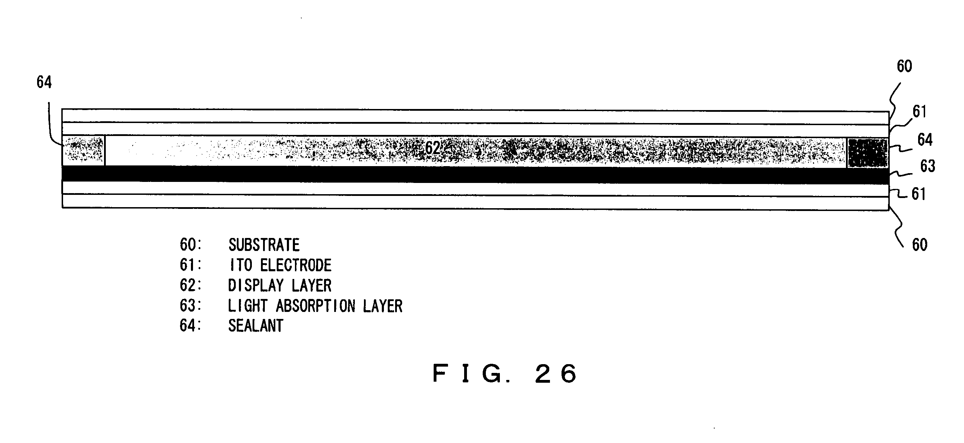

Fig. 26 shows an example comprisal of a reflectance type LCD element using a cholesteric LC. In Fig. 26, insertedbetween substrates 60 are ITO (indium tin oxide) electrodes 61, a display layer 62 and a light absorption layer 63, the display layer 62 that is the LC layer, is sealed at both ends by the sealant 64.

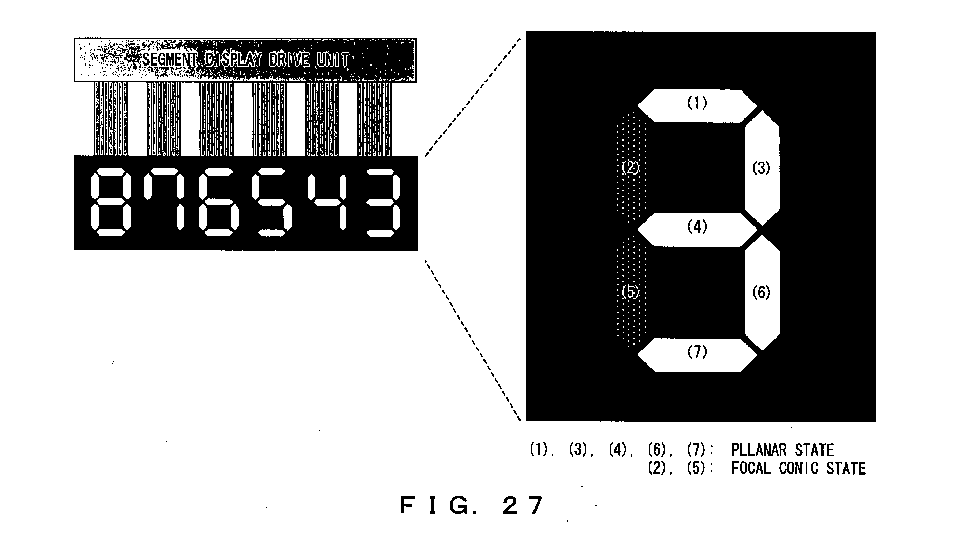

Fig. 27 describes an example of a segment display using the cholesteric LC. For example, in the display of the last digit "3", driving to make the segments (2) and (5) assume the focal conic state, and the other segments (1), (3), (4), (6) and (7) assume the planar state, thereby displaying the number 3.

The next description is of a comprisal of a display device using cholesteric LC. A cholesteric LC basically indicates a monochrome color of a certain color tone and, if two LCs mix, they end up mingling easily, resulting in an inability to reflect a desired color tone. That is, a mixture of two or more LCs makes either an intermediary color or a non-reflective state. Therefore, it is necessary to set up partition walls in a pair of facing matrix substrates so as to make a structure isolating adj acent pixels or in the unit of dots in order to keep a plurality of LCs from mixing with one another and inject the respective LCs from different inlets.

Although a capsule structure, to contain an LC in a capsule is being used as a method for separating LCs, the influences of the borders between capsules and thickness thereof bring forth a reduced contrast by optical noise and an increase in drive voltage, making them disadvantageous for a display apparatus. It is also very difficult to place desired capsules in desired pixels, whereas it is possible to accomplish a high contrast at a low cost by adopting a separation structure using partition walls as in the second embodiment.

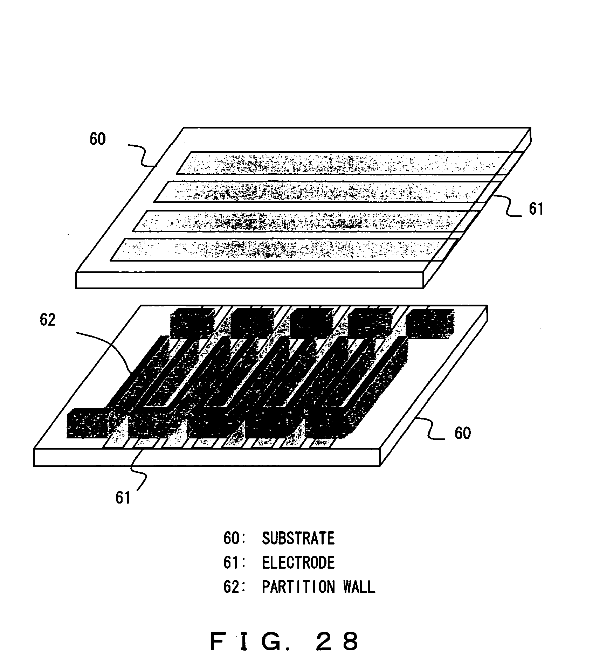

Fig. 28 shows an LC separation structure for a matrix substrate which is applicable to both a passive type simple matrix substrate and an active type matrix substrate for TFT, et cetera. In the second embodiment, a separation structure for inserting two LCs is exemplified by taking a passive type simple matrix substrate as an example. A partition wall 62 is featured for each line of electrodes 61 on the lower side of the substrate 60 in order to insert two LCs in adjacent dots. The opposing upper substrate 60 has electrodes perpendicular to those of the lower substrate 60, hence accomplishing a matrix drive. The partition walls 62 are made of a resin, which is not dissolved by the LC and are formed by photo lithography. While the partition walls 62 can be pressed against opposing substrates by keeping the inside of the cells depressurized, it is desirable to improve the durability by giving an adhesive property to the partition wall material to fix the opposing electrodes firmly. Since the partition walls are made of a resin, it is therefore possible to adhere them to the opposing electrodes by pressing or heat processing.

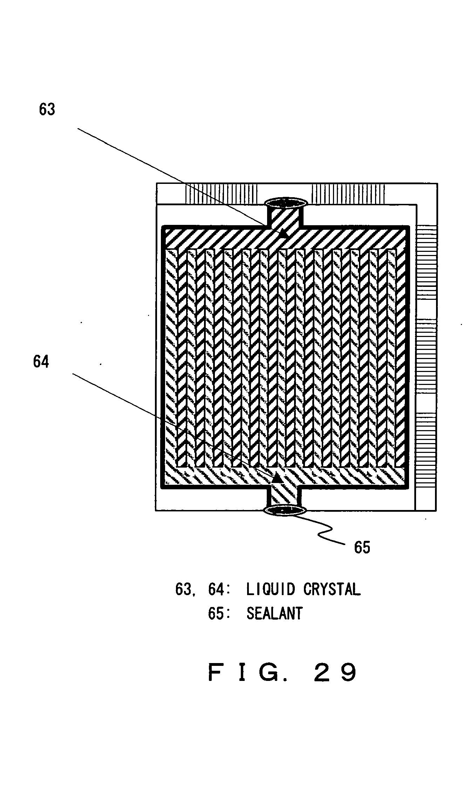

Fig. 29 shows a structure for separating two LCs 63 and 64, providing two inlets for avoiding mixing of LCs. A common filling method for a LC is to immerse it in an LC tank under vacuum conditions, followed by returning it to atmospheric pressure to complete the filling. This requires that two inlets must be formed on different edges of empty LC cells. The filling procedure is to, fill one LC, and seal it with a sealant 65, followed by filling the other LC. As shown by Fig. 29, it is possible to fill a different LC for each adjacent electrode line. It is then possible to display a full color and additive mixture of colors.

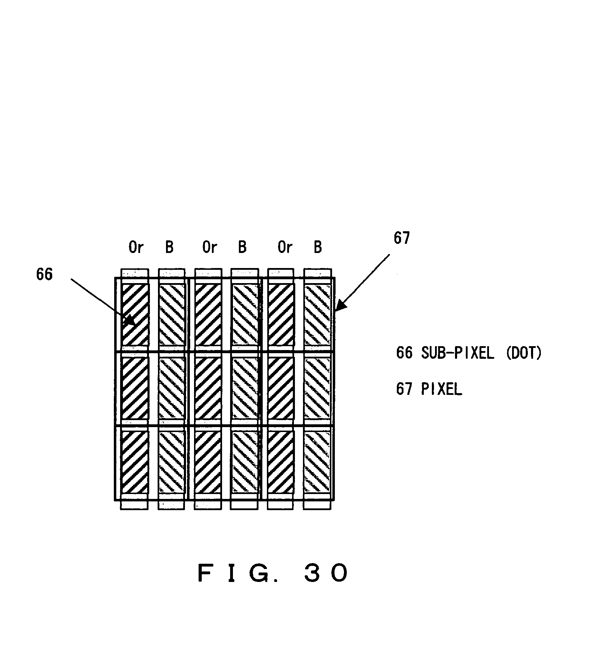

Fig. 30 exemplifies a comprisal of a pixel in the case of using two LCs 63 and 64 as shown by Fig. 29. As a display of white and black is desired by a display device, the two LCs here are complementary colors so that white can be made by the additive mixture of colors. For example, making orange and blue colors the reflected light of the respective cholesteric LCs will produce white. In Fig. 30, two dots 66 (i.e., sub-pixels) of orange and blue colors form a pixel 67. While reflected light of a cholesteric LC can be made an intermediate reflectance ratio by adjusting the applied voltage, thereby achieving a halftone display, the stable drive method is that of a binary display (i.e., the maximum and minimum reflectance) which can allow a wider tolerance of contrast against differences in thickness of the LC and precision of drive conditions of the two LCs. Incidentally, division of the LC in the transverse direction corresponding to the pixel 67 applies to one-line driving unit of the electrode 61 featured on the upper substrate 60 for the configuration shown by Fig. 28.

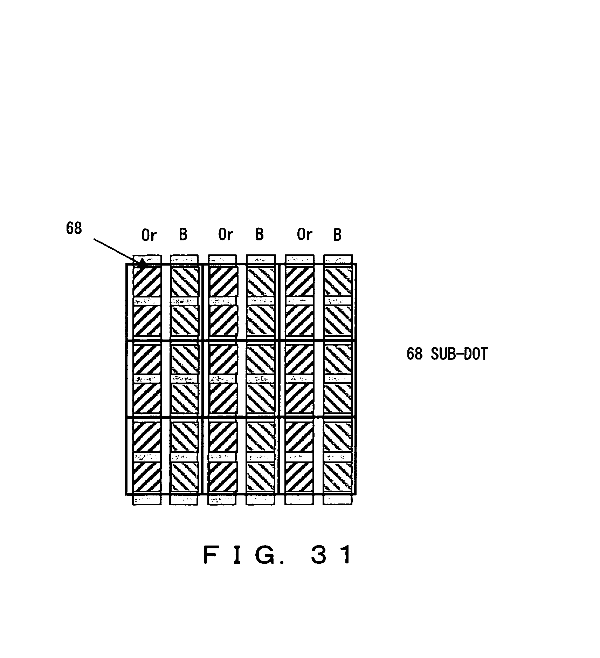

Accordingly as shown by Fig. 31, a further division of a dot makes sub-dots 68 which will, individually driven enable a halftone display. There are four colors, i.e., white, black, orange and blue, available in Fig. 30, whereas a nine-color display is now enabled by the configuration shown by Fig. 31.

Furthermore in Figs. 30 and 31, it is possible to display by driving the respective dots or sub-dots by the smallest drivable minimum unit as virtual pixel units. Without specific processing, a high-resolution image is formed, but either an orange or bluish color unevenness may be formed as a result of continuous dots of either color depending on the image. It is then possible to display a high resolution black and white image by image processing such that the number of each lighting color becomes approximately the same within an area in the range of several square millimeters, when displaying an image. For example, if the orange color appears continuously, dots nearby the orange dots will be replaced by a blue dot(s). This method regards a dot as a virtual pixel, thereby enabling a conversion to a high-resolution display mode in black and white display mode.

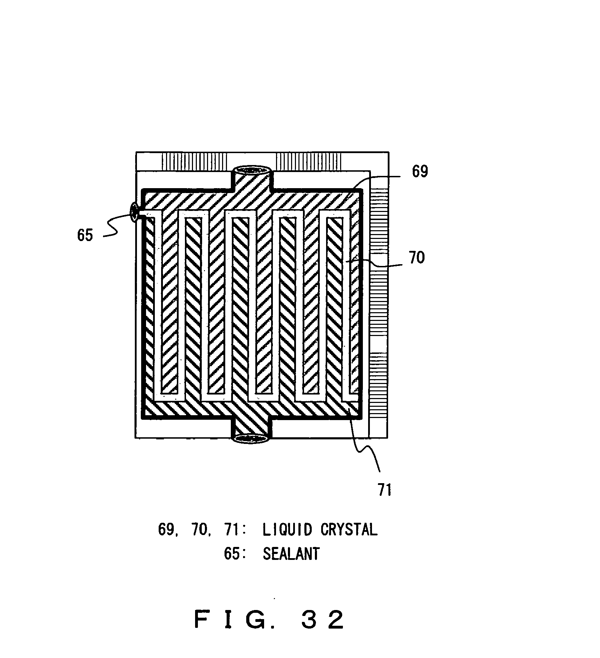

Fig. 32 shows an embodiment using three LCs, 69, 70 and 71. This exemplifies cholesteric LCs displaying by reflection three primary colors, R, G and B (red, green and blue, respectively). It used to be very difficult to insert three kinds of LCs separately in a substrate on one plane, but this inventor has discovered the possibility of inserting three kinds of LCs in a substrate on one plane in order to accomplish a dot array shown by Fig. 32 if a line structure is made up of a dot array having a cycle of "X, Y, Z, Z, Y, X" where one LC (Y) 70 is inserted between the other two LCs (Z) 69 and (X) 71 alternately. Such a dot array is laid out by two kinds of pixels made up of one pixel of RGB and one pixel of BGR (in the respective orders) . The resolution of G is high in terms of human perception and accordingly G-dots are arrayed in equidistance, while the colors R and B are low in the perceptive resolution, causing little problem if they are not arrayed in equidistance. Inlets are placed on the respectively different edges for avoiding a mixture of different color LCs.

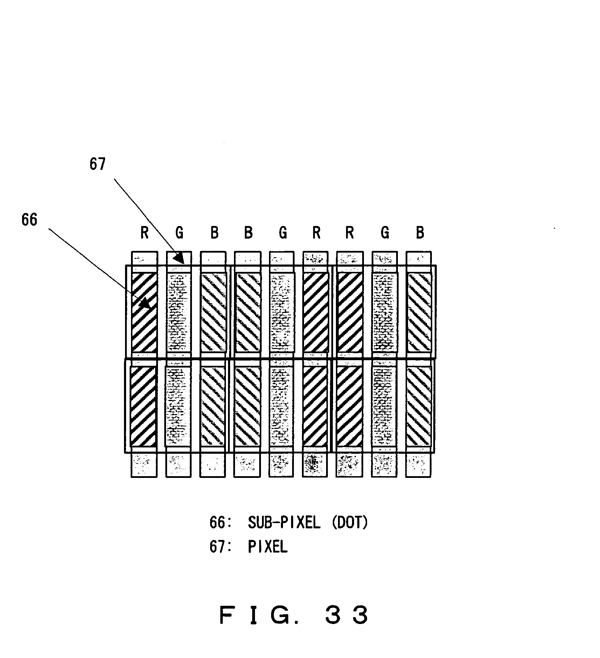

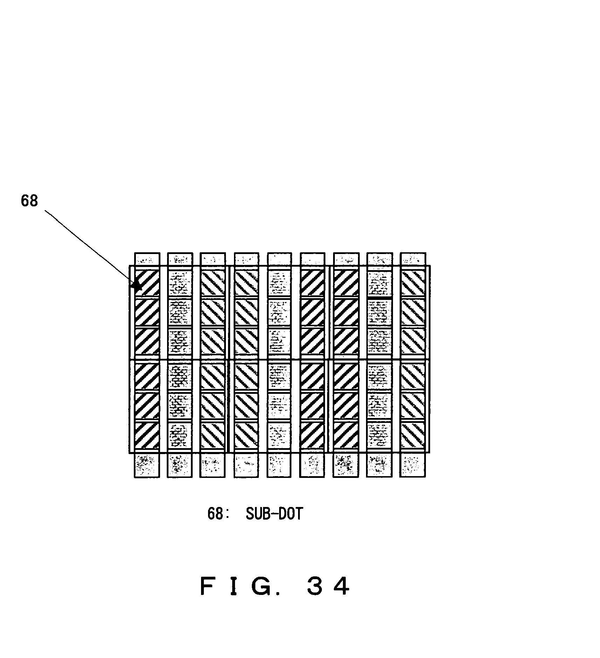

Figs. 33 and 34 show examples accomplishing a high resolution and halftone displays by further dividing dots to form sub-dots 68. Assuming a binary display as in the case of Fig. 30, the configuration of Fig. 33 enables an eight-color display, while the Fig. 34 enables a 64-color display. Moreover in Figs. 33 and 34, if the minimum drivable unit of respective dots or sub-dots is driven for display as a virtual pixel unit, a high-resolution image is formed as in the case of Figs. 30 and 31. Through image processing, a conversion to a black and white high-resolution display mode will be enabled.

The next description is of a display apparatus combining a display device using a cholesteric LC with a printed media using paper and/or a photograph. As described before, a cholesteric LC has two stable states, i.e., a planar state as a selective reflective state and a focal conic state as a substantially transparent state. A common display type has provided a bright display in the reflective state and a dark display in the transmissive state by placing a light absorption layer (i.e., black layer) under the LC element.

The cholesteric LC, however, allows a transparent state, that is, vision of a background in the focal conic state if a light absorption layer is not placed thereunder. Accordingly, utilization of the transparent state in the focal conic state and integration with a printed medium, e.g., generally a paper medium, enables a provision of an LCD apparatus capable of a wide application.

There have been proposals for restaurant menus, et cetera, as application examples for an electronic paper capable of a semi-permanent display, but where there is no need to change the display of the entire menu area. An image of merchandize for example can usually be a fixed display, while it is desirable to use a photograph for improving the image. The accompanying price and advertisement of "today' s special" for example should preferably be a variable display. Accordingly, the second embodiment is configured to accomplish an overlapping display form as a whole by combining an electronic paper media, such as a display device using a cholesteric LC, with a printed medium such as a photograph. An image of merchandize as printed material has a high degree of reality, while the price or advertisement content of today's special can be changed by using electronic paper, thus enabling an integration of paper and electronic paper.

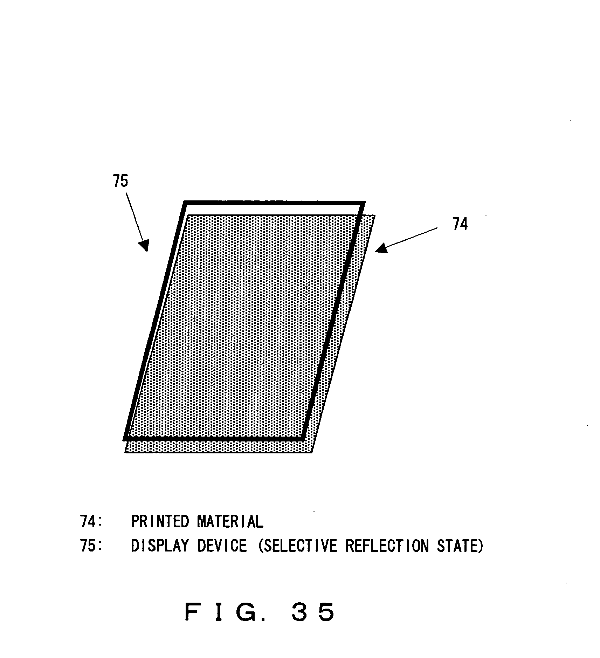

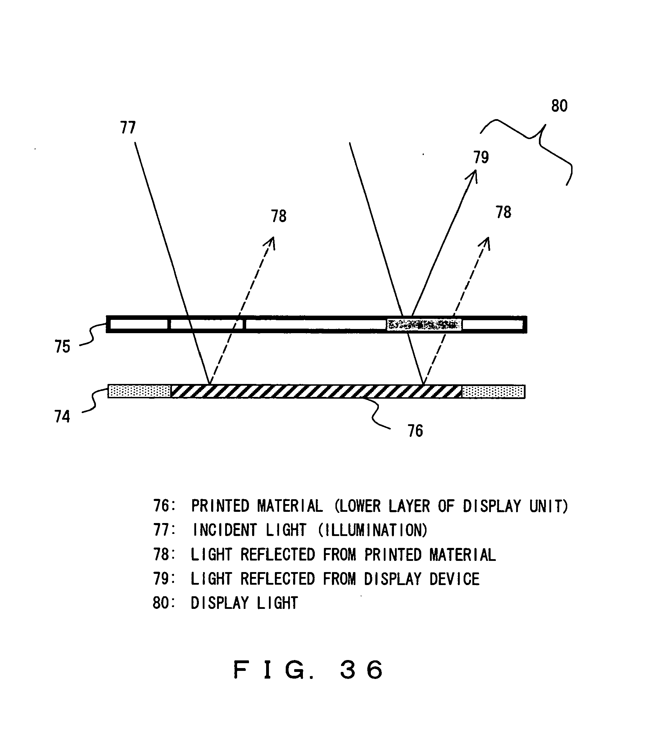

It is possible to accomplish a display suitable to the display content of the printed material by adopting for example a matrix display type for the electronic paper, which uses a cholesteric LC. Diverse application forms can be conceived by making printed materials as templates. For example, a use of a calendar as a printed material accomplishes a variable schedule chart by an overlapping display of the electronic paper with the calendar. Fig. 35 exemplifies an overlapping display of a printed material (e.g., photo) with a variable type display device using a cholesteric LC, overlapping a variable display device 75 on the surface of a printed material 74. The variable type display device is not formed with a light absorption layer. Fig. 36 describes a display state, showing a transmission mode (in the focal conic state), on the leftpartof the drawing, and reflection mode (in the planar state), on the right, of the variable display device 75 placed above the printed material 74. As incident light 77, illumination light, illuminates the display device, the light illuminates the printed material as it is in the transmission mode (shown on the left), the reflected light 78 is reflected according to the image of the printed material, and is thereby visible through the display device in the transmission mode. That is, the printed material is visible as is. In the reflection mode (shown on the right), light of wavelength according to the layer pitch of the cholesteric LC is reflected thereby while light of other wavelengths is transmitted through the LC to illuminate the printed material. The reflected light in accordance with the image of the printed material is reflected thereby, and hence transmitted through the LC in the reflection mode. This causes reflected light 79 reflected off the LC to overlap with the reflected light 78 reflected off the printed material, thus becoming the display light 80. This is how an integration of the printed material on a paper media with a good image quality with the display device of a variable display medium is achieved.

The LCD displays color in accordance with its layer pitch. This sometimes causes a reduced visibility of the printed material laid underneath, depending on the color thereof, requiring a consideration of the area for carrying out a variable display. Black is preferred for the area of printed material in order to improve the visibility by increased contrast. Also, the use of gray for reducing reflections will enable better visibility. Alternatively, coloring the area for changing the reflected light 78 to a specific color will make an additive color with the display device reflected light 79, thereby enabling a change of color. For example, setting the reflected light 79 of a display device to orange and the color of printed material to blue will make the displayed color white. Through various refinements of printed material, various colors can be given to each area. White is the most favored color. Setting the colors of printedmaterial and reflected light of the display device with the relation of complementary colors with each other accomplishes a white display. Orange and blue are complementary.

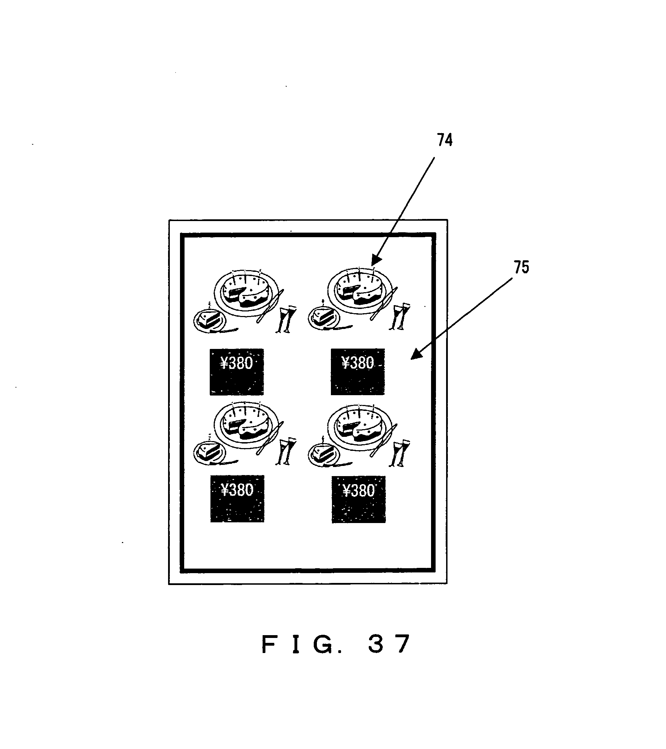

Fig. 37 exemplifies a display aiming at product sales such as a menu or a catalogue. A product image uses a printed material with a good display quality. For a restaurant for example, print an image that looks delicious to use as a fixed display. For other display, particularly for character display, use a variable display device. The printed part placed on the lower layer of the variable display device 75 uses a printing pattern, with good visibility, such as black. Such character displays can assume various displays such as price, discount merchandize, lunch menu for the day, information about store hours, banner ad. An online variation of display on the variable display device will bring about various applications, enabling customer-oriented custom menus including a limited time only price, inventory adjustment, change of today's specials, customer oriented ad display, groupdiscount, discount for female customers, family discount display, discount for member, discount for sponsor points. An in situ enlarged display for elderly people is also possible. Product images use high quality realistic images.

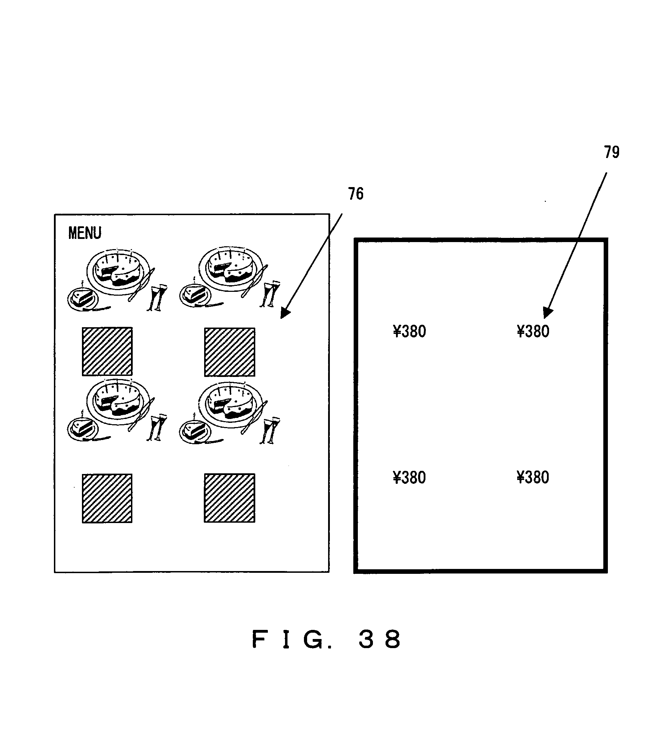

Fig. 38 exemplifies a restaurant menu, setting variable display areas below the respective images for displaying the prices. Fig. 38 describes printed parts and variable display parts separately. A change of images, such as by replacing the merchandize, can be achieved by replacing the printed material. The present embodiment is configured to allow easy attachment and detachment of printed materials. The variable display, utilizing a matrix type display device, is well suited to layout changes of the printed materials.

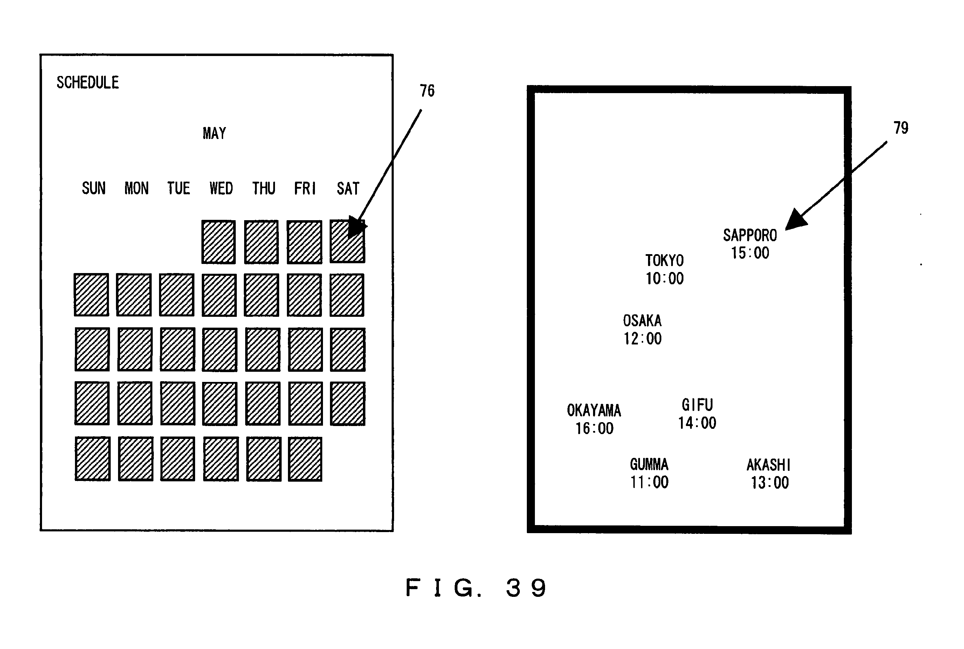

Fig. 39 exemplifies a schedule chart achieved by replacing the printed material shown by Figs. 37 and 38 with a calendar. The printed material is a calendar. A schedule is written in the variable display online. If online, a change in schedule can be entered at any time and it is easily possible to view the schedules of a plurality of personnel. A change in schedule can be reflected instantly. A common format and information sharing are enabled, realizing effective management. A change of months merely requires a replacement of the printed material, instantly becoming a new schedule chart. A hand written entry into the printed schedule, if required, is possible by easily detaching, annotating and re-attaching the printed calendar. The variable display device, being a matrix display device as with Figs. 35 through 38, allows for an easy change of layout reflecting the printed material. A certain pattern is printed on the printed material in consideration of the display areas. The schedule display part is printed by a certain pattern for giving good visibility such as black, gray or a complementary color.

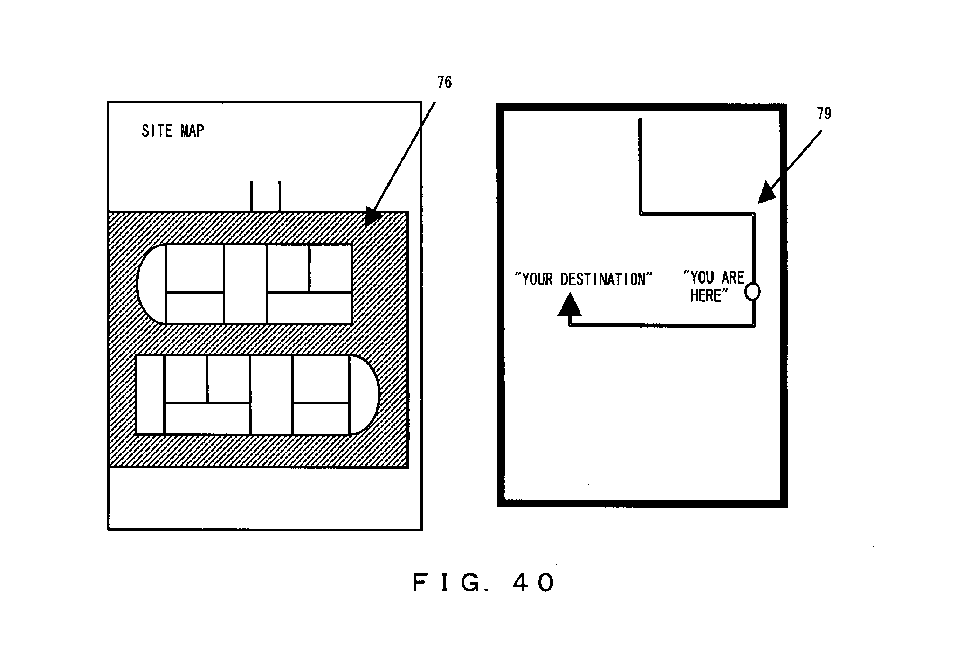

Fig. 40 exemplifies an application to a map display whose structure is the same as Fig. 39, et cetera. Theprintedmaterial is a layout chart including a road map, site map, plan view of premises, while the variable display unit is capable of displaying the current position (e.g., "you are here"), destination (e.g., "your destination"), passage history, et cetera. It is also possible to display an advertisement in association with the destination. Estimated times of arrival at transit points, which is onlypossible online, canbe displayed as well. A large change in destinations can be displayed by an easy replacement of the applicable maps. A use of such a display apparatus makes a remarkably convenient guide substrate. Fig. 40 exemplifies a site map. A distribution by changing printed materials specific for the customer/visitor is enabled. An equipping wireless display system will enable a display of the current position every time the bearer passes the respective gates. Useful information nearby the current position can also be displayed.

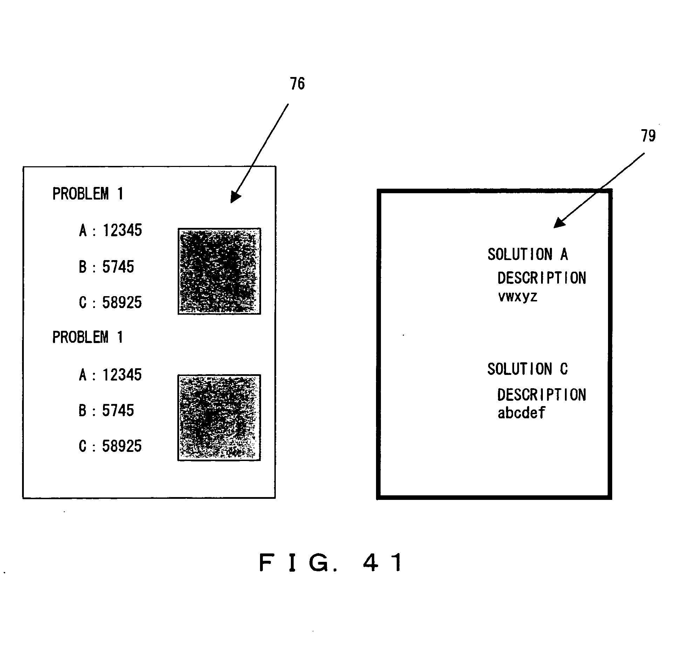

Fig. 41 exemplifies an application to a reference book or workbook. Exercise problems are printed on the printed material and the solutions and description will be displayed later. This gives a chance to read the solutions and description on the spot, providing a better understanding. A change of problems merely requires a replacement of the printed material. Fig. 41 exemplifies an exercise book. Unlike a personal computer (PC) monitor, a reflective display apparatus causes much less fatigue, helping an effective understanding.

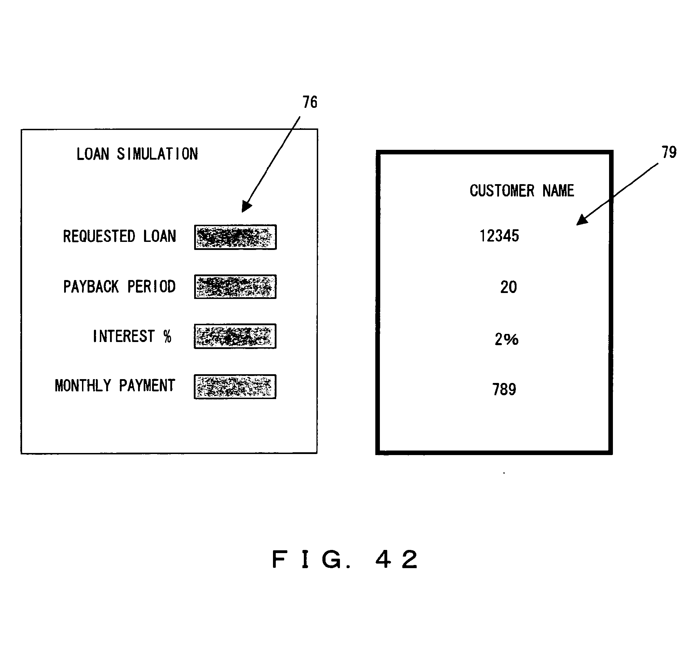

Fig. 42 shows an example application to a display for simulation used by a financial institution such as a bank or insurance company. Common items are printed on the printed material and customer data for the customer will be displayed online. Availability of simulation results on the spot allows a simple explanation for the customer. A change of products merely requires an easy replacement of the printed materials. Fig. 42 exemplifies an application to a bank loan simulation. An insurance sales representative sometimes visits a customer carrying a laptop PC. Occasional explanation by using a PC display is hard to visualize especially for the customer for who it is hard to understand. A use of the display apparatus according to the present second embodiment provides good visibility, helping the customer understand the explanation easily.

As described so far, the second embodiment enables accomplishment of multi-color display by injecting a plurality of color LCs in a matrix display device using a cholesteric LC. The use of simplified components having a reduced number of border surfaces and a high contrast makes it possible to accomplish a cost reduction.

Also, the combination of a cholesteric LC matrix display device, as a variable display device, with a printed material, as a fixed display device, integrates an electronic paper with paper, making it possible to bring out the characteristics of the electronic paper and paper to the largest extent. Making printed material as a template and only replacing content thereof with new content by detaching from, and attaching to, the variable display device enables the development of various applications. A database storing the templates for printing materials enables layout change, content change and update of the display device instantly. The variable display device is durable enough for many times of use, hence reducing cost. The fixed display device may be hand-written, in place of printed material, and an overlapping display is also possible by placing a cholesteric liquid crystal display device on a picture painted on a wall of building.

The next description is of a third embodiment. In using a non-powered display card as described in the first embodiment for accomplishing a semi-permanent data display for example in the present embodiment, various control methods are required for a power supply circuit since electric power supplied from a noncontact IC card reader/writer for example is small. Such a control for the power supply circuit is described as the third embodiment.

As described in relation to Figs. 23 and 24, two kinds of voltage values are required to drive the cholesteric LC for the planar and focal conic states respectively. Moreover, the drive voltage for the planar drive is approximately 40 volts, substantially higher than that of other display devices. A use of a common DC/DC converter for example will require a large capacitance capacitor of micro farad order, making it extremely difficult to limit the thickness of a power supply circuit to within about 1 mm, that is, the thickness of a non-powered display card.

Accordingly, the third embodiment is configured to use a power supply circuit for generating a high voltage of about 40 volts by an ultra-thin circuit through utilizing a high frequency magnetic field used to supply a signal and power for a noncontact IC card or RF tag, instead of using a DC/DC converter.

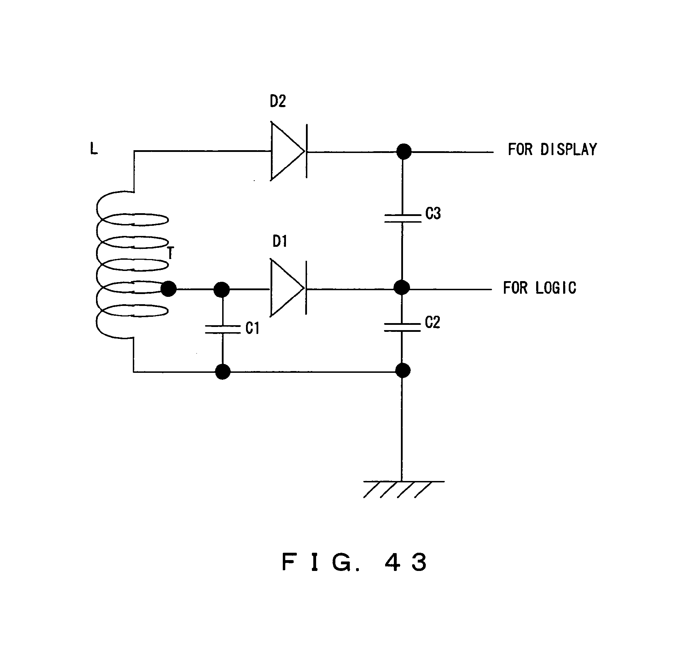

Fig. 43 exemplifies such a power supply circuit, which works as the power supply for display such as power for logic use by an LCD driver and the power supply for the display device per se, that is, for display power required by the cholesteric LC.

The configuration shown by Fig. 43 provides an intermediate tap T in a coil which, having an inductance L, produces a voltage induced by a high frequency magnetic field from a noncontact IC card for example, grounds one end of the coil, connects a capacitor C1 for resonance between the intermediary tap T and the ground, supplies a voltage for logic by way of a half-wave rectifier, and supplies a voltage for display through a half-wave rectification, instead of connecting a capacitor for resonance between the other end of the coil and the intermediary tap T. As described, connection of a capacitor for resonance between an intermediary tap for extracting a voltage for logic and the ground enables variance in production to be minimized and a supply of stable DC current.

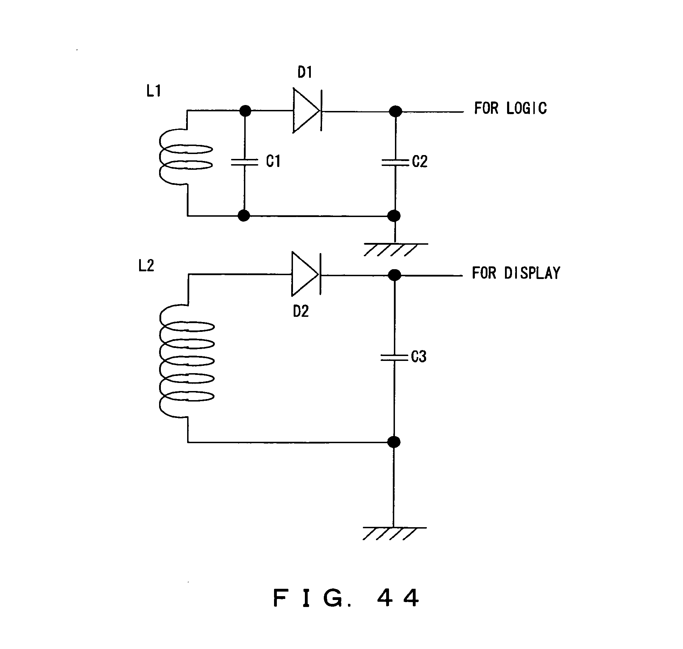

Fig. 44 exemplifies a power supply circuit furnished with independent power supplies for logic and display uses, respectively, in place of installing an intermediary tap as with the configuration shown by Fig. 43. The upper part of Fig. 44 is a power supply circuit for logic, which can be considered to make the lower part of Fig. 43 independent. In a common noncontact IC card, the value of L1 for receiving power is 1.4 $\mu$H for example, and, by using C1 of 100 pF for example, a voltage for logic use of 5 volts can be obtained. Although the use of a DC/DC converter will obtain a display-use power supply voltage by stepping up the aforementioned voltage, a large capacitor of the $\mu$F order will be required as described before. Accordingly, a use of approximately L2 = 4 to 5 $\mu$H, for example, obtains the display-use voltage.

Next, a passive matrix drive circuit for example requires the application of voltages to LC cells on the selected level scanning line for the planar and focal conic drives, respectively, while a voltage to LC cells on the unselected level scanning line so as to keep a state of writing at selection independent of the segment line level. That is, the applied voltage is to suppress a common cross talk, thus requiring five kinds of voltage values in the application of commercially available STN LCD driver LSI for example.

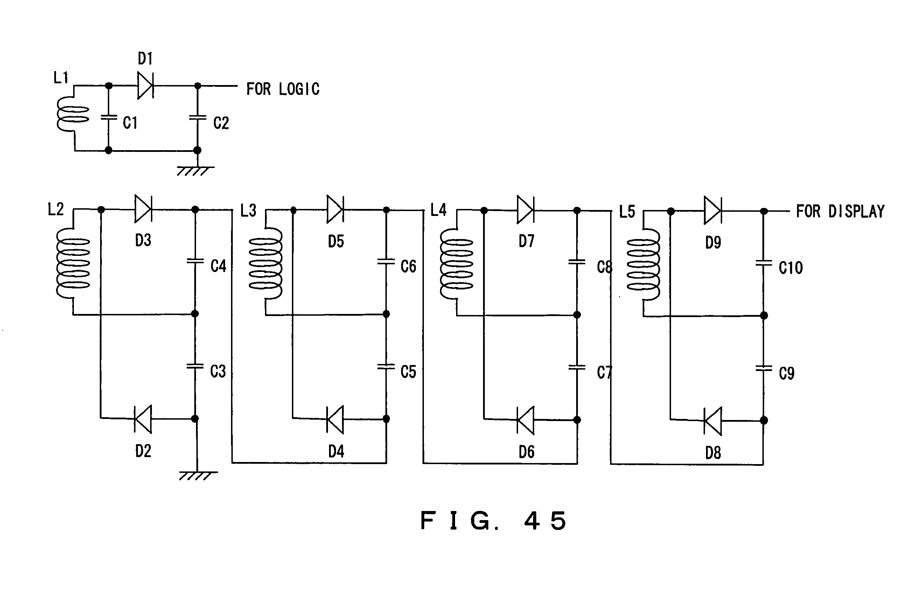

Fig. 45 exemplifies a configuration of power supply circuit for such a case. The power supply circuit for logic use is the same as in the case of Fig. 44, whereas that for display use utilizes a circuit with a power supply circuit applying double voltage rectification being connected serially in multiple stages, in place of the power supply circuit shown by the lower part of Fig. 44. It is possible to supply five different voltages for example by taking out voltages from suitable parts in accordance with the required voltages. Both half wave and full wave rectifier circuits can be applied to the rectifier circuit. Incidentally, if there is a need to prevent an over-voltage in the circuits shown by Figs. 43 through 45, the insertion of a Zener diode in parallel between a voltage output terminal and the ground will be able to improve a reliability of the power supply. Note also that the coils L2 and L4 are wound in the same direction while the coils L3 and L5 are wound in the reverse direction to the aforementioned two coils of the four coils as shown in Fig. 45. This is because a result of experiments has revealed that such coils wound in different directions provide a higher voltage.

Next, when using a noncontact IC card for example as a non-powered display card, the supplied electric power from a noncontact IC card reader/writer varies greatly depending on the type thereof, the distance between the noncontact IC card reader/writer and the noncontact IC card. This may bring forth the possibility of shortening a communicable distance substantially as compared to that of a common noncontact IC card without a display unit, or the operation becoming unstable due to power shortage during communication, if the display unit on the card is operated continuously. The third embodiment accordingly limits a display function in response to supplied electric power as a countermeasure to the above-described problem.

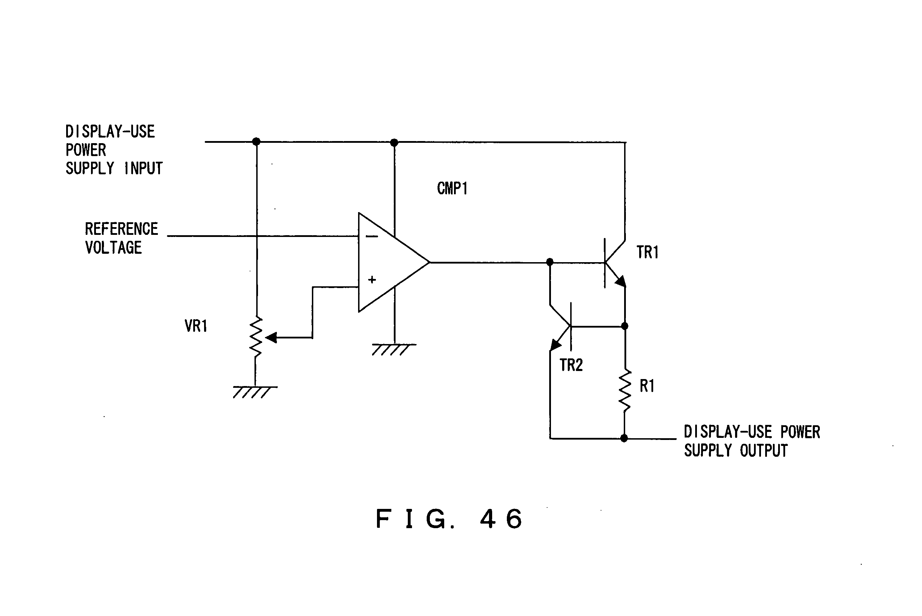

Fig. 46 exemplifies a configuration of a circuit for completely shutting off a power supply to a display unit according to a display-use power supply input voltage value in response to a supplied electric power from a reader/writer for example. In Fig. 46, a comparator (CMP1) compares a voltage from VR1, which is a result of dividing a display-use power supply input voltage, with a reference voltage and if the display-use power supply input voltage is higher, an output of the CMP 1 becomes a high (H) . A circuit comprising a TR1, TR2 and R1 is a common current limiter circuit by which a display-use power supply output is supplied if an output of the CMP1 is H, whereas the display-use power supply output is completely shut off if the output of the CMP1 is low (L). By setting the reference voltage appropriately, the power supply to the display unit is totally shut off by utilizing the current limiter circuit if the power supply amount, that is, the display-use power supply input voltage is barely at the required value even though the noncontact IC card chip operates.

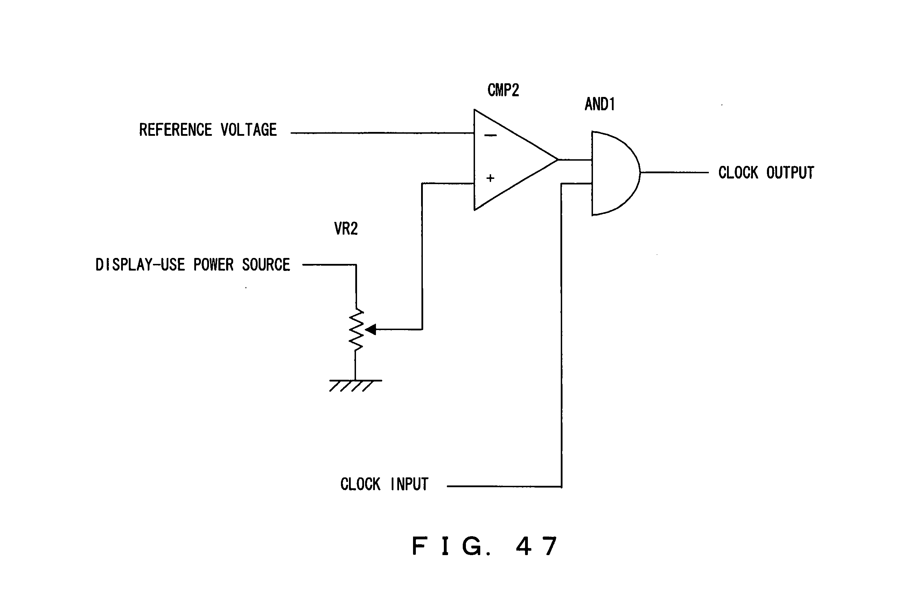

Fig. 47 exemplifies a configuration of a clock output circuit for extending an average drive cycle of a display unit in accordance with a supplied electric power to a noncontact IC card for example. This circuit extends an average clock cycle in accordance with the supplied electric power to delay the drive cycle of the display unit if the supplied electric power is sufficiently larger than the minimum value required by the noncontact IC card chip, that is, the required value for operation and yet smaller than the average required value for operating the display unit as well in the steady state.

In Fig. 47, if the display-use power supply voltage value divided by VR2 is small, the output of CMP2 becomes L, hence stopping clock output as an output of the gate AND1. For example, in the display-use power supply circuit described in Fig. 44, the clock output resumes as a result of the clock being stopped to shut off the electric power supply, followed by charging the capacitor C3 to recover a display-use power supply voltage. A repetition of such cycles extends the clock cycles, that is, delays the average drive cycle of the display unit.

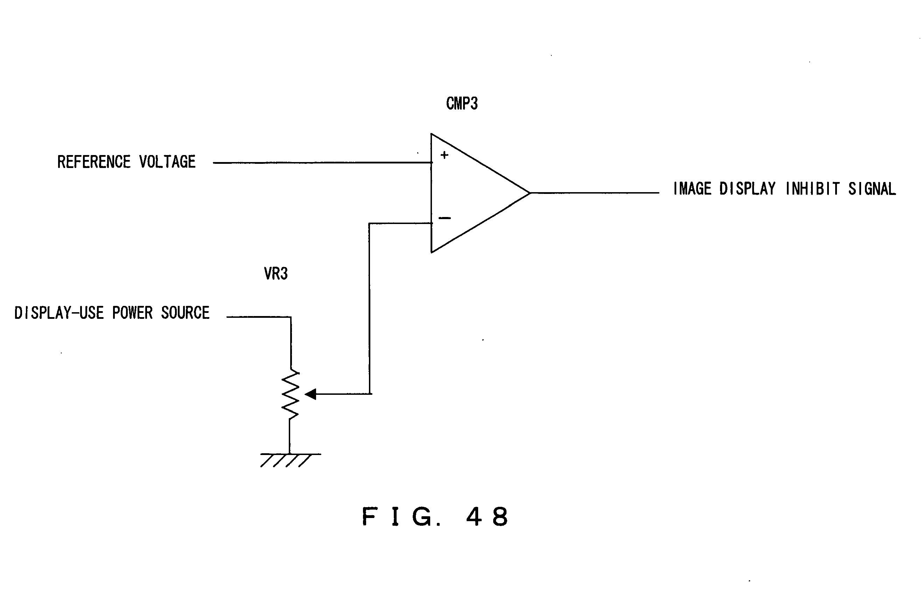

Fig. 48 exemplifies a configuration of a circuit for outputting an image display inhibit signal in order to make the display unit display character data only and not image data in accordance with supplied electric power. This circuit is to display character data only and not image data, thus limiting a display function, if a supplied electric power is larger than the minimum value required by the noncontact IC card chip and yet much smaller than the average required value for operating the display unit as well in the steady state. In Fig. 48, if the display-use power supply voltage value divided by VR3 is smaller than a reference voltage, the output of CMP3 becomes H, thereby outputting an image display inhibit signal.

The next description is of current limiting for a display-use power supply. It is possible to drive a passive matrix type cholesteric LCD panel by an existing driver LSI used for a passive matrix type STN LCD by using the above described power supply circuit. Power supplied from a noncontact IC card reader/writer having a very small output power can operate the aforementioned passive matrix type cholesteric LCD panel, except for when starting up. Such an existing driver LSI, however, assuming use for displaying a moving picture, has a transistor on the last stage with a low conductive impedance so as to allow an extremely large surge current (i.e., a magnitude of five to ten times the steady state) in a transition state at the start. Due to this, it may not be possible to start an existing driver LSI even with a current several times the steady operation state.

But, preparing a large power supply just for starting is tremendously disadvantageous in terms of cost. Besides, it is just impossible to supply electric power of the magnitude of five to ten times the steady state operation by way of an existing noncontact IC card reader/writer having a very small output power. Accordingly the third embodiment is configured to limit the current for a display-use power supply in order to start up an existing driver LSI stably by supplying power as close to the power consumption in the steady state as possible.

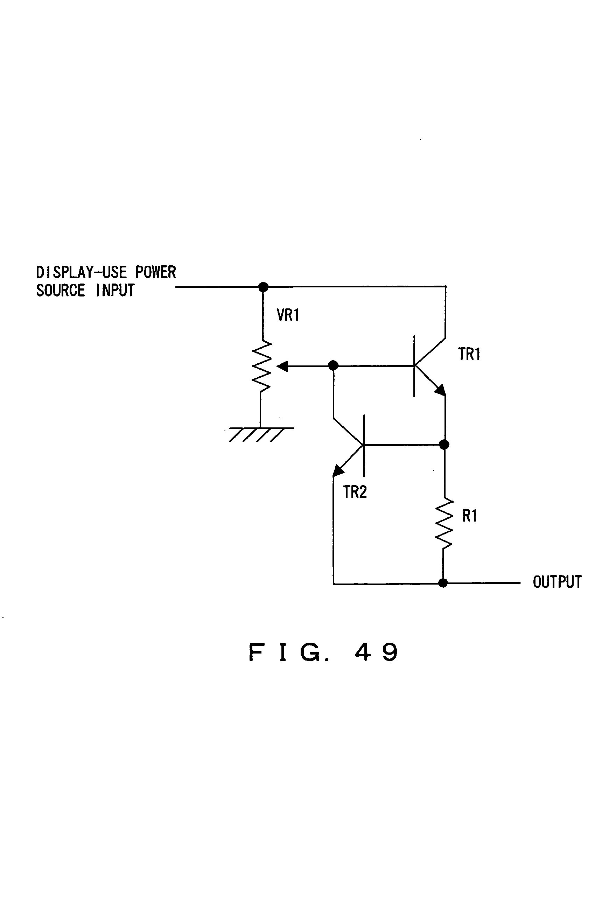

Fig. 49 exemplifies a configuration of a current regulation circuit for a display-use power supply. In Fig. 49, current regulation for the display-use power supply is carried out if a voltage drop value of a logic power supply drops more than five percent, for example, of the nominal value by setting up the value of VR1 so as to carry out the current regulation when the logic power supply voltage assumes a prescribed value or less.

Meanwhile, at startup, stopping clock output until the voltage value of the display-use power supply exceeds a prescribed value by using the same circuit as Fig. 47 enables a stable and quick startup of the existing driver LSI, since the display-use power supply voltage generally increases with time monotonically. In this case differ from explanation of Fig. 47, just because the display-use power supply voltage increases monotonically, the clock will be stopped until the aforementioned value exceeds a prescribed value, e.g., 95% of the standard value.

In an existing common LCD driver LSI, a display-use power supply current may sometimes exceed the average current for the steady state operation depending greatly on the display pattern, not just at the startup. An interruption of display panel drive until the display-use power supply voltage recovers to a prescribed value by regulating the current as with the startup will enable stable operation of the existing driver LSI.

The next description is of temperature compensation of the drive characteristic for the cholesteric LC according to the third embodiment. The cholesteric LC requires two drive waveforms with different peak values corresponding to the planar and focal conic states, in which the peak values further changes with temperature. Consequently, a temperature compensation for changing a peak value corresponding to temperature is necessary for widening an operating temperature range. The third embodiment is configured to secure a margin of peak values in a wide operating temperature range by changing the peak value of the drive waveform linearly with temperature.

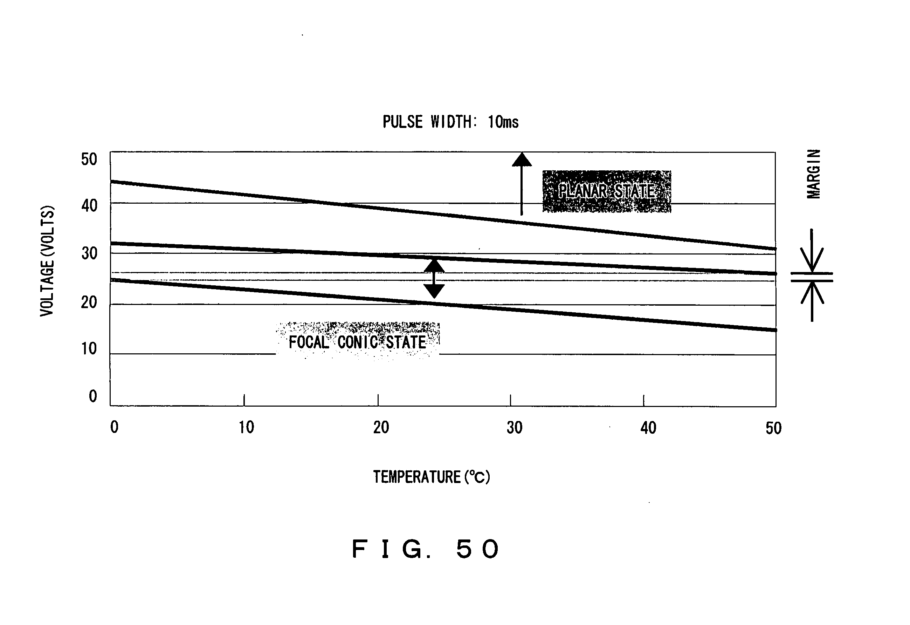

Fig. 50 exemplifies peak values in the planar and focal conic drive waveforms for a cholesteric LC in the case of a 10 ms pulse width. Because a peak value of a certain level or higher invariably transitions to the planar state, a peak value for the planar state is expressed by one curve corresponding to the minimum value therefor. Vis-a-vis the above, because a transition to the focal conic state occurs within a certain voltage range of peak values, a peak value for the focal conic drive is expressed by two curves corresponding to the lower and upper limits, respectively, therefor.

Referring to Fig. 50, the margin of peak value for driving to the focal conic state is narrow across the temperature range because the peak values corresponding thereto change with temperature greatly.

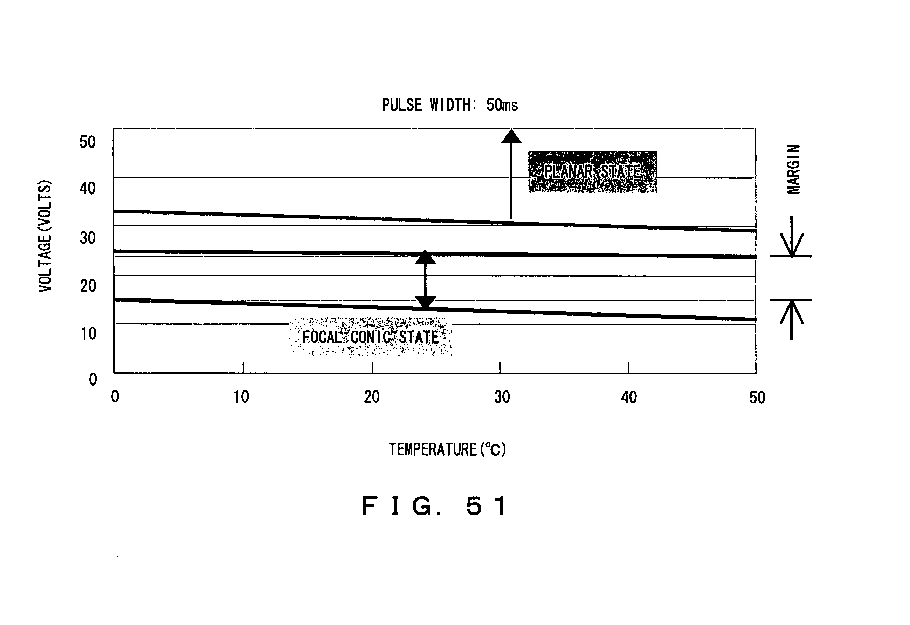

Compared to the above, it is known that the margin of peak values for the focal conic drive becomes wider with pulse width. Fig. 51 exemplifies peak values for the planar and focal conic drives in the case of a 50 ms pulse width. The margin of peak value becomes several times wider as compared with the case of the 10 ms pulse width shown by Fig. 50, but the display speed decreases to one fifth.

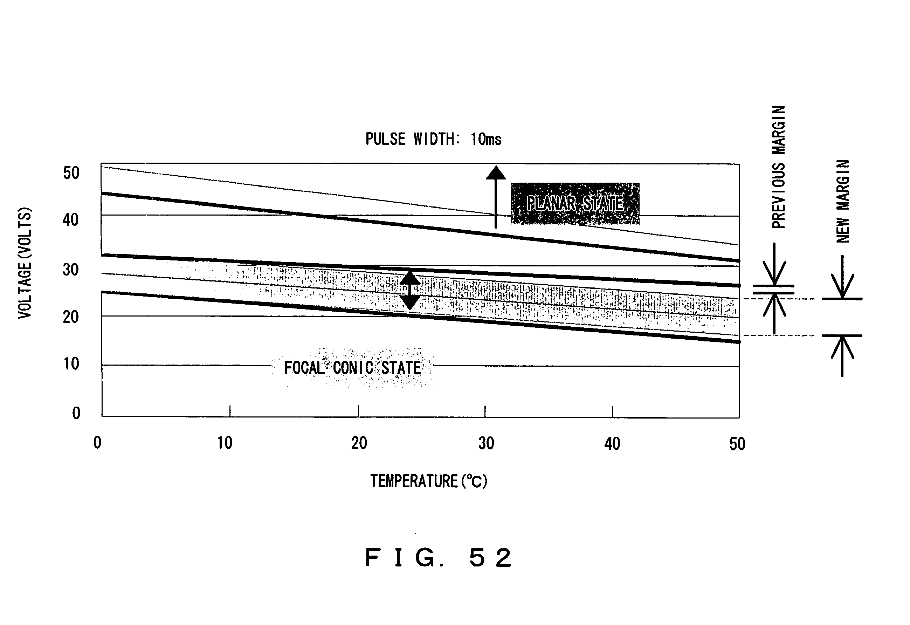

Fig. 52 exemplifies peak values of two drive waveforms, i.e., in the planar and focal conic drives, being respectively changed linearly with temperature. Comparing with Fig. 50, three curves are drawn between the upper and lower limits for the focal conic state, the center line of which is the straight line connecting the average of the upper and lower limit values of the peak values for the focal conic state at the lower limit within the operating temperature range, i.e., 0°C, and that at the higher limit, i.e., 50°C.

The third embodiment is basically configured to use the centerline for changing the peak value of the drive waveform in terms with respect to temperature for the focal conic state. The new margin of the peak value, required to fall between the upper and lower values for the focal conic state as shown by Fig. 50 to begin with, results in being larger than in the case of Fig. 50. That is, within the above-described three lines for the focal conic state, the upper line is the maximum value of the peak value within the margin, while the lower line is the minimum value of the peak value within the margin. The values within the margin relative to the three lines are minimum 25.4 volts, maximum 32.6 volts and average 29.0 volts at 0°C; and minimum 15.9 volts, maximum 23.7 volts and average 19.8 volts at 50°C.

In Fig. 52, for the peak value of a drive wave form for the planar state in the third embodiment, it is possible to change a value, either by adding a prescribed value to the peak value of the drive wave form for the focal conic state at the same temperature or by multiplying a prescribed value therewith, with respect to temperature. The aforementioned characteristic is shown by the line drawn above the planar state in Fig. 52. Incidentally, the value of this line at 0°C is 49.3 volts which is 1.7 times the average value, i.e., 29.0 volts, of the three lines corresponding to the focal conic state. Meanwhile, the value is 33.66 volts at 50°C, which is 1.7 times average value corresponding to the focal conic state, i.e., 19.8 volts.

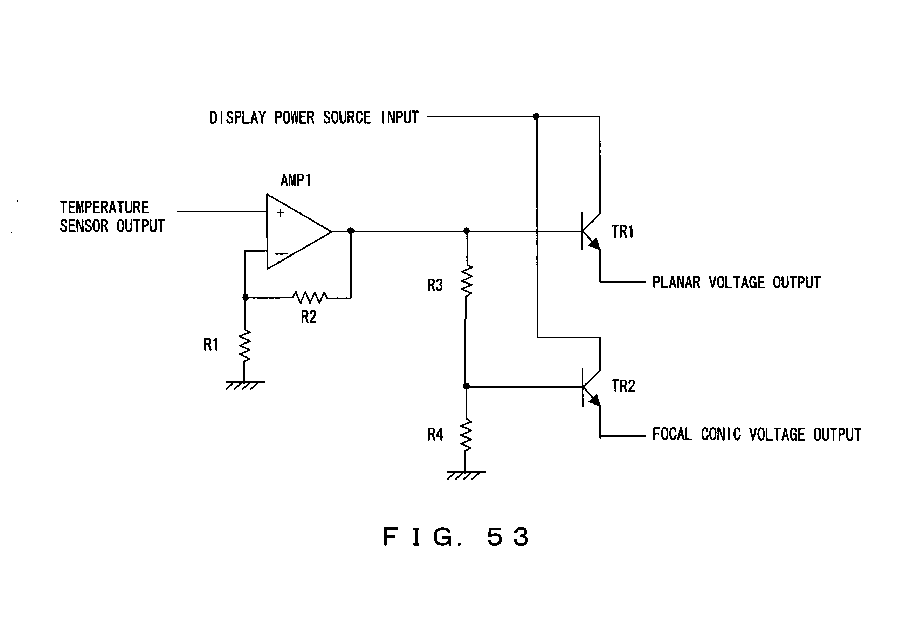

Fig. 53 exemplifies a configuration of temperature compensation circuit for voltage peak value of the planar and focal conic drive described in association with Fig. 52. In Fig. 53, the AMP1, that is, the amplification ratio of the amplifier receiving the temperature sensor output is equal to R2/R1 (i.e., R2 divided by R1) whose value is 1.7.

A sensor output at a certain temperature is computed by an arithmetic circuit, not shown, and so the output values thereof at 0°C and 50°C are equal to the indication value of the average of the three lines for the focal conic drive described in Fig. 52. That is, the sensor output values are 29.0 volts at 0°C, and 19.8 volts at 50°C. Accordingly, the AMP1 output is 49.3 volts at 0°C, and 33.66 volts at 50°C. These values are equal to the values on the temperature compensation characteristic line for the planar state described in association with Fig. 52.

The TR1 and TR2 each constitute an emitter follower circuit for adequately lowering the output impedance, with each emitter voltage, that is, the output value for the planar voltage for one, and the focal conic voltage for another, are lower than the respective transistor base voltages by about 0.7 volts. Therefore, the planar voltage output value at 0°C is about 48.6.volts (= 49.3 - 0.7) and at 50°C is about 33.0 volts (= 33.66 - 0.7) which are adequately higher than the minimum value of the peak value of the drive voltage waveform for the planar state, that is, the minimum voltage, i.e., 43.3 volts at 0°C and 30.9 volts at 50°C, for the planar state described in association with Fig. 50.

The base voltage of TR2 is the value R4 times the output voltage of AMP1 divided by (R3+R4). The value of this coefficient is equal to 1/1.7 which is the emitter voltage of TR2, that is, the output value of the focal conic voltage being 28.3 volts (= 29.0 - 0.7) at 0°C, and about 19.1 volts (= 19.8 - 0.7) at 50°C. These values are represented by the three lines described in association with Fig. 52 and are sufficiently larger than the minimum voltage (25.4 and 15.9 volts, respectively) for the focal conic state, and sufficiently smaller than the maximum voltage (32.6 and 23.7 volts, respectively). Also, it is possible to secure the same margin with the pulse width at 10 ms as with 50 ms by changing the peak values of the drive wave form for the focal conic state linearly in terms of the operating temperature of the LCD cell as described above. In other words, it is possible to secure the same value as the margin for the peak value despite the display speed being five times higher and operate the display apparatus using the cholesteric LC stably over a wide temperature range.

While the descriptions of the third embodiment have so far been ranging from the power supply circuit, display function limit circuit, and display-use power supply current regulation circuit for a noncontact IC card, to the temperature compensation circuit for a cholesteric LC drive voltage, these circuits will actually be used in combination of some of them, rather than as individual circuits independently. Such combinations can be made possible by selecting some circuits on an as required basis.

It is also possible to determine the values of devices and reference voltages for each circuit relatively easily. While a detailed description such as the determination of resistance values has been given herein for the temperature compensation circuit shown by Fig. 53, the operation of the current regulation circuit described for Fig. 49 for example can be found in a common handbook or the like, enabling values for devices to be determined easily.

As described above, the third embodiment accomplishes a substantial cost reduction and slimming of power supply circuit for a display panel using a cholesteric LC for example, avoidance of shortening a communicable distance or operational instability by limiting the display function in response to the supplied electric power and stable and quick startup of an existing driver LSI through regulating the current of a display-use power supply at startup, thereby increasing applicable ranges of mobile equipments greatly.

The subsequent description is of a fourth embodiment concerned with a drive method for an LCD device and an image display method used in a display apparatus using a semi-permanent memory capable display device such as a cholesteric LC device. In the fourth embodiment, the ensuing description deals with a drive method and image display method for carrying out an LC device drive and image display with the smallest possible power consumption in order to use a display apparatus, for which a cholesteric LC is utilized for example, in a non-powered condition.

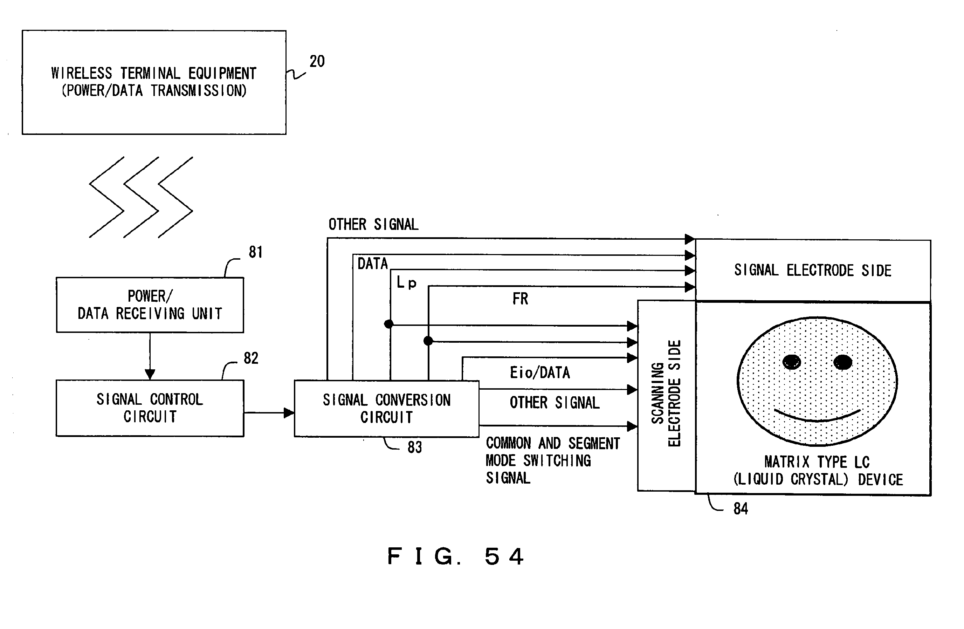

Fig. 54 is a block diagram showing a driver for driving an LCD device, such as a matrix type LCD device, according to the fourth embodiment. The comprisal of the driver per se is approximately the same as that of a commercially available existing STN common driver for example. The characteristic of the fourth embodiment is in its drive method rather than the comprisal of the driver as a characteristic of the present invention.

Referring to Fig. 54, a power and data receiving unit 81 receives power and data sent from wireless terminal equipment 20 transmitting the power and data or an IC card reader/writer, a signal control circuit 82 controls a signal conversion circuit 83 in response to the received result for driving and displaying a matrix type LC device 84.

The matrix type LC device 84 comprises a scanning electrode for commonly selecting a line and a signal electrode for providing data, with the scanning electrode receiving a polarity reversed signal FR for the purpose of making a drive signal an alternating signal for the LC device, an Eio signal as a line selection signal, an Lp signal for the purpose of latching data over at the signal electrode and shifting a scanning line, et cetera; and with the signal electrode receiving a data signal used for writing in addition to the aforementioned FR signal and Lp signal.

The scanning electrode usually receives the Eio signal for selecting a scanning electrode for the purpose of writing data line by line from the top line, whose mode is called a common mode herein. Comparably, it is also possible to provide data to be called a segment mode for the purpose of writing data on a discretionary line in lieu of writing data line by line from the top line and also a signal for switching these two modes.

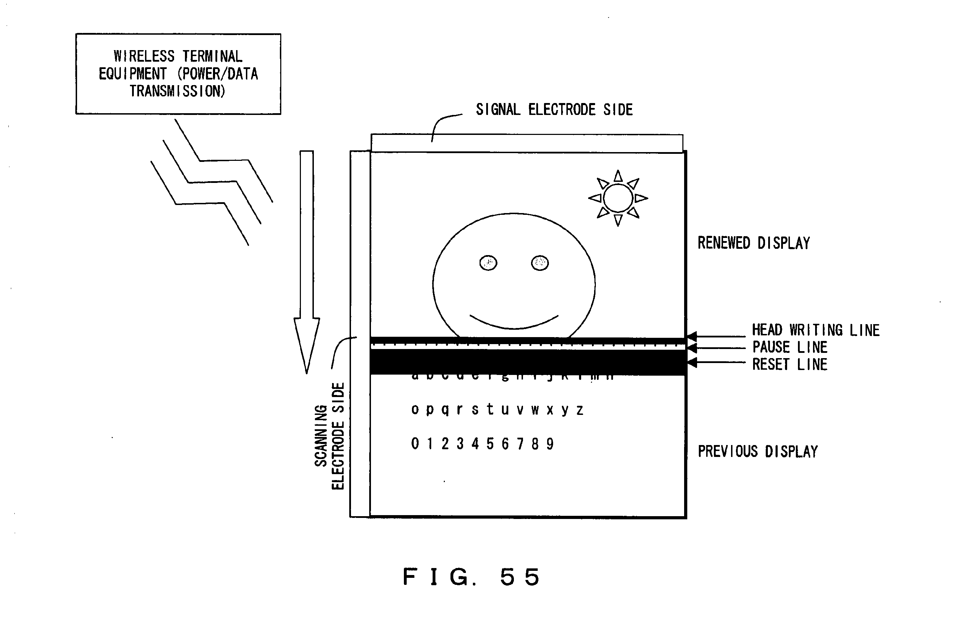

Fig. 55 describes a screen rewriting method according to the fourth embodiment. A conventional common method has been to reset the previous display screen in bulk when rewriting a screen, which consumes power on the order of at least tens milli-Watts (10s mW) at the reset, resulting in a noncontact IC card consuming the power substantially larger than the power supplied from an IC card reader/writer, e.g., five to ten mW, making it very hard to carry out a reset in bulk by a non-powered display apparatus.

Accordingly, the fourth embodiment is configured to reset in units of several lines such as by four lines to repeat the operation of writing data for one line simultaneously with rewriting the screen, thereby suppressing the power consumption; and use rewriting data per se as the reset-use data for resetting, rather than using specific reset data such as converting all the pixels to white.

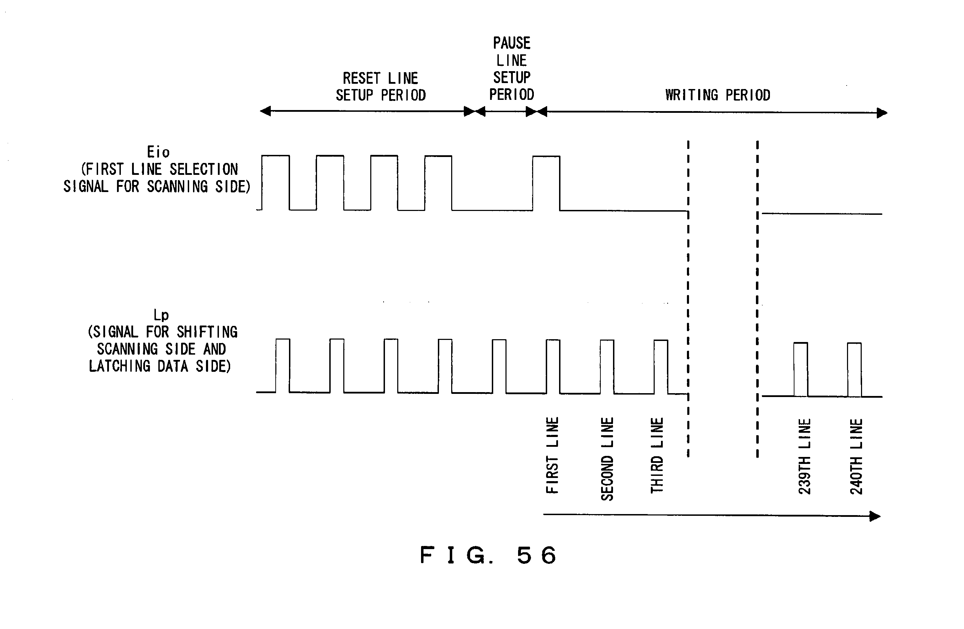

Referring to Fig. 55, the bottom half of the screen shows the screen of the previous display and the top half the screen of the updated display, showing the state of the head writing line, starting from the top line progressing line by line, as described above, to the approximate center of the screen, while reset lines, e.g., four lines, are being reset by using the writing data at the same time that the data writing progresses on the writing line. This operation will be described in more detail by referring to Fig. 56.

Referring to Fig. 56, the first operation is to set four lines as reset lines. In Fig. 56, as Eio and LP signals are inputted simultaneously, the first line from the top of the screen shown by Fig. 55 is selected, and the state becomes ready for writing data on the line. Next, as the second pulse of the Eio and Lp signals are both inputted, the initially selected first line is shifted by the Lp signal so as to select the second line and at the same time the first line is selected by the simultaneously inputted Eio signal, thus the state is now such that the two lines, i. e., the first and second lines, are selected . A repetition of this operation achieves a state of one to four lines being selected within the reset line selection period, hence allowing data writing in the four lines.

The subsequent pause line setup period is only inputted byanLpsignal, thereby shifting one line, thus the second through fifth lines in the screen assume the state of being selected.

In the beginning part of the subsequent writing period, Eio and Lp signals are simultaneously inputted to shift the previously selected second through fifth lines by one line respectively so that the third through sixth lines assume the state of being selected and at the same time input of an Eio signal makes the first line in the screen, that is, the first line also assumes the state of being selected. Providing data meant for the first line in this state causes the data itself to be written therein and at the same time the same data meant for the first line is provided to the third through sixth lines for resetting the previously displayed data therein. In this event, the second line is now a pause line set up by the pause line setup period so that no data will be written therein.

In response to the next Lp pulse input, the previously selected line is shifted so that the second line and the fourth through seventh lines assume the state of being selected. Providing data meant for the second line in this state causes writing therein with the data to be written therein and at the same time resets the previously displayed data in the fourth to seventh lines.

A further input of the next Lp pulse selects the third line and the fifth through eighth lines for writing data in the third line. While the data meant for the first line was written to the third line as a result of inputting an Lp pulse two pluses prior, the response time of the cholesteric LC is generally on the order of tens of milliseconds (10s ms), with some variance due to material characteristics. At the time of inputting an Lp pulse as the timing for writing data to the second line, the third line is in a pause period so that the pixels in the second line are in the focal conic state, or in a state of transitioning to the planar state in this period (e.g., 50 ms or less) and that a decision will be made for either the focal conic state as an actual writing state or the planar state at the time of actually receiving data for the third line. Thus these operations will be repeated until data is written to the 240th line for example, that is, the bottom line of the screen.

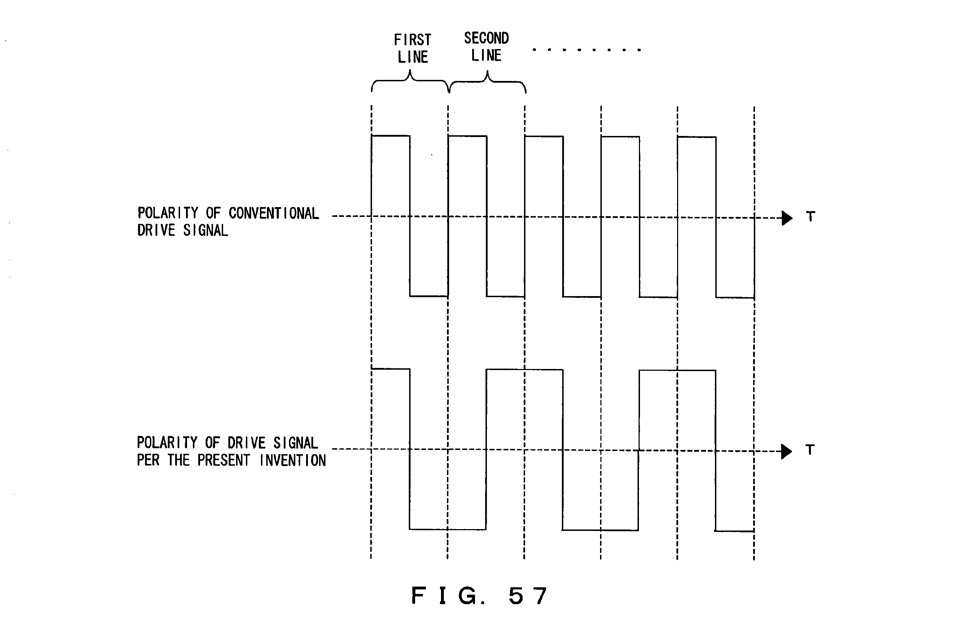

The next description is of a different power suppression method according to the fourth embodiment while referring to Fig. 57, which shows a signal to determine polarity reversing for an LC device drive wave form described in association with Fig. 54. For a cholesteric LC, it is generally desirable to reverse the polarity of a pulse within a writing signal for one line. This is to resolve the problems of deterioration of LC and degradation of image quality (e.g., residual image or cross-talk). Other available methods such as reversing the polarity per a plurality of lines, or per frame, are not preferred due to residual images and display noise caused by fluctuations of ions within the LC.

The upper part of Fig. 57 shows a polarity reversing method for the conventional drive signal, which performs polarity reversing by providing a positive pulse initially, followed by providing a negative pulse. The waveform shown by the lower part of Fig. 57 is the polarity reversing method according to the fourth embodiment. Carrying out polarity reversing for a drive signal in the form of providing a positive pulse to the first line initially, followed by providing a negative pulse thereto while conversely providing a negative pulse to the second line initially, followed by providing a positive pulse thereto, hence reversing the polarity in one line, while suppressing the power consumption due to the reversing period being two times that of the conventional method and preventing problems of display quality from occurring.

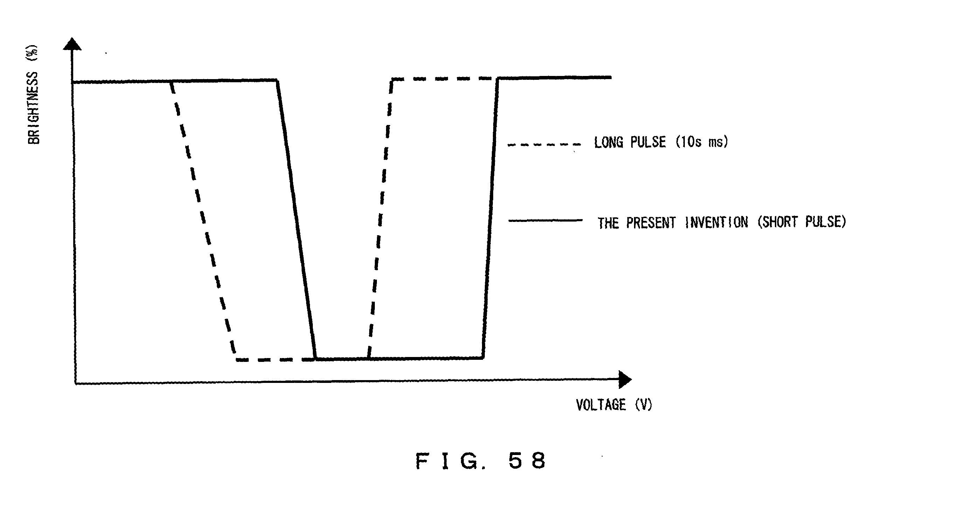

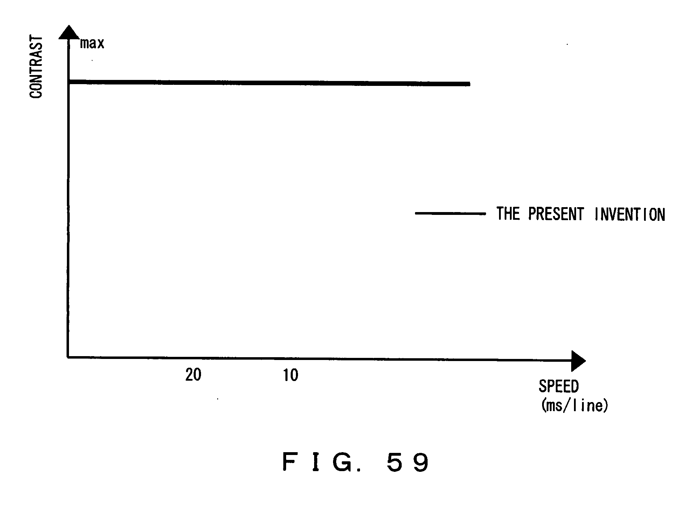

Figs 58 through 60 describe effects of drive methods described by referring to Figs. 55 through 57. Figs. 58 and 59 show effects of the fourth embodiment corresponding to Figs. 3 and 4, respectively, which have been described as the conventional technique. Use of the above described drive method does not cause a reduced contrast even when using a short pulse having a period of about eight milliseconds for example, in place of a long pulse having a period of tens of milliseconds, enabling high quality data writing for a QVGA sized (i.e., 320 dots wide by 240 dots high) screen by a drive circuit using low power on the order of five milli-Watts.

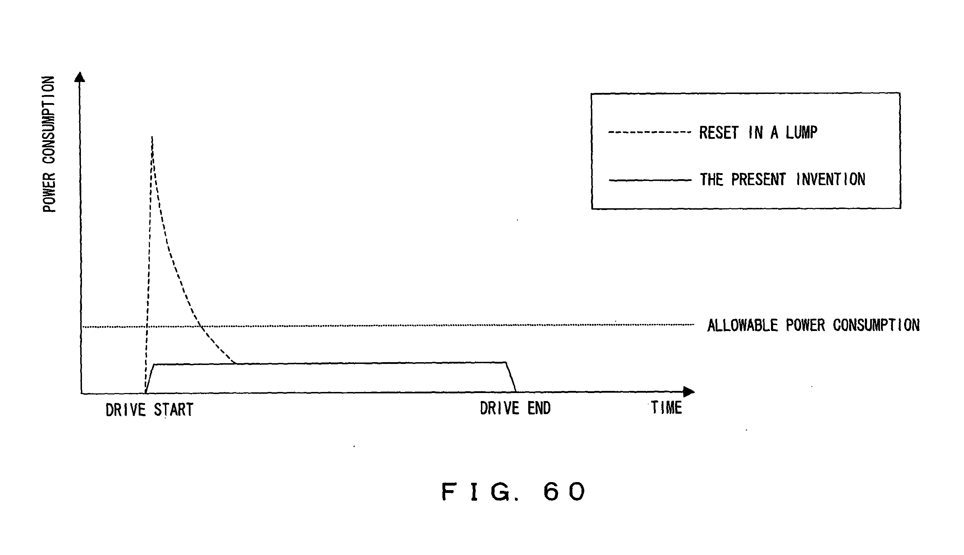

Fig. 60 describes a power consumption suppressing effect achieved by resetting several lines at a time, that is, four lines for the configuration shown by Fig. 56, in lieu of a bulk reset, according to the fourth embodiment. A bulk reset causes an extreme increase in the power consumption at drive start, whereas the fourth embodiment enables a suppression of such an increase in power consumption.

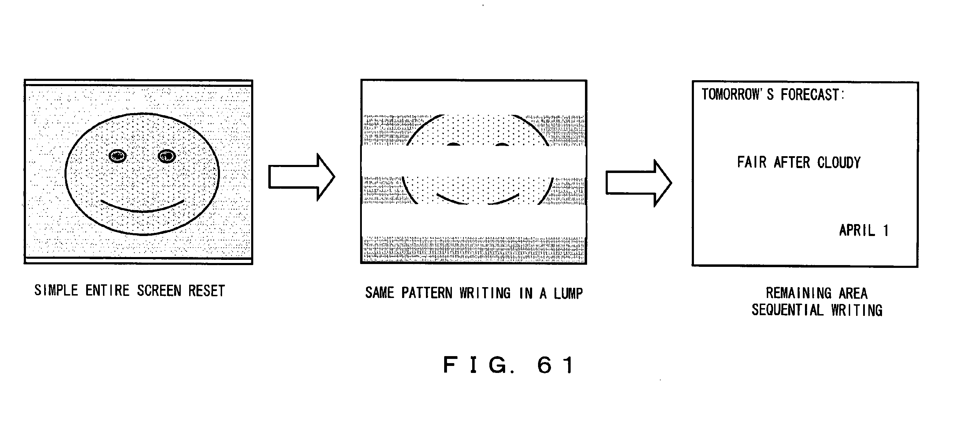

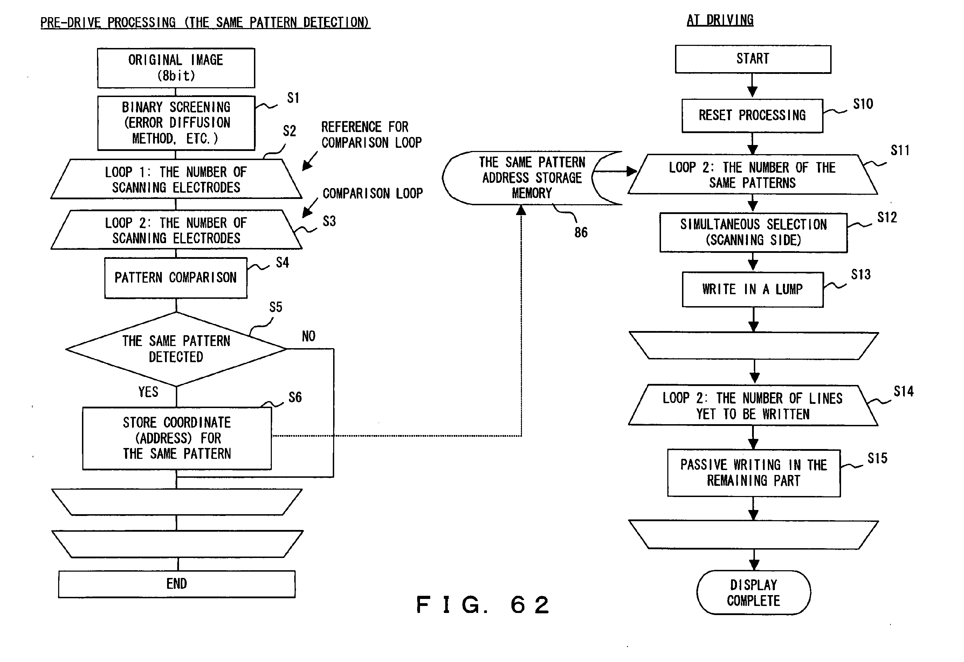

The next description is of a skip drive method as an image writing method according to the fourth embodiment while referring to Figs. 61 and 62. The drive method, that is, the skip drive method is configured to write data for a pixel in a discretionary position in a matrix by providing a signal for a segment mode to the scanning electrode side as well, in lieu of the above-described common mode.

Referring to Fig. 61, the first operation is to reset the entire display screen. In this event, the entirety may be transitioned to the focal conic state, except that the power consumption will be large and therefore, the beneficial[adg1] is a simple reset to an incomplete focal conic state by a short pulse with a cycle of 3 ms or less. An alternative method may be to segment the entire display into a plurality of blocks to reset by block.

Next, the scanningelectrode side selectsparts for writing with the same pattern, that is, a "white background" herein, and writes in bulk to electrodes in these parts. This makes it possible to write a white background pattern in a plurality of lines simultaneously, thereby enabling a shortened drive time.

The aforementioned same pattern is not specifically limited, but a pattern with a high spatial frequency, such as checkers, increases the power consumption, and therefore it is necessary to limit the number of lines to write in bulk according to the pattern. In other words, the number of lines to be selected in bulk will be reduced with the spatial frequency of the pattern.

There is a low possibility of the same pattern existing in an image if the image is of random patterns as a result of image processing by using an error diffusion method which diffuses an error of a certain pixel to the neighboring pixels, whereas there is a possibility of the same pattern existing in an image processed by a systematic dither method as one kind of a binary dither method which adds noise to a density signal of a halftone image to binarize through threshold processing, or in a halftone image using a dot pattern. The skip drive system, however, is particularly effective for an image with many white background areas such as text display.

Returning to Fig. 61, thewritinginbulkof the same pattern is followed by a normal sequential line drive (i.e., passive drive) for carrying out sequential writing of the remaining parts other than those of the same pattern. In this event, the adoption of interlace scanning makes it possible to recognize the entire image more quickly. The skip drive is characterized by being accomplished through the use of a simple drive circuit in lieu of a complex method as with an MLA (multi line addressing) drive and varying the number of lines to be driven in bulk depending on the pattern.

Fig. 62 is a process flow chart of the skip drive method. In Fig. 62, the left part is a flow chart of the same pattern detection processing as pre-drive processing. This processing is to perform binary screening by error diffusion processing by using an eight-bit original image for example (step S1) (simply "S1" hereinafter), select a scanning electrode as reference data for comparison as the loop 1 (S2), select a scanning electrode as data for comparison (S3), perform a pattern comparison of data for each electrode (S4), udge whether or not the same pattern has been detected (S5) and, if detected, store the coordinates or the address where the same pattern exists in the same pattern address storage memory 86 (S6). While if it is not detected, change the scanning electrodes as data for comparison in S3 to continue the processing, and when finished comparing the data of the scanning electrode as reference data for comparison, which has been selected in step S2, change the scanning electrode as reference data for comparison in the step S2 to continue the processing until the comparisons are done for all data when the processing ends.

The flow chart on the right side of Fig. 62 is at the time of driving, that is, for write processing. In Fig. 62, as the processing starts, the first operation is to perform a reset in bulk for the entire display screen (S10), read one same pattern out of the same pattern address storage memory 86 (S11), select simultaneously a plurality of scanning electrodes for writing the data pattern (S12) to, write data in bulk (S13), followed by performing the processing of steps S11 through S13 for the next pattern. When finished writing the same pattern, carry out a writing loop for the lines to be written (S14) and perform passive writing of data for the remaining part, which is yet to be written, line by line (S15), to end display processing.

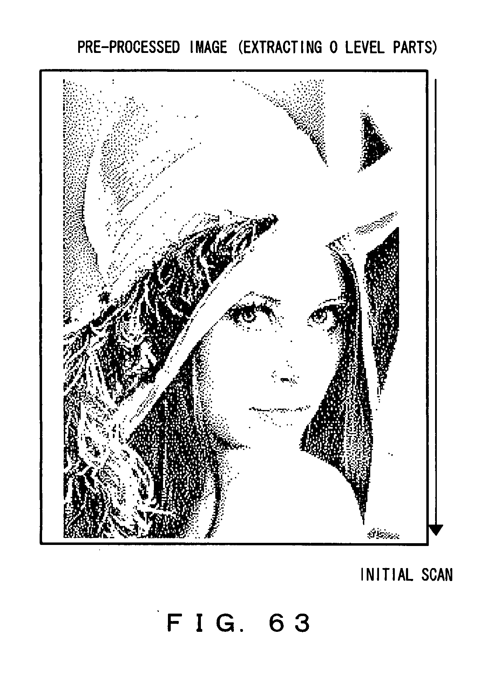

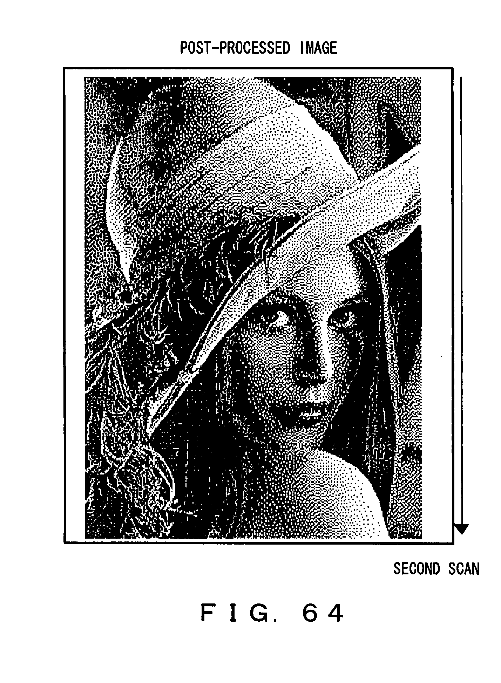

The next description is of a multi-value writing method according to the fourth embodiment while referring to Figs. 63 and 64. While a display apparatus using a cholesteric LC generally has the problem of the entire image becoming low contrast with writing speed because a transition to the focal conic state becomes incomplete with a higher writing speed, the fourth embodiment, taking advantage of such a characteristic, is capable of carrying out a multi-value writing which repeats writing a halftone image to obtain a clear display image.

First, let the case of three-value writing be described. The first operation is to run a screening process with three values, for example, 0, 128 and 255 for an image with a 8bit 256-step gray scale. Although the kind of such processing is not specifically limited herein, to use of the above described error diffusion method or a blue noise mask method as image processing for a larger image area it be possible to generate a pseudo-halftone image with a high resolution.

Following the three-value screen processing, extract pixels of black (i.e., "0") level, that is, pixels to be basically written as black, and run an initial scan for such pixels only, thereby writing a halftone image. That is, driving the LC device faster than usual carries out image writing of halftone level in a state of fixed output voltage of the driver. An adjustment of drive speed can obtain an image with halftone data being written in pixels for which black is supposed to be written as shown by Fig. 63.

Subsequently, the second scan, that is, writing data which is converted from a black (0) level and intermediate level (128) to the black (0) level changes pixels which were a gray halftone before, as shown by Fig. 63, are now a black halftone, and with other parts being written as a gray halftone or white halftone, thereby forming a three-value image eventually. This makes it possible to display a multi value halftone image easily and at the same time the user is also able to grasp the entire image of the display quickly. That is, a blurry initial image becomes gradually clear and hence a multi value image, more than 3 values, can be accomplished by a number of write operations at a suitable scanning speed. Also, conversely, it is possible to write cumulatively by starting at a gray halftone followed by adding pixels for moving toward a white halftone.

As described above, the fourth embodiment makes it possible to suppress the power consumption a great deal of driving and display a high quality image in a short time without allowing a residual image or a reduced contrast in a non-powered display apparatus using a display device which has a semi-permanent memory property such as a cholesteric LC.

The description now proceeds to a fifth embodiment. In the fifth embodiment, the description concerns a more detailed comprisal and wider range of application of the display apparatus with a semi-permanent memory property such as a cholesteric LC for example. In the fifth embodiment, an automatic display apparatus, at least comprising a display medium having a semi-permanent memory property which retains display content even if power is shut off, memory for retaining information relating to an acquisition method for data to be displayed and information relating to a display form of the acquired data, an Internet connection unit, for example, for acquiring display data based on the data acquisition method, and a control unit for displaying the acquired data according to the retained display form, acquires display data after being started in response to an instruction given externally or internally and carries out data display on a display medium with a semi-permanent memory property by adjusting a display form.

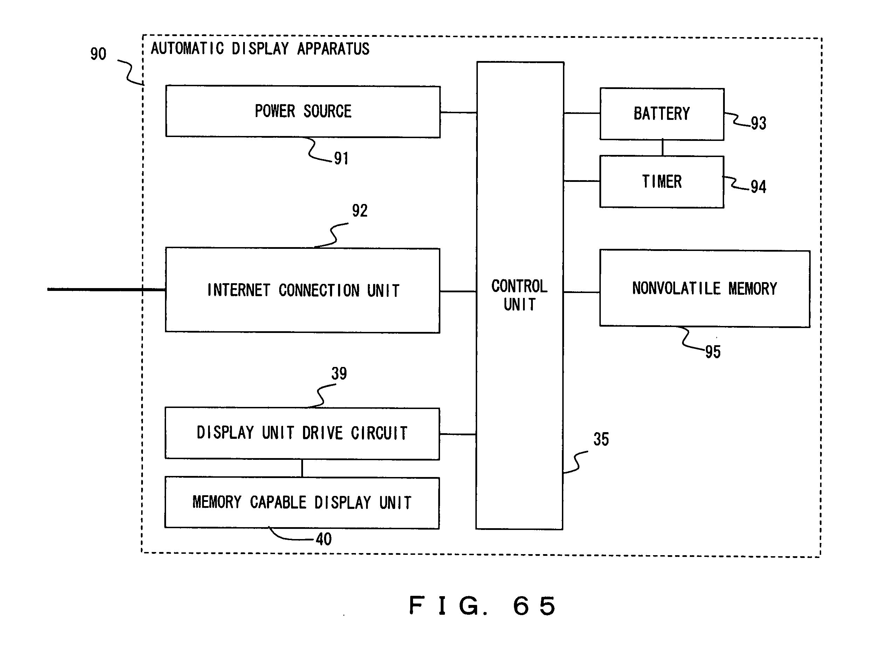

Fig. 65 shows such an automatic display apparatus. In Fig. 65, an automatic display apparatus 90, comparing with the wireless display panel 21 shown by Fig. 7 for example, comprises a power supply 91, an Internet connection unit 92, a battery 93, a timer 94 and nonvolatile memory 95 in addition to the control unit 35, display unit drive circuit 39 and memory capable display unit 40.

In Fig. 65, the automatic display apparatus 90, being furnished with a host function and mechanism for connecting to the Internet, acquires page data by the operation of the Internet connection unit 92 by using a URL stored by the nonvolatile memory 95 following the power supply 91 being turned on and displays the page data in the memory capable display unit 40 according to the display form information stored by the nonvolatile memory 95, followed by transition to a power off state automatically. The content of the nonvolatile memory 95 is freely rewritable from a wireless terminal for example. Alternatively, the timer 94 backed up by the battery 93 can start the automatic display apparatus 90.

Note here that, in claims herein, a display unit corresponds to the memory capable display unit 40, a storage unit corresponds to the nonvolatile memory 95 and a control unit corresponds to the control unit 35 and display unit drive circuit 39, all of which are noted by claim 25. Also, in claim 30, a nonvolatile storage unit corresponds to the nonvolatile memory 95 which can store display data for a plurality of pages to rewrite the content of the memory capable display unit 40 and to restore a content which has been displayed by the memory capable display unit 40 by using the content of the nonvolatile memory 95 if the content is erased by some cause.

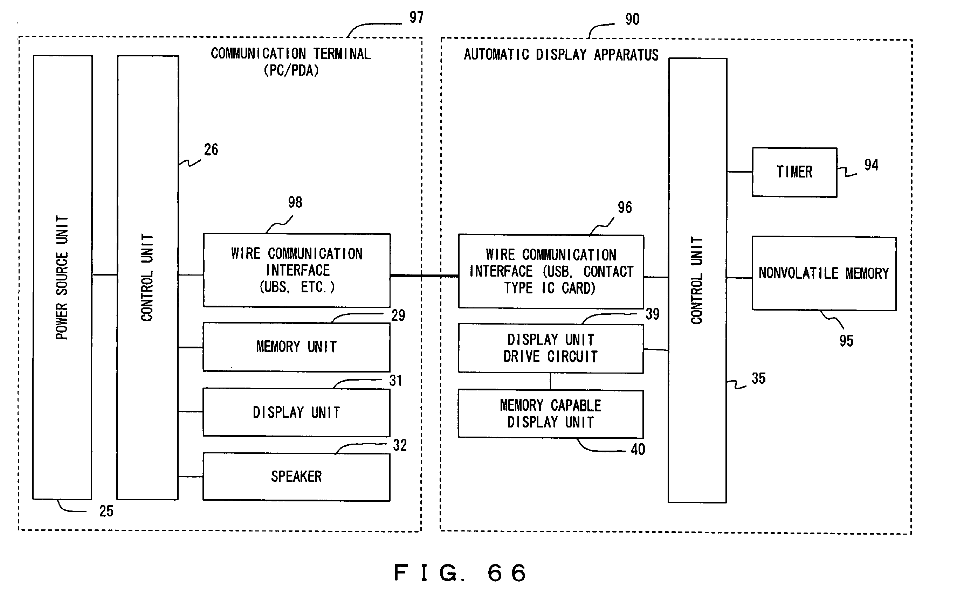

Fig. 66 is an example comprisal of an automatic display apparatus connected with a communication terminal 97 such as a PC, PDA, et cetera, through wired communication. In Fig. 66, the automatic display apparatus 90 and communication terminal 97 comprise wired interfaces 96 and 98, respectively, such as a USB and contact type IC card. Once connected with a PC or slot-in type or cradle type IC card reader/writer, the automatic display apparatus 90 receives power to start up, operates itself as in the case of Fig. 65 followed by transition to a ready state automatically; and the power will be cut off once the connection with a PC, et cetera, is cut off. The content of the nonvolatile memory 95 can be freely rewritten over at the host, that is, the communication terminal 97 by way of the wire interfaces 98 and 96. A continuous connection between the automatic display apparatus 90 and communication terminal 97 will enable an automatic startup by the timer 94 for example.

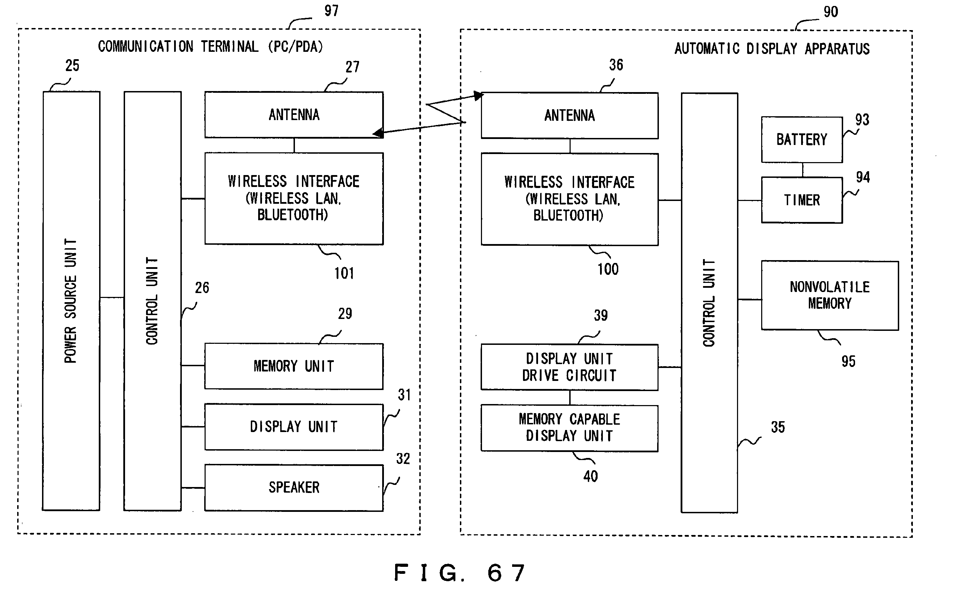

Fig. 67 is an example comprisal of an automatic display apparatus wirelessly connected with a communication terminal. The automatic display apparatus 90 and communication terminal 97 respectively comprise wireless interfaces 100 and 101 applicable to a wireless LAN or Bluetooth so that the automatic display apparatus 90 starts up in response to a received startup command from the communication terminal 97 to carry out the same operation as in the case of Fig. 65. A battery powered monitor (not shown herein) can be comprised for continuously monitoring for a startup command from the communication terminal 97 so that a startup command issued by the "timeout" of a timer (not shown) equipped over at the communication terminal 97 automatically starts up the automatic display apparatus 90.

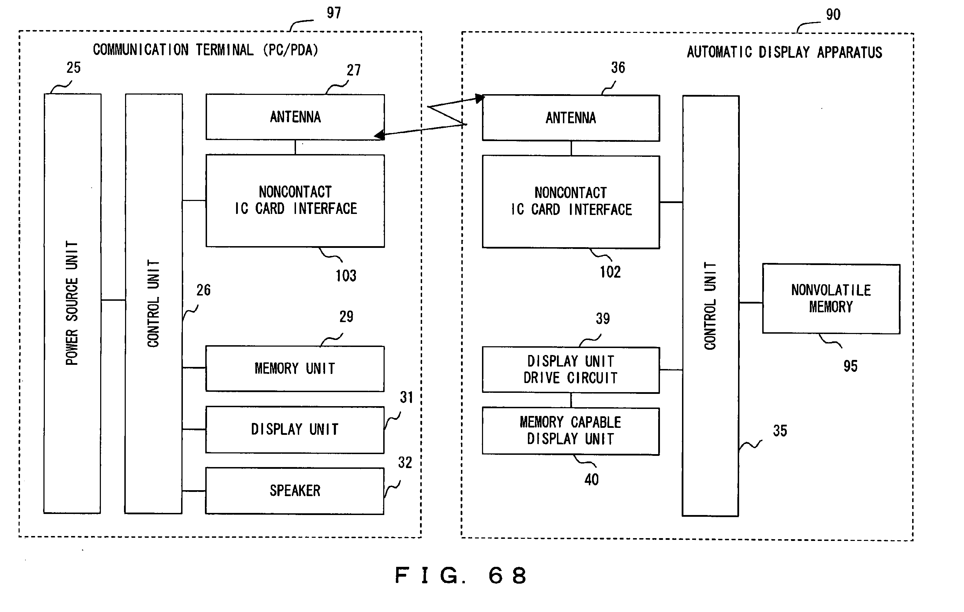

Fig. 68 is an example comprisal of an automatic display apparatus equipped with a noncontact IC card interface. The automatic display apparatus 90 comprises a noncontact IC card interface 102 or an RF (radio frequency) ID interface, and also the communication terminal 97, e.g., IC card reader/writer, comprises a noncontact IC card interface 103.

When the distance from the communication terminal 97 becomes a prescribed value or less, the automatic display apparatus 90 is started up to operate in the same way as in the case of Fig. 65. Noncontact IC cards can be of a proximity type, which is applicable to a short communicable distance of about 10 cm with a higher communication speed, or a neighborhood type, which is capable of a long communicable distance of about 1 m with a lower communication speed. The automatic display apparatus 90 can be equipped with both types of IC card chips, in which case it is practical to shut off power to a display unit completely and transmit character data only, not image data, due to the limitation of communication speed in long distance communication where only the neighborhood type is capable of functioning properly because of the power supplied by the communication terminal 97 becomes small in such a case.

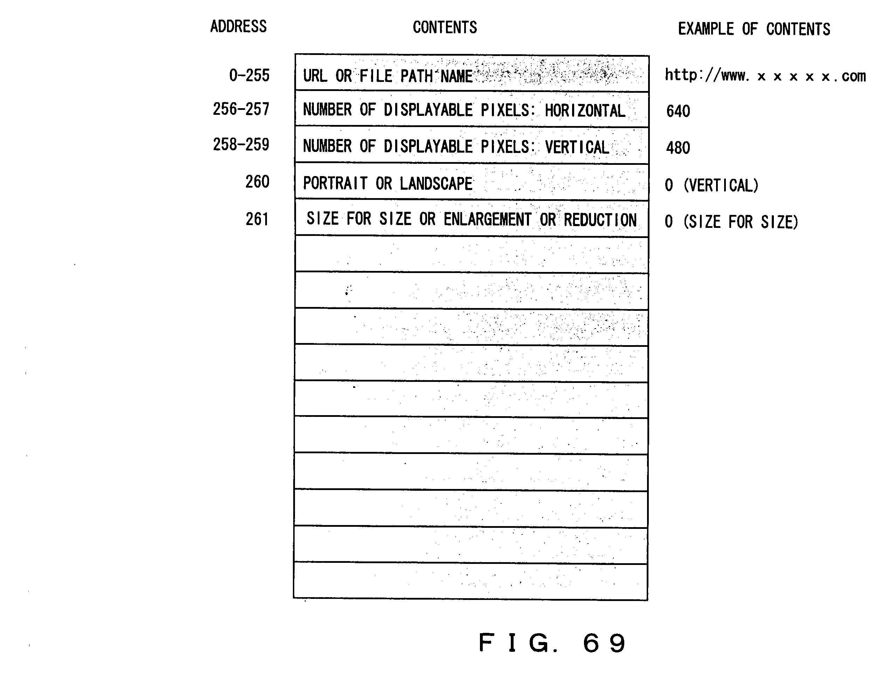

Fig. 69 exemplifies information about an acquisition method for data to be displayed and information about a display form for the acquired display data, both of which are stored by the nonvolatile memory 95 shown by Fig. 65 for example. In Fig. 69, a URL or path to the file is stored in the addresses 0 through 255 as a method to obtain a data to be displayed. The content is a URL such as xxxxx.com. The addresses 256 and thereafter are data relating to display forms, storing the display form data, such as a specification for the number of pixels, portrait or landscape orientation of the display screen, size for size enlargement or reduction, et cetera, which resemble common printing form data.

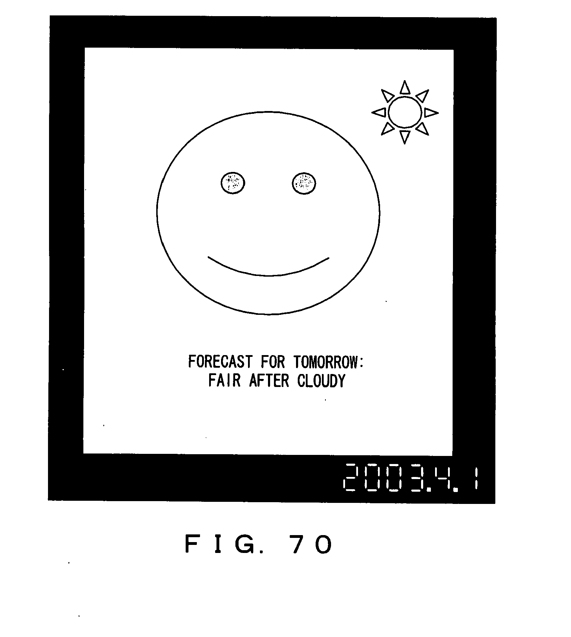

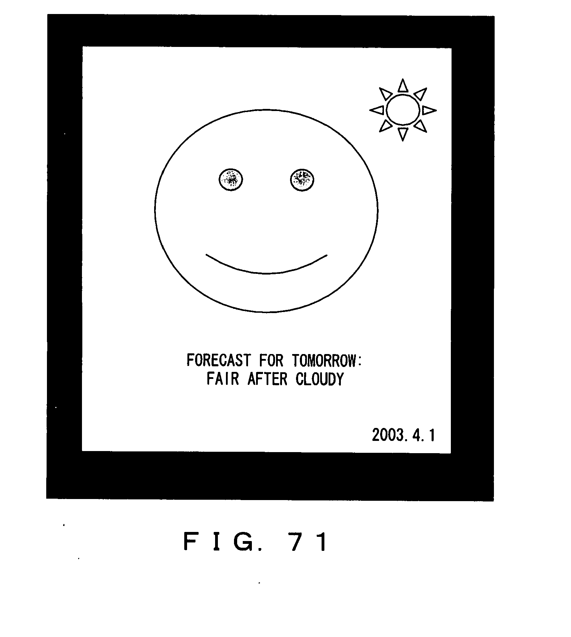

The fifth embodiment is capable of carrying out not only data display but also displaying an update date and time of data. Figs. 70 and 71 describe an update date and time display form. Fig. 70 shows the case of the display apparatus comprising an update date and time display unit therein using segment pixels independent of the display unit for data per se. The update date and time display unit can also use a cholesteric LC.

Fig. 71 describes the case of the data display unit displaying an update date and time. This display is as a result of the host (e.g., communication terminal) side adding the update date and time to the display data prior to the transmission. In comparison to the above, the host side transmits the display data and the update date and time information independently in the case of Fig. 70. A display of the update date and time enables the user to determine the time stamp of the information instantly.

Further description continues for another example comprisal of the automatic display apparatus according to the fifth embodiment. First, while the memory capable display unit 40 shown by Fig. 65, et cetera, is most preferably the one with a semi-permanent memory property such as the above described cholesteric LC, it is possible to use a device capable of retaining the memory content for a unit period of several hours or one day for example, instead of having the semi-permanent memory property, or combine a device having no memory property with a nonvolatile memory.

In this case, it is possible to have a size equivalent to one page or plural pages of nonvolatile memory. In the case of a display device having a semi-permanent memory property, such buffer memory is not necessarily required, but equipping of one of page buffer memory will make it possible to restore display content instantly if a part, or the entirety, of the display content of the display device disappears due to exceeding the upper temperature limit of the memory property for example. The equipment of buffer memory for plural pages also makes it possible to switch the display contents instantly.

The automatic display apparatus is also capable of inhibiting rewriting of the data displayed by the memory capable display unit 40 shown by Fig. 65 for example. The method for inhibiting rewriting can naturally be through a hardware method such as the write inhibit method used for a flexible disk (i.e., floppy disk) for example, or a software method.

Meanwhile, if a communication with an external entity is interrupted in the middle of the automatic display apparatus operating to acquire display data provided externally, it is also possible to acquire a part of the display data yet to be acquired when the communication with the external entity resumes. Such a method is widely put into practice by way of a download manager such as are available as freeware. A resume function included in such a download manager can be used for acquiring the data yet to be acquired.

Furthermore, the automatic display apparatus according to the fifth embodiment may comprise a storage function for a history relating to a display data acquisition method. While such a function is not necessarily required, equipment with such a function can easily reference past display data. Such a history can of course be stored in the nonvolatile memory 95 shown by Fig. 65 or externally by way of the host apparatus.

Last but not least, the descriptions are of diverse applications of the automatic display apparatus according to the fifth embodiment. In summarizing such applications, it is possible to transmit not only a mobile terminal screen as is to the automatic display apparatus, but also high resolution large screen data specifically built and transmit it to the automatic display apparatus.

The automatic display apparatus may also comprise an installer for a mobile terminal in order to install a driver for the automatic display apparatus on a mobile terminal from the automatic display apparatus. A mobile terminal generally has a small memory size, which can be used effectively by installing the driver only on as required basis and discarding it as soon as the necessity ends.

The automatic display apparatus may also be formed as a refill corresponding to replaceable pages for a day organizer, both sides of which can display data. In this case, installing antennas on both sides, comprising a magnetic shield layer in the middle, and comparing the voltages generated for the two antennas to rewrite the display data first for the side on which the higher voltage antenna is installed.

The automatic display apparatus may further allow the display unit containing the display panel and driver LSI to be detached thereof, comprise the function of erasing data of the display panel and buffer memory, or let a part of the display screen be a fixed advertisement display area so as to display in the area by downloading advertisement data at the time of updating the display data by a prescribed procedure.

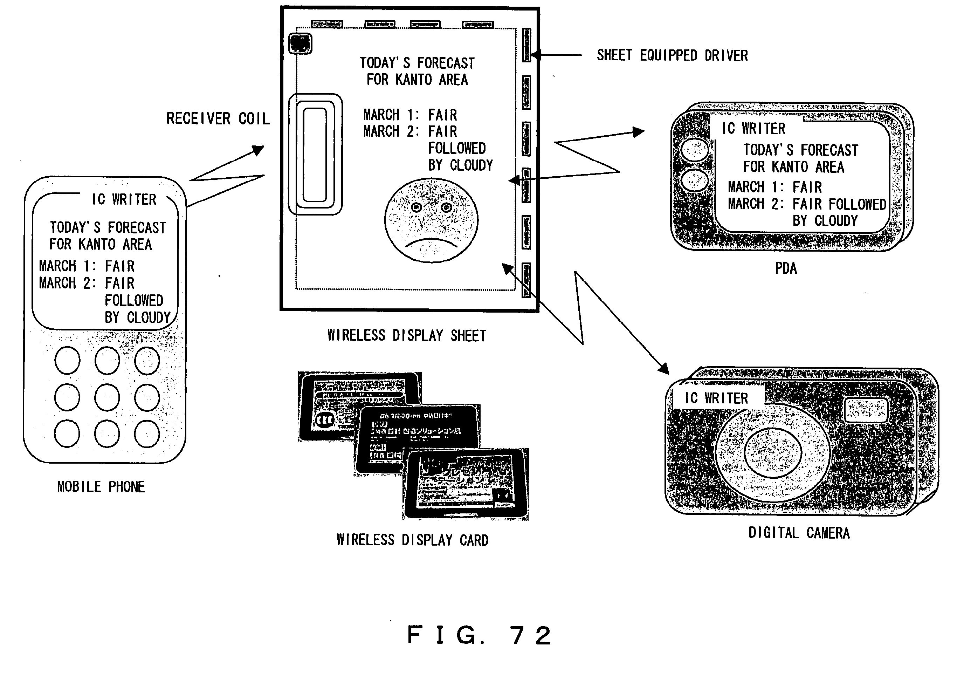

Further descriptions of these example applications will be given while referring to the accompanying drawings. An automatic display apparatus shown by Fig. 72 (i.e., wireless display sheet and wireless display card) is equipped with a noncontact IC card interface (i.e., antenna and IC chip). When positioning the automatic display apparatus close to a mobile phone, digital camera or PDA, which is equipped with an IC card reader/writer, the automatic display apparatus requires transmissionofdisplaydata. The mobile phone, et cetera, being installed by a driver for the automatic display apparatus, transmits mobile phone screen data as is to the automatic display apparatus, or after building up high resolution large screen data based on the mobile phone screen data. The automatic display apparatus carries out display drive control in response to the power supplied from the mobile phone as described above to display the screen data in the display panel, followed by automatically transitioning itself to a ready state.

Just moving a sheet type material close to a mobile phone displays an enlarged map, the entirety of a long mail message or content to be memorized, thereby providing a real convenience. A driver for the automatic display apparatus for a mobile phone can also be installed from the automatic display apparatus.

When positioning an automatic display apparatus shown by Fig. 72 close to a laptop PC equipped with an IC card reader/writer, the automatic display apparatus requires transmission of print data. The laptop PC, having a driver for the automatic display apparatus installed, transmits the printing data to the automatic display apparatus in a usual printing procedure. The automatic display apparatus carries out a display drive control in response to the power supplied from the laptop PC to display the printing data in the display panel, followed by automatically transitioning itself to the ready state.

An automatic display apparatus may be formed as a refill for a day organizer, which may be configured as capable of duplex display. Installing antennas on both sides with a magnetic shield in the middle, it is possible to identify on which side an IC card reader/writer is located. It is desirable to assign priority of data processing to the side where the IC card reader/writer is located.

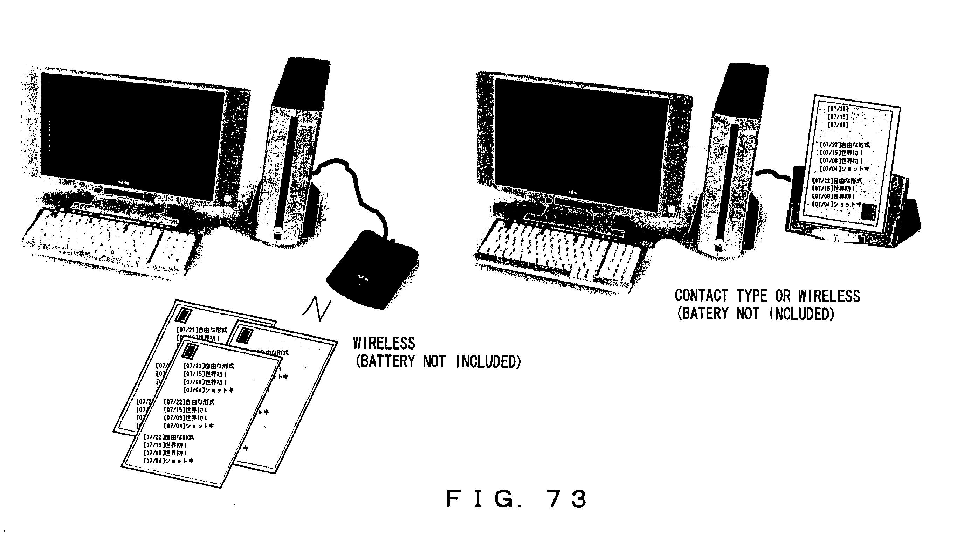

Fig. 73 shows an automatic display apparatus, being a second display for a PC, comprises a USB interface. When connecting the automatic display apparatus to a desktop PC, the former requires transmission of screen data as the second display or thereafter. The desktop PC, having a driver for the automatic display apparatus installed, transmits screen data to the automatic display apparatus as with a usual display. The automatic display apparatus displays the screen data in the display panel, requires transmission of the subsequent screen data automatically and repeats the series of operation.

The fact that the use of a plurality of displays increases the efficiency of work is well known. One can use four or five of the automatic display apparatus in taking advantage of the aspects thereof such as: its being thinner, lighter and taking less space than the conventional display; allowing use in a free layout; and is less expensive as compared to the usual display. It is a required item for comfortably reading an online manual with deep nesting.

Next, an automatic display apparatus according to the present embodiment is equipped with a wireless LAN interface and a battery. The automatic display apparatus starts up automatically when the owner's desktop PC is started up followed by completing authentication of the owner. The automatic display apparatus requests the desktop PC to transmit personnel schedule chart data. The desktop PC, having a driver for the automatic display apparatus installed, transmits the personnel schedule chart data. The automatic display apparatus displays a personnel schedule chart in the display panel, followed by transitioning itself automatically to the ready state in which the display unit of the automatic display apparatus can be detached.

Quite a few personnel print a personnel schedule chart every day, consuming approximately 250 sheets of paper a year per person. A use of the automatic display apparatus not only saves the time and effort required to print a personnel schedule chart but also reduces paper consumption and paper waste volume.

An automatic display apparatus according to the present embodiment is equipped with a noncontact IC card reader/writer (i.e., antenna and IC chip). When positioning the automatic display apparatus close to a mobile phone equipped with an IC card reader/writer, the automatic display apparatus requests transmission of a newspaper article. The mobile phone, having a driver for the automatic display apparatus installed, downloads the newspaper article from the newspaper home page to transmit to the automatic display apparatus which carries out display drive control in response to the power supplied by the mobile phone to display the newspaper article in the display panel, followed by transitioning itself to the ready state.

Just positioning a sheet shaped object close to the mobile phone enables a reading of the latest newspaper article, providing great convenience. The same technique can be applied to an electronic book. There is no need of a pre-download, hence making it possible to start reading a paperback book or magazine on hanging poster in trains, which has caught the eye right then and there. This practice is much more convenient and comfortable as compared to an electronic book by the method for downloading onto a secure digital (SD) card for the purpose of protecting a copyright.

An automatic display apparatus according to the present embodiment is equipped with a wireless LAN interface and a battery. The automatic display apparatus starts up automatically when starting up the owner's desktop PC, and requests the desktop PC to transmit a newspaper article. The desktop PC, having a driver for the automatic display apparatus installed, downloads the newspaper article from the newspaper home page to transmit to the automatic display apparatus which then displays the newspaper article according to the size of display panel (i.e., A6 through a two-page spread of A3 sizes), followed by transitioning itself to the ready state. The automatic display apparatus allows the display unit to be detached in the ready state.

Use of the automatic display apparatus eliminates printing, delivery or distribution to each subscriber (including private homes), providing news at a less expensive subscription fee, as well as much more timely news articles, as compared to conventional newspapers, while reducing paper consumption and paper waste volume.

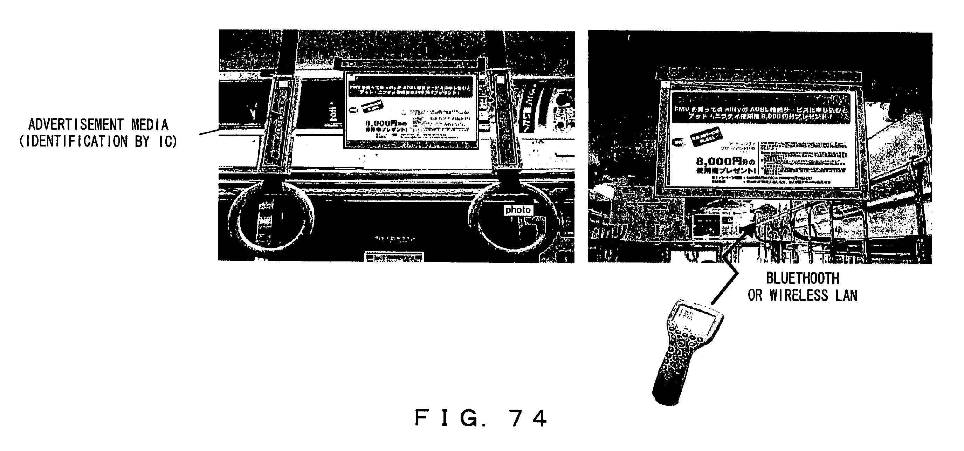

Many automatic display apparatuses shown by Fig. 74, each comprising a Bluetooth interface and a battery, are either hung or stuck in passenger train cars. One of the automatic display apparatuses starts up by the built in IC identifying a startup instruction issued by a Bluetooth enabled laptop PC brought in the passenger train car to request transmission of advertisement data. The laptop PC, having a driver for the automatic display apparatus installed, transmits the advertisement data to be displayed to the started automatic display apparatus, which then displays the advertisement in the display panel, followed by transitioning itself to the ready state. A series of operations will be repeated until the completion of display content updates for all the applicable automatic display apparatus.

A use of the automatic display apparatus reduces printing costs, installation costs, paper consumption and paper waste volume. A continued installation of a PC in a train car will enable switching of advertisements in response to the time of day, running zone of the train service, et cetera. The same technique can be applied to merchandize price displays at a store such as a supermarket.

Next, many automatic display apparatus used for a building wall advertisement are hung on a building wall, with each comprising a Bluetooth interface and a battery. A Bluetooth enabled laptop PC is installed in the building and connected with antennas installed in a plurality of places on the wall. One of the automatic display apparatuses starts up because of a startup instruction issued by the laptop PC to request for transmission of advertisement data. The laptop PC, being installed by a driver for the automatic display apparatus, transmits the advertisement data to be displayed by the started automatic display apparatus which then displays the advertisement in the display panel, followed by automatically transitioning itself to the ready state. A series of operations will be repeated until completion of display content update for all the applicable automatic display apparatus. In the case of a plurality of automatic display apparatuses displaying a large screen, each display requires only the image data for the assigned part, and therefore image cutout processing is easy.

Use of the automatic display apparatus reduces printing and installation costs. It is also possible to switch the advertisement contents entirely depending on the time of day. The same technique can be applied to the train schedule at a station.

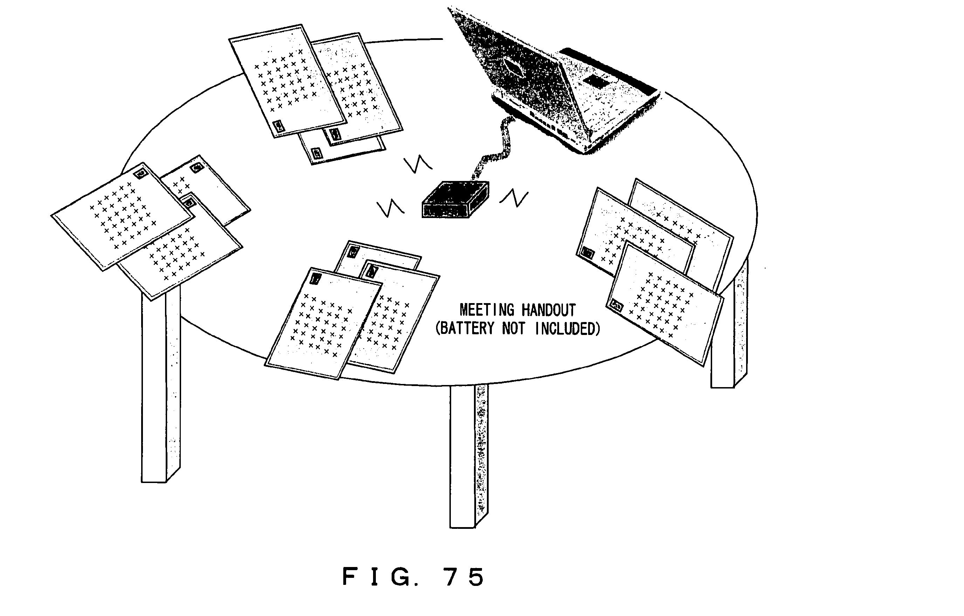

Many automatic display apparatuses for use as a handout at a conference shown by Fig. 75, each comprising a Bluetooth interface and a battery, are furnished in a meeting room. One of the automatic display apparatuses starts up because of a startup instruction from a Bluetooth enabled laptop PC brought into the meeting room to request transmission of meeting material. The laptop PC, having a driver for the automatic display apparatus installed, transmits the meeting material to be displayed to a started automatic display apparatus which then displays the meetingmaterial in the display panel, followed by transitioning itself to the ready state. A series of operations will be repeated until all the applicable automatic display apparatuses are displaying the meeting material.

Use of the automatic display apparatus reduces printing costs, book binding costs, paper consumption and paper waste volume. Suddenly required material during the meeting can be distributed in no time. Furthermore, the use of the automatic display apparatus improves security by taking advantage of the capability to erase the display panel and buffer memory data of any classified material as soon as the meeting is adjourned.

The next description is of a usage example of a mobile display having an advertisement display function. This is similar to the screen enlargement display for mobile equipment as shown by Fig. 72, whereas the difference therefrom is that a part of the display screen is now a fixed area for an advertisement display. Advertisement data is downloaded from a prescribed URL to display in the advertisement display area at the time of updating display data. This is very effective as a sales promotion tool and therefore there is a highprobability of enterprises distributing a large number of the automatic display apparatus free of charge.

As described above, the fifth embodiment is comprised to accomplish an automatic display apparatus using a convenient electronic paper which highly integrates the characteristics of starting up the automatic display apparatus without operating a PC, et cetera, having the latest information displayed by positioning a noncontact IC card close to an IC card reader/writer equipped in a PC or PDA for example and retaining the display even if the power supply is cut off with the characteristic of the display content being discretionarily rewritable.

Applicability to industries

The present invention is applicable to not only industries producing IC cards, electronic papers, liquid crystal display devices and mobile equipments including mobile terminals and digital cameras, but also all industries using these display apparatuses, display devices and mobile equipment.

## Claims

1. An information display system, including:

    a display apparatus which comprises
    a display unit capable of data display even if a power supply is cut off,
    a short range communication unit for carrying out a short range communication in order to receive data to be displayed externally, and
    a display control unit for controlling a display performed by the display unit in response to received data by the short range communication unit; and
    display data retention apparatus which comprises
    a storage unit for holding display data, and
    a communication unit for transmitting display data over to the display apparatus at least within a short range in response to a storage content of the storage unit.

2. The information display system according to claim 1, wherein
    said display data retention apparatus further comprises a long range communication unit, capable of long range communication unlike said communication unit, for acquiring display data externally, wherein
    the communication unit transmits display data acquired by the long range communication unit over to said display apparatus.

3. The information display system according to claim 1, wherein
    said display apparatus further comprises a mechanical quick release unit for mounting the apparatus itself onto a person or clothing.

4. The information display system according to claim 1, wherein
    said display data retention apparatus further comprises
    a display unit having a smaller display area than a display unit comprised by said display apparatus, and
a mechanical quick release unit for mounting the display apparatus onto the own apparatus.

5. The information display system according to claim 1, wherein
    said display data retention apparatus further comprises
    a display unit having a smaller display area than a display unit comprised by said display apparatus, and
    said display apparatus further comprises
    a mechanical quick release unit for mounting the display data retention apparatus onto the apparatus itself.

6. The information display system according to claim 1, wherein
    said short range communication unit comprised by display apparatus further receives power for displaying and display control information, in addition to said data to be displayed over from said display data retention apparatus.

7. A display device, in the display device having two substrates, between which a liquidcrystal is injected, comprises
    partition walls with a structure for keeping plural colors of liquid crystals, which are injected between the two substrates, from touching one another.

8. The display device according to claim 7, wherein a surface of said partition walls in contact with said substrate has an adhesive force with the substrate.

9. The display device according to claim 7, wherein said plural colors of liquid crystals are the ones each forming a cholesteric phase.

10. The display device according to claim 7, wherein said plural colors of liquid crystals make an additive color of white.

11. A display apparatus, comprising:

    a first display device having a transmission and a reflection mode, and capable of switching display contents, and
    a reflective second display device for displaying a fixed image or character and enabling a viewing of display content through the first display device.

12. The display apparatus according to claim 11, wherein said second display device is a body which is printed or handwritten by a character and/or image and is detachably attached to said first display device.

**13.** The display apparatus according to claim 12, wherein said first display device has the function of being capable to change a display range according to a position and shape of a fixed image or character on said detachably attached second display device.

**14.** A display apparatus, in the display apparatus using a liquid crystal display comprising
a temperature compensation unit for changing, in response to temperature, two kinds of peak values of drive voltage wave forms corresponding to two stable states of the liquid crystal.

**15.** The display apparatus according to claim 14, wherein said liquid crystal is the one forming a cholesteric phase, and said temperature compensation unit changes a peak value of a drive wave form corresponding to a focal conic state as one of said two stable states along a straight line connecting the average of the upper and lower limit values of the peak values of the drive wave form at the lower limit within an operating temperature range and
the average of the upper and lower limit values of the peak values of the drive wave form at the higher limit within the operating temperature range.

**16.** A display apparatus, in the display apparatus having a coil furnished in order to receive an external high frequency magnetic field, comprising:

a display-use power supply unit for supplying a display-use voltage by rectifying a high frequency voltage induced by the coil, and
a logic-use power supply unit for supplying circuits other than the one for display use with a voltage by rectifying a high frequency voltage induced by the coil.

**17.** The display apparatus according to claim 16, wherein
said coil comprises an intermediary tap with one end of the coil being grounded,
a for-resonance capacitor is connected between the intermediary tap and ground,
saidlogic-usepower supplyunit rectifies a voltage across the for-resonance capacitor, and
said display-use power supply unit rectifies a voltage across the other end of the coil and the intermediary tap.

**18.** A display apparatus, in the display apparatus comprising a display unit for performing a data display by using power supplied externally by noncontact means, comprising
a display function control unit for controlling a display function of the display unit in response to supplied electric power externally.

**19.** A display apparatus, in the display apparatus comprising a display-use power supply which uses a part of power supplied externally by noncontact means, and a logic-use power supply for supplying circuits other than the one for display use with power by using a part of the power, comprising
a current regulation unit for regulating an output current of the display-use power supply in response to a voltage drop of the logic-use power supply.

**20.** A display device drive method for use in a matrix type display apparatus using a liquid crystal which forms a cholesteric phase, comprising the steps of setting some of scanning electrodes for a reset and writing lines to a selection state and a pause line to a non-selection state, respectively; and
providing a writing data signal to a signal electrode side while shifting the reset, pause and writing lines, respectively.

**21.** The display device drive method according to claim 20, wherein a writing alternate signal provided to a reset and writing lines in said selection state reverses polarities within a time corresponding to one line, and also has a period corresponding to two lines.

**22.** A display device drive method for use in a matrix type display apparatus using a liquid crystal which forms a cholesteric phase, comprising the steps of detecting a plurality of lines, in which data patterns to be displayed are the same, from among a plurality of lines on a display screen of the display apparatus; and
writing the same pattern data in bulk by selecting the detected plurality of lines simultaneously and providing data of the same pattern to signal electrodes.

**23.** The display device drive method according to claim 22,
wherein the maximum number of the plurality of lines to which writing in bulk is carried out is inversely proportional to the spatial frequency of the same pattern data.

**24.** A display device drive method for use in a display apparatus using a liquid crystal device, comprising the steps of
converting image data to be written in a liquid crystal device into image data having n-number of gray scales;
extracting a pixel of each gray scale level after conversion; and
forming, for the extracted pixels:

a sub-image 1 which is formed by converting the pixels on the least bright gray scale level 1 (i.e., on black level) and n-th least bright gray scale level n (i.e., on white level) into black and white levels, respectively,

a sub-image 2 which is formed by converting the ones between the least bright gray scale level 1 and the second least bright gray scale level 2 into a black level followed by combination with the gray scale level n,

...so on and so forth..., and

a sub-image (n-1) which is formed by converting the ones between the least bright gray scale level 1 and (n-1)-th least bright gray scale level (n-1) into a black level followed by combination with the gray scale level n; wherein

a writing starts with the sub-image 1, followed by the sub-image 2, so on and so forth, and sub-image (n-1) in that order.

25. A display device drive method for use in a display apparatus using a liquid crystal device, comprising the steps of

converting image data to be written in a liquid crystal device into image data having n-number of gray scales;

extracting a pixel of each gray scale level after conversion; and

forming, for the extracted pixels:

> a sub-image 1 which is formed by converting the pixels on the brightest gray scale level 1 and n-th least bright gray scale level n into white and black levels, respectively,
> a sub-image 2 which is formed by converting the ones between the brightest gray scale level 1 and the second brightest gray scale level 2 into a white level followed by combination with the gray scale level n,
> ...so on and so forth..., and
> a sub-image (n-1) which is formed by converting the ones between the brightest gray scale level 1 and (n-1) -th brightest gray scale levels (n-1) into a white level followed by combination with the gray scale level n; wherein
> a writing starts with the sub-image 1, followed by the sub-image 2, so on and so forth, and sub-image (n-1) in that order.

26. A display apparatus, comprising:

> a display unit for carrying out data display;
> a storage unit for storing information relating to an acquisition method for data to be displayed and one relating to a displaying form for an acquired display data; and
> a control unit for controlling acquisition of display data externally, and display of the display data in the display unit, both in accordance with storage content of the storage unit.

27. The display apparatus according to claim 26, wherein said display unit is capable of continuing data display even if the power is shut off.

28. The display apparatus according to claim 26, wherein said control unit carries out an automatic startup of the display apparatus in response to an instruction provided either externally or internally, acquires display data from said external entity and displays the display data, followed by transitioning the display apparatus automatically to a ready state.

29. The display apparatus according to claim 26, further comprising a data acquisition unit for acquiring display data yet to be acquired at a communication restart if the communication with an external entity is interrupted in the middle of acquiring the display data from the external entity.

30. The display apparatus according to claim 26, further comprising a rewriting inhibit unit for inhibiting a rewriting of data displayed by said display unit.

31. The display apparatus according to claim 26, further comprising a nonvolatile memory unit for storing data for one page or more as the data allowing said display unit to display.

| 201 | | | SUBSTRATE |
| 202 | | | TRANSPARENT ELECTRODE |
| 203 | | | ADHESIVE LAYER |
| 204, | 205, | 206 | LIQUID CRYSTAL |
| 207 | | | INCIDENT LIGHT |
| 208 | | | DISPLAY LIGHT |

# F I G. 1

F I G. 2

BRIGHTNESS (%)

LONG PULSE (10S+ms)

SHORT PULSE (1S+ms OR SHORTER)

VOLTAGE (V)

F I G. 3

EP 1 662 469 A1

F I G. 4

FIG. 5

EP 1 662 469 A1

DISPLAY APPARATUS 12

STORAGE UNIT

13

CONTROL UNIT

11

DISPLAY UNIT

10

F I G. 6

WIRELESS TERMINAL

20

WIRELESS DISPLAY PANEL

21

27 ANTENNA

36 ANTENNA

26

25

28 NONCONTACT TRANSMISSION /RECEPTION UNIT

37 TRANSMISSION/RECEPTION UNIT

POWER SUPPLY UNIT

CONTROL UNIT

29 MEMORY UNIT

35 CONTROL UNIT

38 MEMORY UNIT

30 DISPLAY UNIT DRIVE CIRCUIT

39 DISPLAY UNIT DRIVE CIRCUIT

31 DISPLAY UNIT

40 MEMORY CAPABLE DISPLAY UNIT

32 SPEAKER

41 MECHANICAL MOUNTING MECHANISM

23 EXTERNAL WIRELESS TRANSMISSION /RECEPTION UNIT

22 WIRELESS TRANSMISSION/RECEPTION STATION

F I G. 7

EP 1 662 469 A1

EP 1 662 469 A1

**DIGITAL CAMERA**

43

25 POWER SUPPLY UNIT

26 CONTROL UNIT

27 ANTENNA

28 NONCONTACT TRANSMISSION /RECEPTION UNIT

29 MEMORY UNIT

47 REAR DISPLAY PANEL DRIVE CIRCUIT

46 REAR DISPLAY PANEL

45 IMAGE PICKUP DEVICE

44 IMAGE

**WIRELESS DISPLAY PANEL**

21

36 ANTENNA

37 TRANSMISSION/RECEPTION UNIT

35 CONTROL UNIT

38 MEMORY UNIT

39 DISPLAY UNIT DRIVE CIRCUIT

40 MEMORY CAPABLE DISPLAY UNIT

41 MECHANICAL MOUNTING MECHANISM

F I G. 8

21

DISPLAY A

21

DISPLAY A

DISPLAY A

20

F I G. 9

21

DISPLAY B

21

DISPLAY B

DISPLAY A

20

F I G. 1 0

21 21 21

DISPLAY A DISPLAY A

SELECTED
SCREEN A

"READY FOR
TRANSMISSION"

"A DISPLAY
TRANSMISSION
IN PROGRESS"

"END
DISPLAY"

20 20 20

TRANSMIT BUTTON

F I G. 1 1

EP 1 662 469 A1

F I G. 1 2

MOUNTING UNIT
(PLATE SPRING)
50

MAGNET COIL
51

MOBILE
TERMINAL

F I G. 1 3

SPRING 52

SPRING 53

F I G.  1 4

DRIVER 55

CONTROL ID
56

TODAY'S FORECAST
FOR KANTO AREA

MARCH 1: FAIR
MARCH 2: FAIR FOLLOWED
        BY CLOUDY

MOUNTING PART
54

COIL 49

DRIVER
55

COIL 49

CONTROL ID
56

F I G.  1 5

TODAY'S FORECAST FOR KANTO AREA

MARCH 1: FAIR
MARCH 2: FAIR FOLLOWED BY CLOUDY

F I G. 1 6

DISPLAY CARD
21

57
MAGNET/HOOK AND LOOP FASTENER

20
MOBILE TERMINAL

F I G. 1 7

TODAY'S FORECAST
FOR KANTO AREA

MARCH 1: FAIR
MARCH 2: FAIR FOLLOWED
         BY CLOUDY

MAGNET/HOOK AND
LOOP FASTENER
57

MAGNET/HOOK AND LOOP FASTENER
57

F I G.  1 8

FIG. 19

TODAY'S FORECAST
FOR KANTO AREA

MARCH 1: FAIR
MARCH 2: FAIR FOLLOWED
BY CLOUDY

HOOK AND LOOP FASTENER

ARM OR CLOTHING

HOOK AND LOOP
FASTENER
58

PLANAR STATE

FIG. 20

FOCAL CONIC STATE

F I G. 2 1

F I G. 2 2

PLANAR DRIVE

GND

F I G.  2 3

FOCAL CONIC DRIVE

F I G. 2 4

REFLECTANCE RATIO (%)

P⇒FC

FC⇒P

V$_{F0}$    V$_{F100a}$    V$_{F100b}$    V$_{P0}$    V$_{P100}$

VOLTAGE VALUE (V)

F I G. 2 5

60: SUBSTRATE
61: ITO ELECTRODE
62: DISPLAY LAYER
63: LIGHT ABSORPTION LAYER
64: SEALANT

F I G.  2 6

EP 1 662 469 A1

(1), (3), (4), (6), (7) : PLLANAR STATE
(2), (5) : FOCAL CONIC STATE

F I G. 2 7

60: SUBSTRATE
61: ELECTRODE
62: PARTITION WALL

# F I G. 2 8

63, 64: LIQUID CRYSTAL
65: SEALANT

F I G. 2 9

Or  B  Or  B  Or  B

67

66

66 SUB-PIXEL (DOT)

67 PIXEL

# F I G.  3 0

68    Or    B    Or    B    Or    B

68 SUB-DOT

F I G.  3 1

69, 70, 71: LIQUID CRYSTAL
65: SEALANT

F I G. 3 2

67

66

R   G   B   B   G   R   R   G   B

66: SUB-PIXEL (DOT)
67: PIXEL

F I G.  3 3

68

68: SUB-DOT

F I G. 3 4

75

74

74: PRINTED MATERIAL
75: DISPLAY DEVICE (SELECTIVE REFLECTION STATE)

# F I G.  3 5

76: PRINTED MATERIAL (LOWER LAYER OF DISPLAY UNIT)
77: INCIDENT LIGHT (ILLUMINATION)
78: LIGHT REFLECTED FROM PRINTED MATERIAL
79: LIGHT REFLECTED FROM DISPLAY DEVICE
80: DISPLAY LIGHT

F I G.  3 6

F I G.  3 7

F I G. 3 8

FIG. 39

FIG. 40

76

PROBLEM 1

  A : 12345

  B : 5745

  C : 58925

PROBLEM 1

  A : 12345

  B : 5745

  C : 58925

79

SOLUTION A
  DESCRIPTION
  vwxyz

SOLUTION C
  DESCRIPTION
  abcdef

F I G. 4 1

76

LOAN SIMULATION

REQUESTED LOAN

PAYBACK PERIOD

INTEREST %

MONTHLY PAYMENT

79

CUSTOMER NAME

12345

20

2%

789

F I G.  4 2

FIG. 43

F I G. 4 4

FOR DISPLAY

FOR LOGIC

F I G. 4 5

EP 1 662 469 A1

DISPLAY-USE
POWER
SUPPLY INPUT

REFERENCE
VOLTAGE

CMP1

TR1

VR1

TR2

R1

DISPLAY-USE POWER
SUPPLY OUTPUT

F I G. 4 6

F I G. 4 7

CMP3

IMAGE DISPLAY INHIBIT SIGNAL

REFERENCE VOLTAGE

VR3

DISPLAY-USE POWER SOURCE

F I G. 4 8

DISPLAY-USE POWER SOURCE INPUT

VR1

TR1

TR2

R1

OUTPUT

F I G. 4 9

PULSE WIDTH: 10ms

F I G. 5 0

F I G. 5 1

F I G. 5 2

FIG. 53

DISPLAY POWER SOURCE INPUT

TEMPERATURE SENSOR OUTPUT

AMP1

R1

R2

R3

R4

TR1 — PLANAR VOLTAGE OUTPUT

TR2 — FOCAL CONIC VOLTAGE OUTPUT

WIRELESS TERMINAL EQUIPMENT
(POWER/DATA TRANSMISSION) 20

POWER/
DATA RECEIVING UNIT 81

SIGNAL CONTROL
CIRCUIT 82

SIGNAL CONVERSION
CIRCUIT 83

OTHER SIGNAL

DATA

Lp

FR

Eio/DATA

OTHER SIGNAL

COMMON AND SEGMENT
MODE SWITCHING
SIGNAL

SIGNAL ELECTRODE SIDE

SCANNING ELECTRODE SIDE

MATRIX TYPE LC
(LIQUID CRYSTAL) DEVICE 84

F I G. 5 4

FIG. 55

FIG. 56

FIRST        SECOND
LINE          LINE        . . . . . . . . .

POLARITY OF CONVENTIONAL
DRIVE SIGNAL

POLARITY OF DRIVE SIGNAL
PER THE PRESENT INVENTION

T

T

F I G.  5 7

EP 1 662 469 A1

F I G. 5 8

EP 1 662 469 A1

CONTRAST

max

—————— THE PRESENT INVENTION

20          10

SPEED
(ms/line)

F I G.  5 9

F I G. 60

SIMPLE ENTIRE SCREEN RESET

SAME PATTERN WRITING IN A LUMP

TOMORROW'S FORECAST:

FAIR AFTER CLOUDY

APRIL 1

REMAINING AREA
SEQUENTIAL WRITING

F I G. 6 1

EP 1 662 469 A1

ORIGINAL IMAGE
(8bit)

BINARY SCREENING
(ERROR DIFFUSION
METHOD, ETC.) — S1

REFERENCE FOR
COMPARISON LOOP — S2

LOOP 1: THE NUMBER OF
SCANNING ELECTRODES

COMPARISON LOOP

LOOP 2: THE NUMBER OF
SCANNING ELECTRODES — S3

PATTERN COMPARISON — S4

THE SAME PATTERN
DETECTED — S5

NO

YES

STORE COORDINATE
(ADDRESS) FOR
THE SAME PATTERN — S6

END

THE SAME PATTERN
ADDRESS STORAGE
MEMORY

86

START

RESET PROCESSING — S10

LOOP 2: THE NUMBER OF THE
SAME PATTERNS — S11

SIMULTANEOUS SELECTION
(SCANNING SIDE) — S12

WRITE IN A LUMP — S13

LOOP 2: THE NUMBER OF LINES
YET TO BE WRITTEN — S14

PASSIVE WRITING IN THE
REMAINING PART — S15

DISPLAY
COMPLETE

F I G.  6 2

EP 1 662 469 A1

89

PRE-PROCESSED IMAGE (EXTRACTING 0 LEVEL PARTS)

INITIAL SCAN

F I G. 6 3

F I G. 64

AUTOMATIC DISPLAY APPARATUS

90

POWER SOURCE

91

INTERNET CONNECTION UNIT

92

DISPLAY UNIT DRIVE CIRCUIT

39

MEMORY CAPABLE DISPLAY UNIT

40

CONTROL UNIT

35

BATTERY

93

TIMER

94

NONVOLATILE MEMORY

95

F I G. 6 5

F I G. 6 6

EP 1 662 469 A1

**AUTOMATIC DISPLAY APPARATUS** 90

BATTERY 93
TIMER 94
NONVOLATILE MEMORY 95

CONTROL UNIT 35

ANTENNA 36
WIRELESS INTERFACE (WIRELESS LAN, BLUETOOTH) 100
DISPLAY UNIT DRIVE CIRCUIT 39
MEMORY CAPABLE DISPLAY UNIT 40

**COMMUNICATION TERMINAL (PC/PDA)** 97

ANTENNA 27
WIRELESS INTERFACE (WIRELESS LAN, BLUETOOTH) 101
MEMORY UNIT 29
DISPLAY UNIT 31
SPEAKER 32
CONTROL UNIT 26
POWER SOURCE UNIT 25

F I G. 6 7

F I G. 6 8

EP 1 662 469 A1

| ADDRESS | CONTENTS | EXAMPLE OF CONTENTS |
|---|---|---|
| 0–255 | URL OR FILE PATH NAME | http://www. x x x x x . com |
| 256–257 | NUMBER OF DISPLAYABLE PIXELS: HORIZONTAL | 640 |
| 258–259 | NUMBER OF DISPLAYABLE PIXELS: VERTICAL | 480 |
| 260 | PORTRAIT OR LANDSCAPE | 0 (VERTICAL) |
| 261 | SIZE FOR SIZE OR ENLARGEMENT OR REDUCTION | 0 (SIZE FOR SIZE) |
|  |  |  |
|  |  |  |
|  |  |  |
|  |  |  |
|  |  |  |
|  |  |  |
|  |  |  |
|  |  |  |
|  |  |  |

# F I G.  6 9

EP 1 662 469 A1

FORECAST FOR TOMORROW:
FAIR AFTER CLOUDY

2003.4.1

F I G. 7 0

EP 1 662 469 A1

FIG. 71

MOBILE PHONE

RECEIVER COIL

SHEET EQUIPPED DRIVER

WIRELESS DISPLAY SHEET

WIRELESS DISPLAY CARD

PDA

DIGITAL CAMERA

F I G. 7 2

EP 1 662 469 A1

WIRELESS
(BATTERY NOT INCLUDED)

CONTACT TYPE OR WIRELESS
(BATERY NOT INCLUDED)

F I G.  7 3

F I G. 7 4

BLUETHOOTH OR WIRELESS LAN

ADVERTISEMENT MEDIA (IDENTIFICATION BY IC)

F I G. 7 5

## INTERNATIONAL SEARCH REPORT

| International application No. |
|---|
| PCT/JP03/11314 |

| A. CLASSIFICATION OF SUBJECT MATTER |
|---|
| Int.Cl⁷ G09G3/36, 3/20, G02F1/133 |

According to International Patent Classification (IPC) or to both national classification and IPC

| B. FIELDS SEARCHED |
|---|

Minimum documentation searched (classification system followed by classification symbols)
Int.Cl⁷ G09G3/20-3/38, G02F1/133

Documentation searched other than minimum documentation to the extent that such documents are included in the fields searched

| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2003-244503 A (Sharp Corp.), 29 August, 2003 (29.08.03), Full text; all drawings (Family: none) | 1 |
| X | JP 2002-244583 A (Mitsubishi Heavy Industries, Ltd.), 30 August, 2002 (30.08.02), Full text; all drawings (Family: none) | 1-2 |
| X<br>Y | JP 2003-216111 A (Sharp Corp.), 30 July, 2003 (30.07.03), Full text; all drawings (Family: none) | 1-2,6<br>1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 December, 2003 (12.12.03) | 13 January, 2004 (13.01.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/11314 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-335172 A (Matsushita Electric Industrial Co., Ltd.), 22 November, 2002 (22.11.02), Full text; all drawings (Family: none) | 1-6 |
| Y | JP 2000-113137 A (Ricoh Co., Ltd.), 21 April, 2000 (21.04.00), Full text; all drawings (Family: none) | 1-6 |
| Y | JP 2-20396 A (Matsushita Electric Industrial Co., Ltd.), 23 January, 1990 (23.01.90), Fig. 1 (Family: none) | 3 |
| Y | JP 2001-343915 A (Heiwa Creation Co.), 14 December, 2001 (14.12.01), Full text; all drawings (Family: none) | 4-5 |
| Y | JP 2001-298517 A (Ryutaro KISHIMOTO), 26 October, 2001 (26.10.01), Full text; all drawings (Family: none) | 4-5 |
| A | JP 11-213111 A (NTT Data Corp.), 06 August, 1999 (06.08.99), Full text; all drawings (Family: none) | 1 |

Form PCT/ISA/210 (continuation of second sheet) (July 1998)

## INTERNATIONAL SEARCH REPORT

International application No.

PCT/JP03/11314

**Box I    Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

    The technical feature of the inventions of claims 1-6 relates to a display data holding device including a display device for displaying data received by the near-distance communication means and communication means for transmitting the display data to the display device.
    The technical feature of the inventions of claims 7-10 relates to a partition wall having a structure not to bring into contact a plurality of colors of liquid crystal to one another.

(Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)

| INTERNATIONAL SEARCH REPORT | International application No. |
|---|---|
| | PCT/JP03/11314 |

Continuation of Box No. II of continuation of first sheet(1)

The technical feature of the inventions of claims 11-13 relates to a first display element having a transparent mode and a reflection mode and capable of switching between the display contents and a second display element of reflection type.

The technical feature of the inventions of claims 14-15 relates to varying the wave height value of the two types of drive voltage waveform according to the temperature.

The technical feature of the inventions of claims 16-17 relates to rectification of high-frequency voltage induced in a coil and giving it to the power source means for display and the power source means for logic.

The technical feature of the invention of claim 18 relates to limiting the display function of the display section according to the power supply amount from outside.

The technical feature of the invention of claim 19 relates to limiting the output current of the display power source in accordance with voltage lowering of the logic power source.

The technical feature of the inventions of claims 20-21 relates to driving the reset line, halt line, and write line while shifting them.

The technical feature of the inventions of claims 22-23 relates to simultaneously selecting and writing at once a plurality of lines having the same data patterns to be displayed.

The technical feature of the inventions of claims 24-25 relates to successive writing of a plurality of sub-images obtained by converting the image data into n-gradation image data.

The technical feature of the inventions of claims 26-31 relates to data display according to information on the method for acquiring data to be displayed and the information on the method for displaying the display data acquired.

Accordingly, there is no technical feature common to all the aforementioned inventions.

Form PCT/ISA/210 (extra sheet) (July 1998)